(19)

Europäisches Patentamt
European Patent Office
Office européen des brevets

(11)  **EP 4 366 221 A1**

(12)  # EUROPEAN PATENT APPLICATION

(43) Date of publication:
**08.05.2024 Bulletin 2024/19**

(21) Application number: **23207735.4**

(22) Date of filing: **03.11.2023**

(51) International Patent Classification (IPC):
**H04L 5/00** (2006.01)      **H04L 1/08** (2006.01)
**H04L 1/1829** (2023.01)

(52) Cooperative Patent Classification (CPC):
**H04L 5/0044; H04L 1/08; H04L 1/1854;
H04L 5/0053; H04L 5/0091**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 KR 20220146022**

(71) Applicant: **Samsung Electronics Co., Ltd.**
**Suwon-si, Gyeonggi-do 16677 (KR)**

(72) Inventors:
• **Jang, Youngrok**
  **16677 Suwon-si, Gyeonggi-do (KR)**
• **Jin, Seungri**
  **16677 Suwon-si, Gyeonggi-do (KR)**
• **Abebe, Ameha Tsegaye**
  **16677 Suwon-si, Gyeonggi-do (KR)**
• **Ji, Hyoungju**
  **16677 Suwon-si, Gyeonggi-do (KR)**

(74) Representative: **Gulde & Partner**
**Patent- und Rechtsanwaltskanzlei mbB**
**Wallstraße 58/59**
**10179 Berlin (DE)**

(54)  **METHOD AND APPARATUS OF REPETITION SCHEME FOR DOWNLINK DATA CHANNEL IN COMMUNICATION SYSTEMS**

(57)    The present disclosure relates to a 5G or 6G communication system for supporting a higher data transmission rate. The present disclosure relates generally to operations of a terminal and a base station in a wireless communication system. Specifically, the present disclosure relates to a method and apparatus for repetitive transmission of a downlink data channel in a wireless communication system.

EP 4 366 221 A1

## Description

### BACKGROUND

#### 1. Field

The present disclosure relates generally to operations of a terminal and a base station in a wireless communication system. Specifically, the present disclosure relates to a method and apparatus for repetitive transmission of a downlink data channel in a wireless communication system.

#### 2. Description of Related Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (Bandwidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is LTE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on LTE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of LTE operation capability by utilizing ultra-high-performance communication and computing resources.

**SUMMARY**

Disclosed embodiments are intended to provide an apparatus and method that can effectively provide services in a mobile communication system.

In one embodiment, a method performed by a user equipment (LTE) in a communication system is provided. The method comprises receiving, from a base station via higher layer signaling, configuration information on a time domain resource allocation for a physical downlink shared channel (PDSCH), wherein the configuration information includes a first repetition number for the PDSCH or a second repetition number for the PDSCH; receiving, from the base station, downlink control information (DCI) format scheduling the PDSCH; and receiving, from the base station, the PDSCH based on the first repetition number for the PDSCH or the second repetition number for the PDSCH according to the DCI format, wherein, in case that the configuration information is in a first list of time domain configurations associated with a first DCI format, the configuration information includes a first repetition number for the PDSCH, and wherein, in case that the configuration information is in a second list of time domain configurations associated with a second DCI format, the configuration information includes a second repetition number for the PDSCH.

In another embodiment, a method performed by a base station in a communication system is provided. The method comprises transmitting, to a user equipment (UE) via higher layer signaling, configuration information on a time domain resource allocation for a physical downlink shared channel (PDSCH), wherein the configuration information includes a first repetition number for the PDSCH or a second repetition number for the PDSCH; transmitting, to the LTE, downlink control information (DCI) format scheduling the PDSCH; and transmitting, to the UE, the PDSCH based on the first repetition number for the PDSCH or the second repetition number for the PDSCH according to the DCI format, wherein, in case that the configuration information is in a first list of time domain configurations associated with a first DCI format, the configuration information includes a first repetition number for the PDSCH, and wherein, in case that the configuration information is in a second list of time domain configurations associated with a second DCI format, the configuration information includes a second repetition number for the PDSCH.

In yet another embodiment, a user equipment (LTE) in a communication system is provided. The UE comprises a transceiver; and at least one processor configured to: receive, from a base station via higher layer signaling, configuration information on a time domain resource allocation for a physical downlink shared channel (PDSCH), wherein the configuration information includes a first repetition number for the PDSCH or a second repetition number for the PDSCH; receive, from the base station, downlink control information (DCI) format scheduling the PDSCH; and receive, from the base station, the PDSCH based on the first repetition number for the PDSCH or the second repetition number for the PDSCH according to the DCI format, wherein, in case that the configuration information is in a first list of time domain configurations associated with a first DCI format, the configuration information includes a first repetition number for the PDSCH, and wherein, in case that the configuration information is in a second list of time domain configurations associated with a second DCI format, the configuration information includes a second repetition number for the PDSCH.

In yet another embodiment, a base station in a communication system is provided. The base station comprises a transceiver; and at least one processor configured to: transmit, to a user equipment (LTE) via higher layer signaling, configuration information on a time domain resource allocation for a physical downlink shared channel (PDSCH), wherein the configuration information includes a first repetition number for the PDSCH or a second repetition number for the PDSCH; transmit, to the LTE, downlink control information (DCI) format scheduling the PDSCH; and transmit, to the LTE, the PDSCH based on the first repetition number for the PDSCH or the second repetition number for the PDSCH according to the DCI format, wherein, in case that the configuration information is in a first list of time domain configurations associated with a first DCI format, the configuration information includes a first repetition number for the PDSCH, and wherein, in case that the configuration information is in a second list of time domain configurations associated with a second DCI format, the configuration information includes a second repetition number for the PDSCH.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a basic structure of a time-frequency domain in a wireless communication system according to an embodiment of the present disclosure.
FIG. 2 illustrates structures of a frame, a subframe, and a slot in a wireless communication system according to an embodiment of the present disclosure.
FIG. 3 illustrates an example of the configuration of a bandwidth part (BWP) in a wireless communication system according to an embodiment of the present disclosure.
FIG. 4 illustrates an example of the configuration of a control resource set of a downlink control channel in a wireless communication system according to an embodiment of the present disclosure.
FIG. 5A illustrates a structure of a downlink control channel in a wireless communication system according to an embodiment of the present disclosure.
FIG. 5B illustrates, through a span, a case where a LTE may have a plurality of PDCCH monitoring occasions within a slot in a wireless communication system according to an embodiment of the present disclosure.
FIG. 6 illustrates a discontinuous reception (DRX) operation in a wireless communication system according to an embodiment of the present disclosure.
FIG. 7 illustrates an example of base station beam allocation according to TCI state configuration in a wireless communication system according to an embodiment of the present disclosure.
FIG. 8 illustrates an example of a TCI state allocation method for a PDCCH in a wireless communication system according to an embodiment of the present disclosure.
FIG. 9 illustrates a TCI indication MAC CE signaling structure for a PDCCH DMRS in a wireless communication system according to an embodiment of the present disclosure.
FIG. 10 illustrates an example of control resource set and search space beam configuration in a wireless communication system according to an embodiment of the present disclosure.
FIG. 11 illustrates a method in which a base station and a LTE perform data transmission/reception by considering a downlink data channel and a rate matching resource according to an embodiment of the present disclosure.
FIG. 12 illustrates a method in which a LTE selects a receivable control resource set by considering a priority when receiving a downlink control channel in a wireless communication system according to an embodiment of the present disclosure.
FIG. 13 illustrates an example of frequency-domain resource allocation of a PDSCH in a wireless communication system according to an embodiment of the present disclosure.
FIG. 14 illustrates an example of time-domain resource allocation of a PDSCH in a wireless communication system according to an embodiment of the present disclosure.
FIG. 15 illustrates an example of time-domain resource allocation according to subcarrier spacings of a data channel and a control channel in a wireless communication system according to an embodiment of the present disclosure.
FIGS. 16A and 16B illustrate a procedure for beam configuration and activation of a PDSCH in a wireless communication system according to an embodiment of the present disclosure.

FIG. 17 illustrates an example of PUSCH repetitive transmission type B in a wireless communication system according to an embodiment of the present disclosure.

FIG. 18 illustrates radio protocol structures of a base station and a LTE in a single cell, carrier aggregation, and dual connectivity situation in a wireless communication system according to an embodiment of the present disclosure.

FIG. 19 illustrates an example of an antenna port configuration and resource allocation for cooperative communication in a wireless communication system according to an embodiment of the present disclosure.

FIG. 20 illustrates an example of downlink control information (DCI) configuration for cooperative communication in a wireless communication system according to an embodiment of the present disclosure.

FIG. 21 illustrates an enhanced PDSCH TCI state activation/deactivation MAC-CE structure according to an embodiment of the present disclosure.

FIG. 22A illustrates the operation of a UE according to an embodiment of the present disclosure.

FIG. 22B illustrates the operation of a base station according to an embodiment of the present disclosure.

FIG. 23 illustrates the structure of a LTE in a wireless communication system according to an embodiment of the present disclosure.

FIG. 24 illustrates the structure of a base station in a wireless communication system according to an embodiment of the present disclosure.

## DETAILED DESCRIPTION

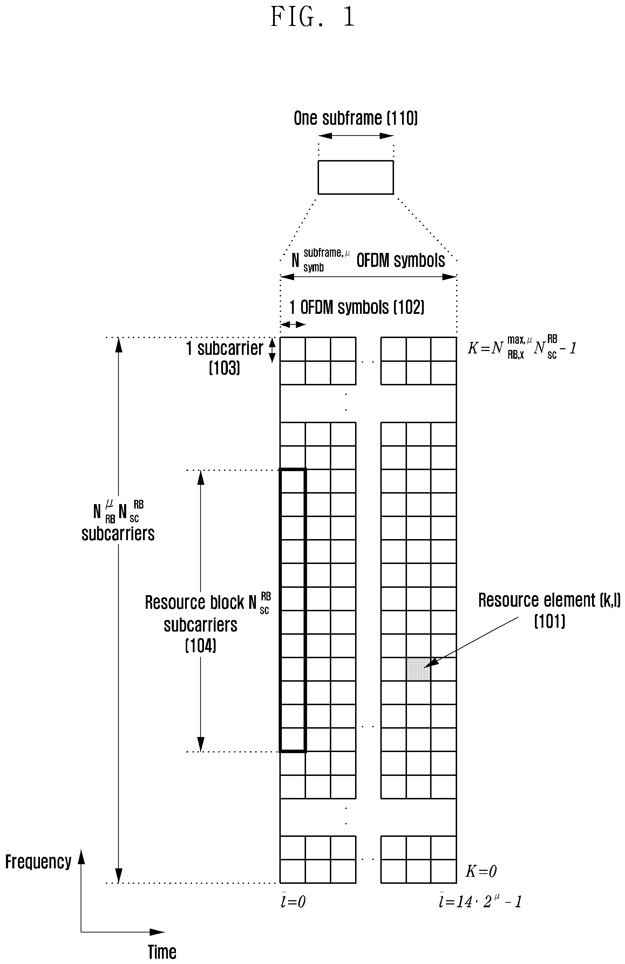

FIGS. 1 through 24, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, embodiments of the present disclosure will be described in detail with reference to the accompanying drawings.

In describing embodiments of the present disclosure, descriptions of technical contents well-known in the art and not directly related to the present disclosure will be omitted. This is to more clearly convey the subject matter of the present disclosure without obscuring it by omitting unnecessary description.

For the same reason, some elements are exaggerated, omitted, or schematically illustrated in the accompanying drawings. In addition, the depicted size of each element does not completely reflect the actual size. In the drawings, the same or corresponding elements are assigned the same reference numerals.

The advantages and features of the present disclosure and ways to achieve them will be apparent by making reference to embodiments as described below in detail in conjunction with the accompanying drawings. However, the present disclosure is not limited to the embodiments set forth below, but may be implemented in various different forms. The following embodiments are provided to inform those skilled in the art of the scope of the present disclosure, and the present disclosure is defined only by the scope of the appended claims. Throughout the description herein, the same or like reference numerals designate the same or like elements. Further, in describing the present disclosure, a detailed description of known functions or configurations incorporated herein will be omitted when it is determined that the description may make the subject matter of the present disclosure unnecessarily unclear. The terms which will be described below are terms defined in consideration of the functions in the present disclosure, and may be different according to users, intentions of the users, or customs. Therefore, the definitions of the terms should be made based on the entire description herein.

In the following description, a base station is an entity that allocates resources to terminals, and may be at least one of a gNode B, an eNode B, a Node B, a base station (BS), a wireless access unit, a BS controller, and a node on a network. A terminal may include a UE, a mobile station (MS), a cellular phone, a smartphone, a computer, or a multimedia system capable of performing communication functions. A downlink (DL) refers to a radio link via which a base station transmits a signal to a terminal, and an uplink (UL) refers to a radio link via which a terminal transmits a signal to a base station. Further, in the following description, LTE or LTE-A systems may be described by way of example, but the embodiments of the present disclosure may also be applied to other communication systems having similar technical backgrounds or channel types. Examples of such communication systems may include 5th generation mobile communication technologies (5G, new radio, and NR) developed beyond LTE-A, and in the following description, the 5G covers the existing LTE, LTE-A, or other similar services. In addition, based on determinations by those skilled in the art, the embodiments of the present disclosure may also be applied to other communication systems through some modifications without significantly departing from the scope of the present disclosure.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the term "unit" refers to a software element or a hardware element, such as a field programmable gate array (FPGA) or an application specific integrated circuit (ASIC), which performs a predetermined function. However, the term "unit" does not always have a meaning limited to software or hardware. A "unit" may be constructed either to be stored in an addressable storage medium or to execute one or more processors. Therefore, a "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and variables. The functions provided by elements and units may be combined into those of a smaller number of elements and units or separated into those of a larger number of elements and units. In addition, the elements and units may be implemented to operate one or more central processing units (CPUs) within a device or a secure multimedia card. Also, in embodiments, a "unit" may include one or more processors.

Wireless communication systems have expanded beyond the original role of providing a voice-oriented service and have evolved into wideband wireless communication systems that provide a high-speed and high-quality packet data service according to, for example, communication standards such as high-speed packet access (HSPA), long-term evolution (LTE or evolved universal terrestrial radio access (E-UTRA)), and LTE-Advanced (LTE-A) of 3GPP, high-rate packet data (HRPD) and a ultra-mobile broadband (UMB) of 3GPP2, and 802.16e of IEEE. In addition, 5G or NR communication standards are being established for a 5G wireless communication system.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (LTE) or a mobile station (MS) transmits data or control signals to a base station (BS or eNode B), and the downlink indicates a radio link through which the base station transmits data or control signals to the LTE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a communication system subsequent to LTE, should freely reflect various requirements of users, service providers, and the like, services satisfying various requirements should be supported. The services considered in the 5G communication system include enhanced Mobile Broadband (eMBB) communication, massive Machine Type Communication (mMTC), Ultra-Reliability Low-Latency Communication (URLLC), and the like.

eMBB aims at providing a data rate higher than that supported by existing LTE, LTE-A, or LTE-Pro. For example, in the 5G communication system, eMBB should provide a peak data rate of 20 Gbps in the downlink and a peak data rate of 10 Gbps in the uplink for a single base station. Furthermore, the 5G communication system should provide an increased user-perceived data rate to the LTE, as well as the maximum data rate. In order to satisfy such requirements, transmission/reception technologies including a further enhanced Multi-Input Multi-Output (MIMO) transmission technique are required to be improved. In addition, the data rate used for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of things (IoT) in the 5G communication system. mMTC has requirements, such as support of connection of a large number of UEs in a cell, enhancement coverage of UEs, improved battery time, a reduction in the cost of a LTE, and the like, in order to effectively provide the IoT. Since the IoT provides communication functions while being provided to various sensors and various devices, it should support a large number of LTEs (e.g., 1,000,000 LTEs/km2) in a cell. In addition, the LTEs supporting mMTC may require wider coverage than those of other services provided by the 5G communication system because the LTEs are likely to be located in a shadow area, such as a basement of a building, which is not covered by the cell due to the nature of the service. The UE supporting mMTC should be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC should provide communication with ultra-low latency and ultra-high reliability. For example, a service supporting URLLC should satisfy an air interface latency of less than 0.5 ms, and also requires a packet error rate of 10-5 or less. Therefore, for the services supporting URLLC, a 5G system should provide a transmit time interval (TTI) shorter than those of other services, and also may require a design for assigning a large number of resources in a frequency band in order to secure reliability of a communication link.

Three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR Time-Frequency Resource]

Hereinafter, the frame structure of a 5G system will be described in more detail with reference to the drawings.

FIG. 1 illustrates a basic structure of a time-frequency domain in a wireless communication system according to an embodiment.

Referring to FIG. 1, the horizontal axis represents a time domain, and the vertical axis represents a frequency domain. A basic unit of resources in the time-frequency domain is a resource element (RE) 101. The resource element 101 may be defined as one OFDM symbol 102 in the time domain and one subcarrier 103 in the frequency domain. In the frequency domain,

$$N_{sc}^{RB}$$

(for example, 12) consecutive REs may configure one resource block (RB) 104.

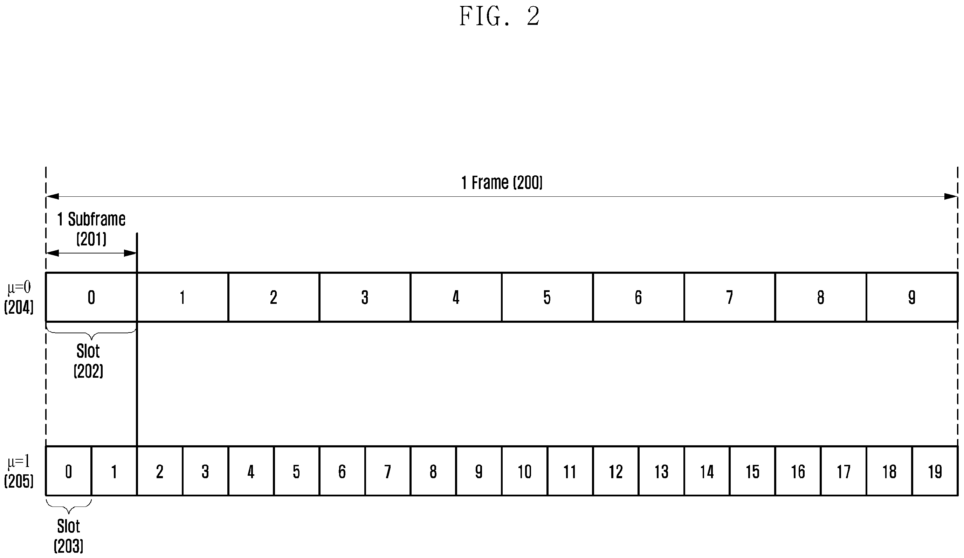

FIG. 2 illustrates structures of a frame, a subframe, and a slot in a wireless communication system according to an embodiment of the present disclosure.

Referring to FIG. 2, an example of structures of a frame 200, a subframe 201, and a slot 202 is illustrated. One frame 200 may be 10 ms. One subframe 201 may be 1 ms, and thus the one frame 200 may be configured by a total of ten subframes 201. One slot 202 or 203 may be fourteen OFDM symbols (i.e., the number of symbols for one slot (

$$N_{symb}^{slot}=14$$

)). One subframe 201 may include one or multiple slots 202 and 203, and the number of slots 202 and 203 per one subframe 201 may differ according to configuration value p 204 or 205 for a subcarrier spacing. In the example of FIG. 2, a case in which the subcarrier spacing configuration value is $\mu$=0 (204) and $\mu$=1 (205) is illustrated. If $\mu$=0 (204), one subframe 201 may include one slot 202, and if $\mu$=1 (205), the one subframe 201 may include two slots 203. That is, the number of slots per one subframe ( $N_{slot}^{subframe,\mu}$ ) may differ according to a subcarrier spacing configuration value p, and accordingly, the number of slots per 1 frame ( $N_{slot}^{frame,\mu}$ ) may differ. According to each subcarrier spacing configuration $\mu$, $N_{slot}^{subframe,\mu}$ and $N_{slot}^{frame,\mu}$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |

(continued)

| $\mu$ | $N_{symb}^{slot}$ | $N_{slot}^{frame,\mu}$ | $N_{slot}^{subframe,\mu}$ |
|---|---|---|---|
| 2 | 14 | 40 | 4 |
| 3 | 14 | 80 | 8 |
| 4 | 14 | 160 | 16 |
| 5 | 14 | 320 | 32 |

[Bandwidth Part (BWP)]

Next, the BWP configuration in a 5G communication system will be described in detail with reference to the drawings.

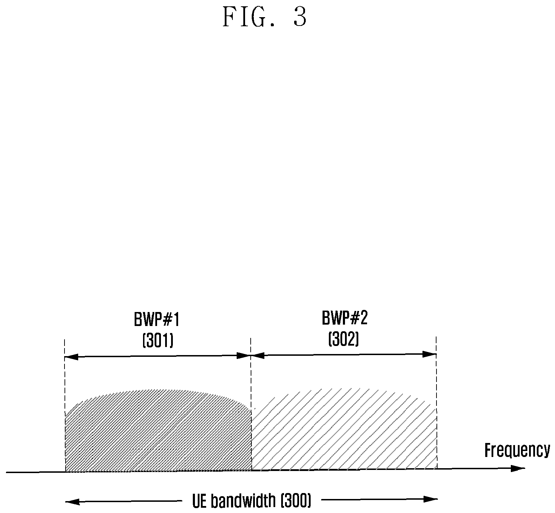

FIG. 3 illustrates an example of the configuration of BWP in a wireless communication system according to an embodiment of the present disclosure.

Referring to FIG. 3, an example is provided in which a LTE bandwidth 300 is configured by two BWPs, that is, BWP #1 301 and BWP #2 302. The base station may configure one or multiple BWPs for the UE, and may configure pieces of information as shown in Table 2 below for each BWP.

[Table 2]

BWP ::=　　　　　　　　　SEQUENCE {

　bwp-Id　　　　　　　　　BWP-Id,

　　(bandwidth part identifier)

　locationAndBandwidth　　　INTEGER (1..65536),

　　(bandwidth part location)

　subcarrierSpacing　　　　　ENUMERATED {n0, n1, n2, n3, n4, n5},

　　(subcarrier spacing)

　cyclicPrefix　　　　　　　ENUMERATED { extended }

　　(cyclic prefix)

}

An embodiment of the present disclosure is not limited to the above example, and in addition to the configuration information, various parameters related to a BWP may be configured in the UE and some pieces of information may be omitted. The pieces of information may be transmitted by the base station to the LTE via higher layer signaling, for example, radio resource control (RRC) signaling. At least one BWP among the configured one or multiple BWPs may be activated. Whether to activate the configured BWP may be semi-statically transmitted from the base station to the LTE via RRC signaling or may be dynamically transmitted through downlink control information (DCI).

According some embodiments, the LTE before RRC connection may be configured with an initial BWP for initial access from a base station through a master information block (MIB). More specifically, the LTE may receive configuration information about a search apace and a control resource set (CORESET) through which the PDCCH for reception of system information used for initial access (which may correspond to remaining system information (RMSI) or system information block 1 (SIB 1)) may be transmitted through the MIB in an initial access operation. The CORESET and search space, which are configured through the MIB, may be regarded as identity (ID) 0, respectively. The base station may notify the UE of configuration information, such as frequency allocation information, time allocation information, and numerology for the control resource set #0 through the MIB. In addition, the base station may notify the LTE of

8

configuration information regarding the monitoring periodicity and occasion for the control resource set #0, that is, configuration information regarding the search space #0, through the MIB. The LTE may regard the frequency domain configured as the control resource set #0, obtained from the MIB, as an initial BWP for initial access. Here, the ID of the initial BWP may be regarded as zero.

The configuration of the BWP supported by 5G may be used for various purposes.

A case in which a bandwidth supported by the UE is less than a system bandwidth may be supported through the BWP configuration. For example, the base station configures, in the LTE, a frequency location (configuration information 2) of the BWP to enable the LTE to transmit or receive data at a specific frequency location within the system bandwidth.

Further, according to some embodiments, the base station may configure multiple BWPs in the UE for the purpose of supporting different numerologies. For example, in order to support both data transmission/reception to/from a predetermined UE by using a subcarrier spacing of 15 kHz and a subcarrier spacing of 30 kHz, two BWPs may be configured to use a subcarrier spacing of 15 kHz and a subcarrier spacing of 30 kHz, respectively. Different BWPs may be frequency division multiplexed, and when attempting to transmit or receive data at a specific subcarrier spacing, the BWP configured with the corresponding subcarrier spacing may be activated.

In addition, according to some embodiments, the base station may configure, in the LTE, the BWPs having bandwidths of different sizes for the purpose of reducing power consumption of the LTE. For example, when the LTE supports a very large bandwidth, for example, a bandwidth of 100 MHz, and always transmits or receives data at the corresponding bandwidth, the transmission or reception may cause very high power consumption in the LTE. In particular, when the UE performs monitoring on an unnecessary downlink control channels of a large bandwidth of 100 MHz even when there is no traffic, the monitoring may be very inefficient in terms of power consumption. Therefore, in order to reduce power consumption of the LTE, the base station may configure, for the LTE, a BWP of a relatively small bandwidth, for example, a BWP of 20 MHz. In a situation without traffic, the UE may perform a monitoring operation on a BWP of 20 MHz. When data to be transmitted or received has occurred, the UE may transmit or receive data in a BWP of 100 MHz according to an indication of the base station.

In a method of configuring the BWP, the LTEs before the RRC connection may receive configuration information about the initial bandwidth part through the MIB in the initial connection operation. More specifically, the UE may be configured with a CORESET for a downlink control channel through which DCI for scheduling a SIB may be transmitted from a MIB of a physical broadcast channel (PBCH). The bandwidth of the control resource set configured through the MIB may be regarded as the initial BWP. The UE may receive, through the configured initial BWP, a PDSCH through which the SIB is transmitted. The initial BWP may be used for other system information (OSI), paging, and random access as well as the reception of the SIB.

[Bandwidth Part (BWP) Switch]

When one or more BWPs have been configured for a UE, a base station may indicate the LTE to change (or switching, transition) the BWP by using a bandwidth part indicator field in DCI. As an example, in FIG. 3, when the currently activated BWP of the UE is BWP #1 301, the base station may indicate BWP #2 302 to the LTE by using the BWP indicator in DCI, and the LTE may perform a BWP switch to the BWP #2 302 indicated by the BWP indicator in the received DCI.

As described above, since the DCI-based BWP change may be indicated by the DCI scheduling the PDSCH or PUSCH, when receiving a request to switch the BWP, the UE should smoothly receive or transmit the PDSCH or PUSCH, which is scheduled by the DCI, without difficulty in the switched BWP. To this end, the requirements for a delay time ($T_{BWP}$) used when switching the BWP, and is shown in Table 3 below.

[Table 3]

| $\mu$ | NR Slot length (ms) | BWP switch delay $T_{BWP}$ (slots) | |
| | | Type 1[Note 1] | Type 2[Note 1] |
|---|---|---|---|
| 0 | 1 | 1 | 3 |
| 1 | 0.5 | 2 | 5 |
| 2 | 0.25 | 3 | 9 |
| 3 | 0.125 | 6 | 18 |
| Note 1: Depends on LTE capability. | | | |

(continued)

| $\mu$ | NR Slot length (ms) | BWP switch delay $T_{BWP}$ (slots) | |
| --- | --- | --- | --- |
| | | Type 1[Note 1] | Type 2[Note 1] |
| Note 2: If the BWP switch involves changing of SCS, the BWP switch delay is determined by the larger one between the SCS before BWP switch and the SCS after BWP switch. | | | |

The requirements for the BWP switch delay time support type 1 or type 2 depending on LTE capability. The UE may report a BWP delay time type that is supportable to the base station.

When the LTE receives the DCI including the BWP switch indicator in slot n according to the requirements for the BWP switch delay time, the LTE may complete a switch to a new BWP indicated by the BWP switch indicator at a time not later than slot $n+T_{BWP}$, and may perform transmission and reception with respect to a data channel scheduled by the corresponding DCI in the switched new BWP. When the base station intends to schedule the data channel to the new BWP, the base station may determine a time domain resource assignment for the data channel by considering the BWP switch delay time ($T_{BWP}$) of the LTE. That is, when the base station schedules the data channel to the new BWP, the base station may schedule the corresponding data channel after the BWP switch delay time according to the method for determining time domain resource assignment for the data channel. Therefore, the UE may not expect the DCI indicating the BWP switch to indicate a slot offset (K0 or K2) value less than the $T_{BWP}$.

If the UE receives the DCI (for example, DCI format 1_1 or 0_1) indicating the BWP switch, the UE may not perform transmission or reception during a time interval from a third symbol of the slot in which the PDCCH including the DCI is received to a start time of the slot indicated by the slot offset (K0 or K2) value indicated by the time domain resource allocation indicator field in the DCI. For example, if the UE has received the DCI indicating the BWP switch in slot n and the slot offset value indicated by the DCI is K, the UE may not perform transmission or reception from the third symbol of the slot n to the symbol prior to slot n+K (i.e., the last symbol of slot n+K-1).

[SS/PBCH Block]

Next, a synchronization signal (SS)/PBCH block in 5G will be described.

The SS/PBCH block may refer to a physical layer channel block including a primary SS (PSS), a secondary SS (SSS), and a PBCH. Specifically, the SS/PBCH block is as follows:

PSS: It is a signal serving as a reference for downlink time/frequency synchronization and provides some information of a cell ID.

SSS: It is a signal serving as a reference for downlink time/frequency synchronization, and provides the remaining cell ID information that is not provided by the PSS. In addition, the SSS may serve as a reference signal for demodulation of the PBCH.

PBCH: It provides essential system information used for transmission or reception of a data channel and a control channel of a LTE. The essential system information may include search space related control information indicating radio resource mapping information of a control channel, scheduling control information for a separate data channel for transmission of system information, and the like.

SS/PBCH block: It includes a combination of a PSS, an SSS, and a PBCH. One or multiple SS/PBCH blocks may be transmitted within 5 ms, and each of the transmitted SS/PBCH blocks may be distinguished by indices.

The UE may detect the PSS and the SSS in the initial access operation, and may decode the PBCH. The UE may obtain the MIB from the PBCH, and may be configured with the CORESET #0 (which may correspond to the control resource set having the CORESET index of 0) therefrom. The LTE may monitor the control resource set #0 under the assumption that a demodulation reference signal (DMRS) transmitted in the selected SS/PBCH block and the control resource set #0 is quasi-co-located (QCLed). The UE may receive system information based on downlink control information transmitted from the control resource set #0. The UE may obtain, from the received system information, configuration information related to a RACH used for initial access. The UE may transmit a physical RACH (PRACH) to the base station by considering the selected SS/PBCH index, and the base station having received the PRACH may obtain information about an SS/PBCH block index selected by the LTE. The base station may know which block is selected among the SS/PBCH blocks by the LTE, and may know that the control resource set #0 associated therewith is monitored.

[Discontinuous Reception (DRX)]

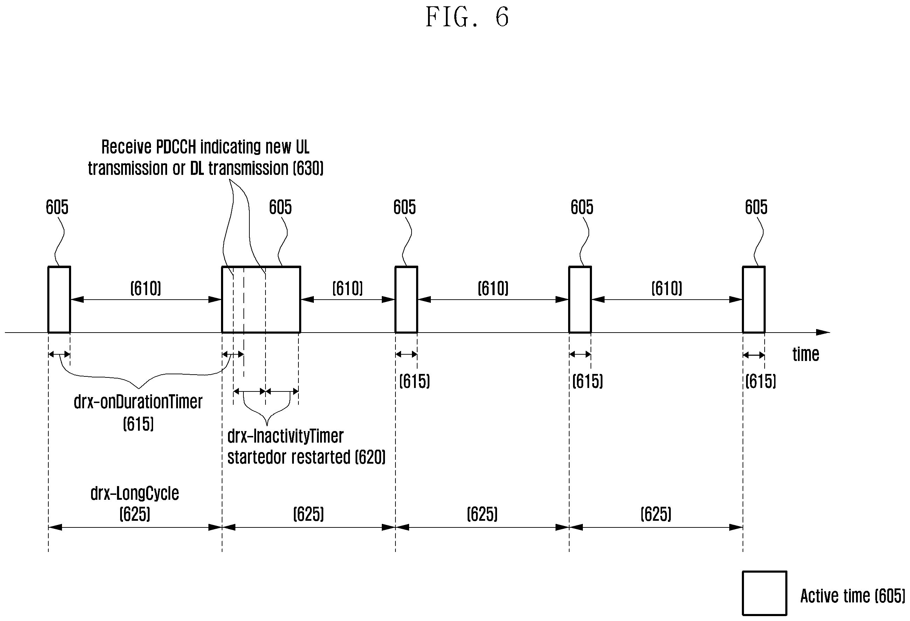

FIG. 6 illustrates a discontinuous reception (DRX) operation in a wireless communication system according to an embodiment of the present disclosure.

DRX is an operation in which the LTE that is using a service discontinuously receives data in an RRC connected state in which a radio link is established between the base station and the LTE. When the DRX is applied, the LTE turns on a receiver at a specific time point to monitor a control channel and turns off the receiver when no data is received during a predetermined period, and thus the power consumption of the UE may be reduced. The DRX operation may be controlled by an MAC layer device based on various parameters and a timer.

Referring to FIG. 6, an active time 605 is a time when the LTE wakes up every DRX cycle and monitors the PDCCH. The active time 605 may be defined as follows.

drx-onDurationTimer, drx-InactivityTimer, drx-RetransmissionTimerDL, drx-RetransmissionTimerUL, or ra-ContentionResolutionTimer is running; or
a Scheduling Request is sent on PUCCH and is pending; or
a PDCCH indicating a new transmission addressed to the C-RNTI of the MAC entity has not been received after successful reception of a random access response for the random access preamble not selected by the MAC entity among the contention-based random access preamble
drx-onDurationTimer, drx-Inactivity Timer, drx-RetransmissionTimerDL, drx-RetransmissionTimerUL, ra-ContentionResolutionTimer, and the like are timers, the values of which are configured by the base station, and have a function of configuring the UE to monitor the PDCCH in a situation in which a predetermined condition is satisfied. drx-onDurationTimer 615 is a parameter for configuring a minimum time for which the UE is awake in a DRX cycle. drx-InactivityTimer 620 is a parameter for configuration of a time for which the UE is additionally awake when receiving a PDCCH indicating new UL transmission or DL transmission (630). drx-RetransmissionTimerDL is a parameter for configuring a maximum time for which the UE is awake so as to receive DL retransmission in a DL HARQ procedure. The drx-RetransmissionTimerUL is a parameter for configuring a maximum time for which the UE is awake so as to receive an UL retransmission grant in an UL HARQ procedure. drx-onDurationTimer, drx-InactivityTimer, drx-RetransmissionTimerDL, and drx-RetransmissionTimerUL may be configured as, for example, the time, the number of subframes, the number of slots, and the like. ra-ContentionResolutionTimer is a parameter for monitoring the PDCCH in a random access procedure.
inActive time 610 is a time configured not to monitor the PDCCH during the DRX operation, and/or a time configured not to receive the PDCCH, and the remaining time excluding the active time 605 from the entire time of performing the DRX operation may become the inActive time 610. When the PDCCH is not monitored for the active time 605, the UE may enter a sleep or inActive state to reduce power consumption.

The DRX cycle refers to a cycle in which the LTE wakes up and monitors the PDCCH. That is, the DRX cycle refers to on duration occurrence period or a time interval until the UE monitors the PDCCH and then monitors the next PDCCH. There are two types of DRX cycles, that is, short DRX cycle and long DRX cycle. The short DRX cycle may be optionally applied.

A long DRX cycle 625 is a longer cycle between the two DRX cycles configured in the LTE. The LTE starts the drx-onDurationTimer 615 again at a time point at which the long DRX cycle 625 has elapsed from the start point (e.g., start symbol) of the drx-onDurationTimer 615 while operating in long DRX. When operating in the long DRX cycle 625, the UE may start the drx-onDurationTimer 615 in a slot after drx-SlotOffset in a subframe satisfying Equation 1 below. The drx-SlotOffset refers to a delay before the start of the drx-onDurationTimer 615. The drx-SlotOffset may be configured as, for example, the time, the number of slots, and the like.

$$[\text{Equation 1}]$$

$$[(\text{SFN} \times 10) + \text{subframe number}]\,\text{modulo}(\text{drx-LongCycle}) = \text{drx-StartOffset}$$

In this case, drx-LongCycleStartOffset may be used to define a subframe to start the long DRX cycle 625. The drx-LongCycleStartOffset may be configured as, for example, the time, the number of subframes, the number of slots, and the like.

[PDCCH: DCI Related]

Next, DCI in a 5G system will be described in detail.

In the 5G system, scheduling information about uplink data (or physical uplink shared channel (PUSCH)) or downlink data (or physical downlink shared channel (PDSCH)) is transmitted from a base station to a LTE through the DCI. The UE may monitor a fallback DCI format and a non-fallback DCI format with regard to the PUSCH or the PDSCH. The fallback DCI format may include a fixed field predefined between the base station and the LTE, and the non-fallback DCI format may include a configurable field.

The DCI may be transmitted through a physical downlink control channel (PDCCH) after channel coding and modulation is performed thereon. A cyclic redundancy check (CRC) may be attached to a DCI message payload, and the CRC may be scrambled by a radio network temporary identifier (RNTI) corresponding to the identification information of the LTE. Different RNTIs may be used according to the purpose of the DCI message, for example, a LTE-specific data transmission, a power adjustment command, or a random access response. That is, the RNTI is not explicitly transmitted, but is included in a CRC calculation process and then transmitted. When receiving the DCI message transmitted through the PDCCH, the UE may check a CRC by using an assigned RNTI. When a CRC check result is correct, the UE may know that the corresponding message has been transmitted to the LTE.

For example, DCI for scheduling a PDSCH for system information (SI) may be scrambled by an SI-RNTI. DCI for scheduling a PDSCH for a random access response (RAR) message may be scrambled by an RA-RNTI. DCI for scheduling a PDSCH for a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling UE-specific PDSCH or PUSCH may be scrambled by a cell RNTI (C-RNTI).

DCI format 0_0 may be used as a fallback DCI for scheduling a PUSCH. Here, a CRC may be scrambled by a C-RNTI. The DCI format 0_0 in which the CRC is scrambled by the C-RNTI may include, for example, the following information.

[Table 4]

| |
|---|
| - Identifier for DCI formats - [1] bit |
| - Frequency domain resource assignment $-\lceil \lceil \log_2(N_{RB}^{UL,BWP}(N_{RB}^{UL,BWP}+1)/2) \rceil \rceil$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - TPC command for scheduled PUSCH - [2] bits |
| - UL/SUL indicator - 0 or 1 bit |

DCI format 0_1 may be used as a non-fallback DCI for scheduling a PUSCH. Here, a CRC may be scrambled by a C-RNTI. The DCI format 0_1 in which the CRC is scrambled by the C-RNTI may include, for example, the following information.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
|     • For resource allocation type 0, $\lceil N_{RB}^{UL,BWP}/P \rceil$ bits |
|     • For resource allocation type 1, $\lceil \log_2(N_{RB}^{UL,BWP}(N_{RB}^{UL,BWP}+1)/2) \rceil$ bits |
| - Time domain resource assignment -1, 2, 3, or 4 bits |
| - VRB-to-PRB mapping - 0 or 1 bit, only for resource allocation type 1. |
|     • 0 bit if only resource allocation type 0 is configured; |
|     • 1 bit otherwise. |
| - Frequency hopping flag - 0 or 1 bit, only for resource allocation type 1. |

(continued)

• 0 bit if only resource allocation type 0 is configured;
• 1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
    • 1 bit for semi-static HARQ-ACK codebook;
    • 2 bits for dynamic HARQ-ACK codebook with single HARQ-ACK codebook.
- 2nd downlink assignment index - 0 or 2 bits
    • 2 bits for dynamic HARQ-ACK codebook with two HARQ-ACK sub-codebooks;
    • 0 bit otherwise.
- TPC command for scheduled PUSCH - 2 bits
- SRS resource indicator - $\left\lceil \log_2 \left( \sum_{k=1}^{L_{max}} \binom{N_{SRS}}{k} \right) \right\rceil$ or $\left\lceil \log_2 (N_{SRS}) \right\rceil$ bits

$\left\lceil \log_2 \left( \sum_{k=1}^{L_{max}} \binom{N_{SRS}}{k} \right) \right\rceil$. bits for non-codebook based PUSCH transmission;

$\left\lceil \log_2 (N_{SRS}) \right\rceil$. bits for codebook based PUSCH transmission.

- Precoding information and number of layers -up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 0 or 2 bits.
- beta_offset indicator - 0 or 2 bits
- DMRS sequence initialization - 0 or 1 bit

DCI format 1_0 may be used as a fallback DCI for scheduling a PDSCH. Here, a CRC may be scrambled by a C-RNTI. The DCI format 1_0 in which the CRC is scrambled by the C-RNTI may include, for example, the following information.

[Table 6]

- Identifier for DCI formats - [1] bit
- Frequency domain resource assignment $-\left\lceil \log_2 (N_{RB}^{DL,BWP}(N_{RB}^{DL,BWP}+1)/2) \right\rceil$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- PUCCH resource indicator - 3 bits
- PDSCH-to-HARQ feedback timing indicator - [3] bits

DCI format 1_1 may be used as a non-fallback DC for scheduling a PDSCH. Here, a CRC may be scrambled by a C-RNTI. The DCI format 1_1 in which the CRC is scrambled by the C-RNTI may include, for example, the following information.

[Table 7]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
|   • For resource allocation type 0,    $\left\lceil N_{RB}^{DL,BWP} / P \right\rceil$    bits |
|   • For resource allocation type 1,    $\left\lceil \log_2 (N_{RB}^{DL,BWP}(N_{RB}^{DL,BWP}+1)/2) \right\rceil$    bits |
| - Time domain resource assignment -1, 2, 3, or 4 bits |
| - VRB-to-PRB mapping - 0 or 1 bit, only for resource allocation type 1. |
|   • 0 bit if only resource allocation type 0 is configured; |
|   • 1 bit otherwise. |
| - PRB bundling size indicator - 0 or 1 bit |
| - Rate matching indicator - 0, 1, or 2 bits |
| - ZP CSI-RS trigger - 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - CBG transmission information - 0, 2, 4, 6, or 8 bits |
| - CBG flushing out information - 0 or 1 bit |
| - DMRS sequence initialization - 1 bit |

[PDCCH: CORESET, REG, CCE, Search Space]

A downlink control channel in a 5G communication system is now described in more detail with reference to the drawings.

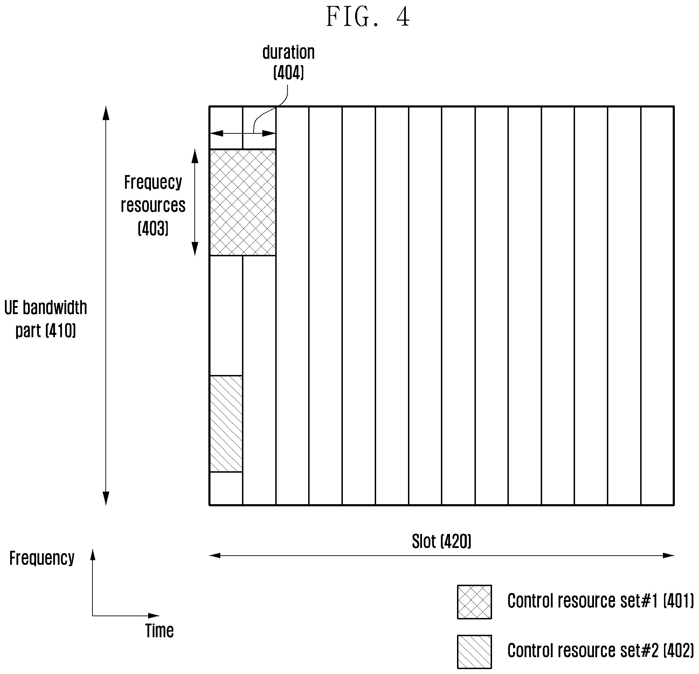

FIG. 4 illustrates an example of a control resource set (CORESET) where a downlink control channel is transmitted in a 5G wireless communication system. FIG. 4 shows an example in which a LTE BWP 410 is configured in a frequency domain and two CORESETs (CORESET #1 401 and CORESET #2 402) are configured within one slot 420 in a time domain. The CORESETs 401 and 402 may be configured in specific frequency resources 403 within the entire LTE BWP 410 in the frequency domain. One or multiple OFDM symbols may be configured in the time domain and defined as a control resource set duration 404. In an example shown in FIG. 4, the CORESET #1 401 is configured with the control resource set duration of two symbols, and the CORESET #2 402 is configured with the control resource set duration of one symbol.

The above described CORESET in 5G may be configured for the LTE by the base station via higher layer signaling (e.g., SI, MIB, RRC signaling). Configuring the CORESET for the LTE refers to providing information such as a CORESET identity, a frequency location of the CORESET, a symbol length of the CORESET, and the like. For example, it may include the following information.

[Table 8]

| | |
|---|---|
| ControlResourceSet ::= | SEQUENCE { |
| -- Corresponds to L1 parameter 'CORESET-ID' | |
| controlResourceSetId | ControlResourceSetId, |
| frequencyDomainResources | BIT STRING (SIZE (45)), |
| duration | INTEGER (1..maxCoReSetDuration), |
| cce-REG-MappingType | CHOICE { |
| interleaved | SEQUENCE { |
| reg-BundleSize | ENUMERATED {n2, n3, n6}, |
| precoderGranularity | ENUMERATED {sameAsREG-bundle, allContiguousRBs}, |
| interleaverSize | ENUMERATED {n2, n3, n6} |
| shiftIndex INTEGER(0..maxNrofPhysicalResourceBlocks-1) | OPTIONAL |
| }, | |
| nonInterleaved | NULL |
| }, | |
| tci-StatesPDCCH | SEQUENCE(SIZE (1..maxNrofTCI-StatesPDCCH)) OF TCI-StateId OPTIONAL, |

| | |
|---|---|
| tci-PresentInDCI | ENUMERATED {enabled} |
| OPTIONAL, -- Need S | |
| } | |

In Table 8, tci-StatesPDCCH (simply referred to as transmission configuration indication (TCI) state) configuration information may include information about one or multiple synchronization signal/physical broadcast channel (SS/PBCH) block indices or channel state information reference signal (CSI-RS) indices having a QCL relationship with a DMRS transmitted in the corresponding CORESET.

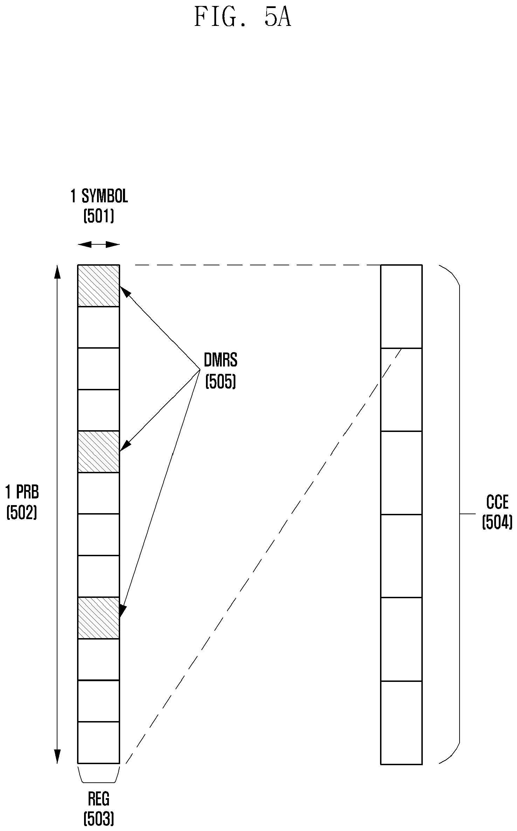

FIG. 5A illustrates an example of the basic unit of time and frequency resources configuring a downlink control channel that can be used in 5G. Referring to FIG. 5A, the basic unit of time and frequency resources configuring a control channel may be referred to as a resource element group (REG) 603, which may be defined as one OFDM symbol 501 in a time domain and one physical resource block (PRB) 502, i.e., 12 subcarriers, in a frequency domain. The base station may concatenate the REGs 503 to configure a downlink control channel allocation unit.

As shown in FIG. 5A, when a basic unit to which a downlink control channel is allocated in 5G is referred to as a control channel element (CCE) 504, one CCE 504 may consist of multiple REGs 503. In the example shown in FIG. 5A, the REG 503 may include 12 REs, and when one CCE 504 consist of six REGs 503, one CCE 504 may include 72 REs. When the downlink CORESET is configured, it may include multiple CCEs 504. A specific downlink control channel may be transmitted after being mapped to one or more CCEs 504 according to an aggregation level (AL) in the CORESET. The CCEs 504 in the CORESET are distinguished by numbers. Here, the numbers of the CCEs 504 may be assigned according to a logical mapping scheme.

The basic unit of the downlink control channel shown in FIG. 5A, that is, the REG 503 may include both REs to which DCI is mapped and a region to which a DMRS 505 which is a reference signal for decoding the DCI is mapped. As shown in FIG. 5A, three DMRSs 505 may be transmitted in one REG 503. The number of CCEs used for transmission of the PDCCH may be 1, 2, 4, 8, or 16 according to the AL. A different number of CCEs may be used to implement link adaptation of the downlink control channel. For example, if AL=L, one downlink control channel may be transmitted through L CCEs. The LTE should detect a signal in a state in which the LTE does not know information about the downlink control channel, and a search space representing a set of CCEs has been provided for blind decoding. The search space is a set of downlink control channel candidates including CCEs that the UE has to attempt to decode at a given AL. Since there are various ALs that make one bundle of 1, 2, 4, 8, or 16 CCEs, the UE may have multiple search spaces. A search space set may be defined as a set of search spaces at all configured ALs.

The search space may be classified into a common search space and a LTE-specific search space. A predetermined group of LTEs or all the UEs may examine the common search space of the PDCCH so as to receive cell common control information such as dynamic scheduling of system information or a paging message. For example, PDSCH scheduling allocation information for transmission of the SIB including cell operator information and the like may be received by examining the common search space of the PDCCH. In a case of the common search space, since a predetermined group of LTEs or all the LTEs need to receive the PDCCH, the common search space may be provided as a set of previously appointed CCEs. Scheduling allocation information about the UE-specific PDSCH or PUSCH may be received by examining the UE-specific search space of the PDCCH. The UE-specific search space may be LTE-specifically provided as a function of the LTE identity and various system parameters.

In 5G, the parameter for the search space of the PDCCH may be configured for the UE by the base station via higher layer signaling (e.g., SIB, MIB, RRC signaling, etc.). For example, the base station may configure, for the UE, the number of PDCCH candidates at each aggregation level L, the monitoring periodicity for the search space, the monitoring occasion of symbol units in the slots for the search space, the search space type (common search space or LTE-specific search space), the combination of RNTI and DCI format to be monitored in the search space, the control resource set index to monitor the search space, and the like. For example, it may include the following information.

[Table 9]

| | |
|---|---|
| SearchSpace ::= | SEQUENCE { |
| -- Identity of the search space. SearchSpaceId = 0 identifies the SearchSpace configured via PBCH (MIB) or ServingCellConfigCommon. | |
| searchSpaceId | SearchSpaceId, |
| controlResourceSetId | ControlResourceSetId, |
| monitoringSlotPeriodicityAndOffset | CHOICE { |
| sl1 | NULL, |
| sl2 | INTEGER (0..1), |

```
        sl4                             INTEGER (0..3),

        sl5                             INTEGER (0..4),

        sl8                             INTEGER (0..7),

        sl10                            INTEGER (0..9),

        sl16                            INTEGER (0..15),

        sl20                            INTEGER (0..19)

    }

                            OPTIONAL,

    duration                INTEGER (2..2559)

    monitoringSymbolsWithinSlot            BIT STRING (SIZE (14))

                            OPTIONAL,

    nrofCandidates          SEQUENCE {

        aggregationLevel1              ENUMERATED {n0, n1, n2, n3, n4,
        n5, n6, n8},

        aggregationLevel2              ENUMERATED {n0, n1, n2, n3, n4,
        n5, n6, n8},

        aggregationLevel4              ENUMERATED {n0, n1, n2, n3, n4,
        n5, n6, n8},

        aggregationLevel8              ENUMERATED {n0, n1, n2, n3, n4,
        n5, n6, n8},

        aggregationLevel16             ENUMERATED {n0, n1, n2, n3, n4,
        n5, n6, n8}

    },


    searchSpaceType                    CHOICE {
        -- Configures this search space as common search space (CSS) and DCI formats
        to monitor.
        common                         SEQUENCE {
    }

        ue-Specific                    SEQUENCE {
            -- Indicates whether the UE monitors in this USS for DCI formats 0-0 and 1-0
        or for formats 0-1 and 1-1.
```

| formats | ENUMERATED {formats0-0-And-1-0, formats0-1-And-1-1}, ... } |
|---|---|

The base station may configure one or more search space sets for the LTE according to configuration information. According to some embodiments, the base station may configure search space set 1 and search space set 2 in the LTE. The base station may configure the search space set 1 in the LTE so that DCI format A scrambled by an X-RNTI is monitored in the common search space. The base station may configure the search space set 2 in the LTE so that DCI format B scrambled by a Y-RNTI is monitored in the UE-specific search space.

According to the configuration information, one or multiple search space sets may exist in the common search space or the UE-specific search space. For example, search space set #1 and search space set #2 may be configured as the common search space, and search space set #3 and search space set #4 may be configured as the UE-specific search space.

In the common search space, the following combinations of the DCI format and the RNTI may be monitored. However, the present disclosure is not limited to below.

DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

In the UE-specific search space, the following combinations of the DCI format and the RNTI may be monitored. However, the present disclosure is not limited to below.

DCI format 0_0/1_0 with CRC scrambled by C-RNTI, CS-RNTI, TC-RNTI
DCI format 1_0/1_1 with CRC scrambled by C-RNTI, CS-RNTI, TC-RNTI

The specified RNTIs may follow the definitions and usages described below.

Cell RNTI (C-RNTI): For UE-specific PDSCH scheduling
Temporary Cell RNTI (TC-RNTI): For UE-specific PDSCH scheduling
Configured Scheduling RNTI (CS-RNTI): For semi-statically configured LTE-specific PDSCH scheduling
Random Access RNTI (RA-RNTI): For PDSCH scheduling in random access operation
Paging RNTI (P-RNTI): For scheduling of PDSCH through which paging is transmitted
System Information RNTI (SI-RNTI): For PDSCH scheduling in which system information is transmitted
Interruption RNTI (INT-RNTI): For notifying of whether to puncture PDSCH.
Transmit Power Control for PUSCH RNTI (TPC-PUSCH-RNTI): For indication of power control command for PUSCH
Transmit Power Control for PUCCH RNTI (TPC-PUCCH-RNTI): For indication of power control command for PUCCH
Transmit Power Control for SRS RNTI (TPC-SRS-RNTI): For indication of power control command for SRS

The above-described specified DCI formats may follow the definition below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |

(continued)

| DCI format | Usage |
|---|---|
| 2_1 | Notifying a group of UEs of the PRB(s) and OFDM symbol(s) where UE may assume no transmission is intended for the LTE |
| 2_2 | Transmission of TPC commands for PUCCH and PUSCH |
| 2_3 | Transmission of a group of TPC commands for SRS transmissions by one or more LTEs |

In 5G, the search space of the aggregation level L in the CORESET p and the search space set s may be expressed by Equation 2 below.

[Equation 2]

$$ L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i $$

- L: Aggregation level
- $n_{CI}$: Carrier index
- $N_{CCE,p}$: Total number of CCEs existing in the CORESET p
- $n_{s,f}^{\mu}$: Slot index
- $M_{s,max}^{(L)}$: Number of PDCCH candidates of aggregation level L
- $m_{s,nCI}=0, ..., M_{s,max}^{(L)}-1$: PDCCH candidate group index of aggregation level L
- i=0, ..., L-1
- $Y_{p,ns,f\mu}=(A_p \cdot Y_{p,ns,f\mu-1})$mod D, $Y_{p,-1}=n_{RNI}\neq0$, $A_0=39827$, $A_1=39829$, $A_2=39839$, D=65537
- $n_{RNTI}$: UE identifier

The $Y_{p,ns,f\mu}$ value may correspond to zero in the common search space.
In a case of the UE-specific search space, the $Y_{p,ns,f\mu}$ value may correspond to a value that changes according to the LTE identity (C-RNTI or ID configured by the base station for the LTE) and the time index.
In 5G, multiple search space sets may be configured with different parameters (e.g., parameters in Table 9), and accordingly, the set of search space sets monitored by the UE may differ at each time point. For example, if search space set #1 is configured with the X-slot period, search space set #2 is configured with the Y-slot period, and X and Y are different, the LTE may monitor both search space set #1 and space set #2 in a specific slot, and may monitor one of search space set #1 and search space set #2 in a specific slot.

[PDCCH: Span]

A UE may perform, for each subcarrier spacing, UE capability reporting for a case of having multiple PDCCH monitoring occasions in a slot, and in this case, the term span may be used. Span denotes consecutive symbols in which the LTE can monitor a PDCCH in the slot, and each PDCCH monitoring occasion is within one span. Span may be expressed as (X,Y), where x denotes the minimum number of symbols that should be separated between the first symbols of two consecutive spans, and Y denotes the number of consecutive symbols in which the LTE can monitor the PDCCH within one span. Here, the UE may monitor the PDCCH in an interval from the first symbol of the span to the Y symbol within the span.

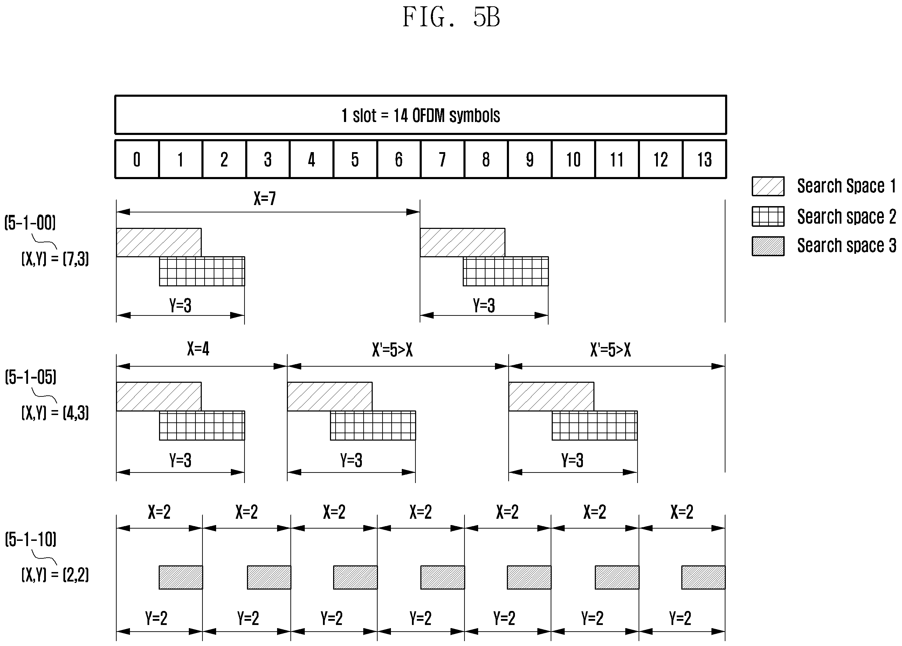

FIG. 5B illustrates, through a span, a case where a LTE may have a plurality of PDCCH monitoring occasions within a slot in a wireless communication system. Span can be expressed as (X,Y)=(7,3), (4,3), and (2,2), and these three cases are indicated by (5-1-00), (5-1-05), and (5-1-10), respectively, in FIG. 5B. As an example, (5-1-00) represents a case in which two spans that can be expressed by (7,4) exist in a slot. The interval between the first symbols of two spans is expressed as X=7, PDCCH monitoring occasions may exist within a total of Y symbols (Y=3) from the first symbol of each span, and search spaces 1 and 2 may exist within Y symbols (Y=3). As another example, (5-1-05) represents a case in which a total of three spans that can be expressed as (4,3) exist in a slot, and the interval between the second and third spans is shown to be separated by X' symbols (X'=5) greater than X=4.

[PDCCH: UE Capability Report]

The slot position in which the above-described common search space and LTE-specific search space are located is indicated by the monitoringSlotPeriodicityAndOffset parameter in Table 11-1, and the symbol position in a slot is indicated by a bitmap through the monitoringSymbolsWithinSlot parameter in Table 9. On the other hand, the symbol position in a slot in which the LTE can monitor the search space may be reported to the base station through the following LTE capabilities.

UE capability 1 (hereinafter, referred to as FG 3-1). This UE capability denotes, as shown in Table 11-1 below, if one monitoring occasion (MO) for the type 1 and type 3 common search space or LTE-specific search space exists in a slot, UE capability capable of monitoring the MO when the corresponding MO occasion is located within the first 3 symbols in a slot. This LTE capability is a mandatory capability that all LTEs supporting NR should support, and whether this capability is supported is not explicitly reported to the base station.

[Table 11-1]

| Index | Feature group | Components | Field name in TS 38.331 [2] |
|---|---|---|---|
| 3-1 | Basic DL control channel | 1) One configured CORESET per BWP per cell in addition to CORESET0<br>- CORESET resource allocation of 6RB bit-map and duration of 1 - 3 OFDM symbols for FR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | n/a |

UE capability 2 (hereinafter, referred to as FG 3-2). This UE capability denotes, as shown in Table 11-2 below, if a monitoring occasion (MO) for a common search space or a LTE-specific search space exists in a slot, UE capability capable of monitoring regardless of the location of the start symbol of the MO. This LTE capability may be optionally supported by the LTE, and whether this capability is supported is explicitly reported to the base station.

[Table 11-2]

| Index | Feature group | Components | Field name in TS 38.331 [2] |
|---|---|---|---|
| 3-2 | PDCCH monitoring on any span of up to 3 consecutive OFDM symbols of a slot | For a given LTE, all search space configurations are within the same span of 3 consecutive OFDM symbols in the slot | *pdcchMonitoringSingleOccasion* |

UE capability 3 (hereinafter, referred to as FG 3-5, 3-5a, and 3-5b). As shown in Table 11-3 below, this LTE capability indicates a pattern of a MO that the UE can monitor when multiple MOs for a common search space or a UE-specific search space exist in a slot. The above-described pattern includes an interval X between start symbols between different MOs, and a maximum symbol length Y for one MO. The combination of (X,Y) supported by the UE may be one or multiple {(2,2), (4,3), and (7,3)}. This LTE capability is optionally supported by the UE, and whether this capability is supported and a combination of (X, Y) described above are explicitly reported to the base station.

[Table 11-3]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and LTE-SS, monitoring occasion can be any OFDM symbol(s) of a slot for Case 2 | *pdcch-MonitoringAnyOccasions* { 3-5. *withoutDCI-Gap* 3-5a. *withDCI-Gap* } |
| 3-5a | For type 1 CSS with dedicated RRC configuration, type 3 CSS, and LTE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2OFDM symbols for 15kHz<br>- 4OFDM symbols for 30kHz<br>- 7OFDM symbols for 60kHz with NCP<br>- 11OFDM symbols for 120kHz Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. | |

(continued)

| Index | Feature group | Components | Field name in TS 38.331 [2] |
|-------|---------------|------------|-----------------------------|
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(l), 0<=1<=13 is generated, where b(l)=1 if symbol l of any slot is part of a monitoring occasion, b(l)=0 otherwise. The first span in the span pattern begins at the smallest l for which b(l)=1. The next span in the span pattern begins at the smallest l not included in the previous span(s) for which b(l)=1. The span duration is max{maximum value of all CORESET durations, minimum value of Y in the LTE reported candidate value} except possibly the last span in a slot which can be of shorter duration. A particular PDCCH monitoring configuration meets the LTE capability limitation if the span arrangement satisfies the gap separation for at least one (X, Y) in the LTE reported candidate value set in every slot, including cross slot boundary. For the set of monitoring occasions which are within the same span: • Processing one unicast DCI scheduling DL and one unicast DCI scheduling UL per scheduled CC across this set of monitoring occasions for FDD • Processing one unicast DCI scheduling DL and two unicast DCI scheduling UL per scheduled CC across this set of monitoring occasions for TDD • Processing two unicast DCI scheduling DL and one unicast DCI scheduling UL per scheduled CC across this set of monitoring occasions for TDD The number of different start symbol indices of spans for all PDCCH monitoring occasions per slot, including PDCCH monitoring occasions of FG-3-1, is no more than floor (14/X) (X is minimum among values reported by LTE). The number of different start symbol indices of PDCCH monitoring occasions per slot including PDCCH monitoring occasions of FG-3-1, is no more than 7. | |

(continued)

| Index | Feature group | Components | Field name in TS 38.331 [2] |
|---|---|---|---|
| | | The number of different start symbol indices of PDCCH monitoring occasions per half-slot including PDCCH monitoring occasions of FG-3-1 is no more than 4 in SCell. | |

The UE may report whether the above-described LTE capability 2 and/or LTE capability 3 is supported, and related parameters to the base station. The base station may perform time-domain resource allocation for the common search space and the UE-specific search space based on the reported LTE capability. When performing the resource allocation, the base station may the base station may prevent the MO from being located in a non-monitoring position of the UE.

[PDCCH: BD/CCE Limit]

When multiple search space sets are configured for a LTE, the following conditions may be considered in a method for determining a search space set configured to be monitored by the UE.
If the UE is configured with r15monitoringcapability as the value of monitoringCapabilityConfig-r16, which is higher layer signaling, the UE defines the number of PDCCH candidates that can be monitored and the maximum value of the number of CCEs configuring the entire search space (here, the entire search space refers to the entire CCE set corresponding to a union area of multiple search space sets) for each slot. Further, if the value of monitoringCapability-yConfig-r16 is configured with r16monitoringcapability, the UE defines the number of PDCCH candidates that can be monitored and the maximum value of the number of CCEs configuring the entire search space (here, the entire search space refers to the entire CCE set corresponding to the union area of multiple search space sets) for each span.

[Condition 1: Limitation on Maximum Number of PDCCH Candidates]

According to the above configuration value of higher layer signaling, $M^\mu$, which is the maximum number of PDCCH candidate groups that the UE can monitor, may follow Table 12-1 below if it is defined on a slot basis in a cell configured with a subcarrier spacing of $15 \cdot 2^\mu$ kHz, and may follow Table 12-2 below if it is defined on a span basis.

[Table 12-1]

| $\mu$ | Maximum number of PDCCH candidates per slot and per serving cell ($M^\mu$) |
|---|---|
| 0 | 44 |
| 1 | 36 |
| 2 | 22 |
| 3 | 20 |

[Table 12-2]

| | Maximum number $M^\mu$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: Limitation on Maximum Number of CCEs]

According to the above configuration value of higher layer signaling, $C^\mu$, which is the maximum number of CCEs configuring the entire search space (here, the entire search space denotes the entire set of CCEs corresponding to the union region of multiple search space sets), may follow Table 12-3 below if it is defined on a slot basis in a cell configured with a subcarrier spacing of 15 · 2$^\mu$ kHz, and may follow Table 17 below if it is defined on a span basis.

[Table 12-3]

| $\mu$ | Maximum number of non-overlapped CCEs per slot and per serving cell (C$^\mu$) |
|---|---|
| 0 | 56 |
| 1 | 56 |
| 2 | 48 |
| 3 | 32 |

[Table 12-4]

| | Maximum number C$^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For the convenience of description, a situation in which both conditions 1 and 2 are satisfied at a specific time point is referred to as "condition A". Therefore, not satisfying the condition A may refer to not satisfying at least one of the above conditions 1 and 2.

[PDCCH: Overbooking]

According to the configuration of the search space sets of the base station, the case in which the condition A is not satisfied at a specific time point may occur. If the condition A is not satisfied at a specific time point, the UE may select and monitor some of the search space sets configured to satisfy the condition A at the corresponding time point, and the base station may transmit PDCCH to the selected search space sets.

A method of selecting some search spaces in the entire configured search space set may conform to the following method.

If the condition A for PDCCH is not satisfied at a specific time point (slot), the LTE (or base station) may select a search space set, in which a search space type is configured to be a common search space, from among search space sets existing at a corresponding time point, preferentially over a search space set in which a search space type is configured to be a UE-specific search space.

If all search space sets configured to be common search spaces are selected (i.e., if the condition A is satisfied even after all search spaces configured to be common search spaces are selected), the LTE (or base station) may select the search space sets configured to have LTE-specific search spaces. Here, if there are multiple search space sets configured to be UE-specific search spaces, a search space set having a low search space set index may have a higher priority. In consideration of the priority, the UE-specific search space sets may be selected within a range in which the condition A is satisfied.

[QCL, TCI State]

In a wireless communication system, one or more different antenna ports (or different antenna ports may be replaced by one or more channels, signals, and combinations thereof, but in the description below, collectively referred to as different antenna ports for convenience of explanation) may be associated with each other by a quasi-co-location (QCL) configuration as shown in Table 13 below. The TCI state is for announcing a QCL relationship between a PDCCH (or PDCCH DMRS) and another RS or channel, and a certain reference antenna port A (reference RS #A) and another target antenna port B (target RS #B) are QCLed denotes that the UE is allowed to apply some or all of the large-scale channel parameters estimated from the antenna port A to the channel measurement from the antenna port B. QCL is used to correlate different parameters, depending on situations, such as 1) time tracking affected by average delay and delay spread, 2) frequency tracking affected by Doppler shift and Doppler spread, 3) radio resource management (RRM) affected by average gain, and 4) beam management (BM) affected by spatial parameters. Accordingly, NR supports four types of QCL relationships as shown in Table 13 below.

[Table 13]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may collectively refer to some or all of various parameters, such as angle of arrival (AoA), power angular spectrum (PAS) of AoA, angle of departure (AoD), PAS of AoD, transmit/receive channel correlation, transmit/receive beamforming, and spatial channel correlation.

The QCL relationship can be configured for the UE through the RRC parameters TCI-State and QCL-Info as shown in Table 14 below. Referring to Table 14, the base station configures one or more TCI states for the UE and informs the LTE of up to two QCL relationships (qcl-Type1, qcl-Type2) for RS referring to the ID of the TCI state, that is, target RS. Here, pieces of QCL information (QCL-Info) included in each TCI state include the serving cell index and BWP index of the reference RS indicated by the corresponding QCL information, the type and ID of the reference RS, and the QCL type as shown in Table 13 above.

[Table 14]

```
TCI-State ::=                    SEQUENCE {
    tci-StateId                  TCI-StateId,
    (ID of the corresponding TCI state)
    qcl-Type1                    QCL-Info,
    (QCL information of the first reference RS of the RS (target RS) referring to the
corresponding TCI state ID)
    qcl-Type2                    QCL-Info          OPTIONAL,    -- Need
R
    (QCL information of the second reference RS of the RS (target RS) referring to the
corresponding TCI state ID)
    ...
}


QCL-Info ::=                     SEQUENCE {
    cell                         ServCellIndex     OPTIONAL,   -- Need R
    (Serving cell index of the reference RS indicated by the corresponding QCL
information)
```

```
    bwp-Id                          BWP-Id                      OPTIONAL, --

Cond CSI-RS-Indicated

    (BWP index of the reference RS indicated by the relevant QCL information)

    referenceSignal                 CHOICE {

        csi-rs                          NZP-CSI-RS-ResourceId,

        ssb                             SSB-Index

    (One of the CSI-RS ID or SSB ID indicated by the relevant QCL information)

    },

    qcl-Type                        ENUMERATED {typeA, typeB, typeC, typeD},

    ...

}
```

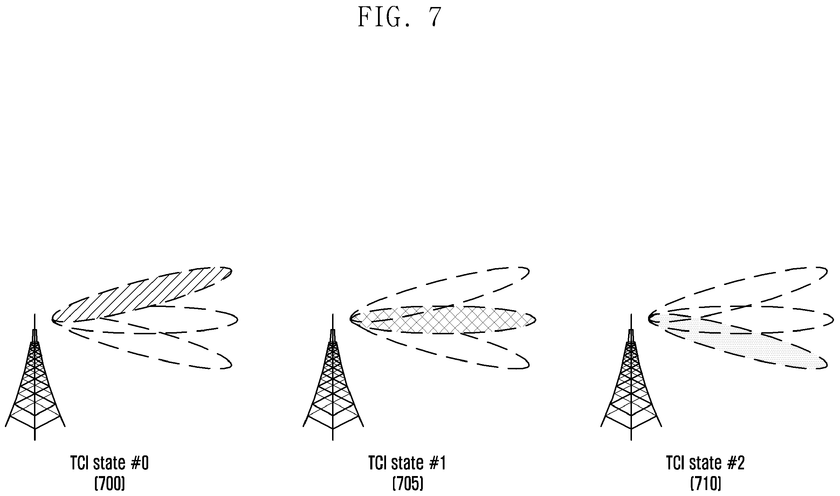

FIG. 7 illustrates an example of base station beam allocation according to TCI state configuration. Referring to FIG. 7, a base station may transmit information regarding N different beams to a UE through N different TCI states. For example, if N=3 as shown in FIG. 7, the base station may allow qcl-Type2 parameters included in three TCI states 700, 705 and 710 to be associated with CSI-RS or SSB corresponding to different beams, and to be configured with QCL type D, and thus may provide notification that antenna ports referring to the different TCI states 700, 705 and 710 are associated with different spatial Rx parameters, that is, different beams.

Tables 15-1 to 15-5 below show valid TCI state configurations according to target antenna port types.

Table 15-1 shows valid TCI state configuration when the target antenna port is CSI-RS for tracking (TRS). The TRS refers to an NZP CSI-RS, in which a repetition parameter is not configured and trs-Info is configured to be true, among CSI-RSs. Configuration 3 in Table 15-1 may be used for aperiodic TRS.

[Table 15-1]

| Valid TCI state Configuration | DLRS1 | qcl-Type1 | DLRS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 15-2 shows valid TCI state configuration when the target antenna port is CSI-RS for CSI. The CSI-RS for CSI refers to an NZP CSI-RS, in which a parameter indicating repetition (e.g., a repetition parameter) is not configured and trs-Info is not configured to be true, among CSI-RSs.

[Table 15-2]

| Valid TCI state Configuration | DLRS1 | qcl-Type1 | DLRS 2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DLRS 1) | QCL-TypeD |
| 4 | TRS | QCL-TypeB | | |

Table 15-3 shows a valid TCI state configuration when a target antenna port is CSI-RS for beam management (BM, which has the same meaning as CSI-RS for L1 RSRP reporting). The CSI-RS for BM denotes an NZP CSI-RS, in which a repetition parameter is configured and has the value of On or Off, and trs-Info is not configured to be true, among CSI-RSs.

[Table 15-3]

| Valid TCI state Configuration | DLRS1 | qcl-Type1 | DLRS 2 (if configured) | qcl-Type2 (if configured) |
|---|---|---|---|---|
| 1 | TRS | QCL-TypeA | TRS (same as DLRS 1) | QCL-TypeD |
| 2 | TRS | QCL-TypeA | CSI-RS (BM) | QCL-TypeD |
| 3 | SS/PBCH Block | QCL-TypeC | SS/PBCH block | QCL-TypeD |

Table 15-4 shows valid TCI state configuration when a target antenna port is a PDCCH DMRS.

[Table 15-4]

| Valid TCI state Configuration | DLRS1 | qcl-Type1 | DLRS 2 (if configured) | qcl-Type2 (if configured) |
|---|---|---|---|---|
| 1 | TRS | QCL-TypeA | TRS (same as DLRS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 15-5 shows a valid TCI state configuration when the target antenna port is a PDSCH DMRS.

[Table 15-5]

| Valid TCI state Configuration | DLRS1 | qcl-Type1 | DLRS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

In the representative QCL configuration method according to Tables 15-1 to 15-5, a target antenna port and a reference antenna port for each stage are configured to be "SSB" -> "TRS" -> "CSI-RS for CSI, or CSI-RS for BM, PDCCH DMRS, or PDSCH DMRS". Accordingly, it is possible to link the statistical characteristics that can be measured from the SSB and the TRS to each of antenna ports to assist the reception operation of a LTE.

[PDCCH: TCI State Related]

Specifically, TCI state combinations applicable to a PDCCH DMRS antenna port are shown in Table 16 below. In Table 16, the fourth row is a combination assumed by the LTE before RRC configuration, and configuration after RRC is not possible.

[Table 16]

| Valid TCI state Configuration | DLRS 1 | qcl-TypeI | DLRS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

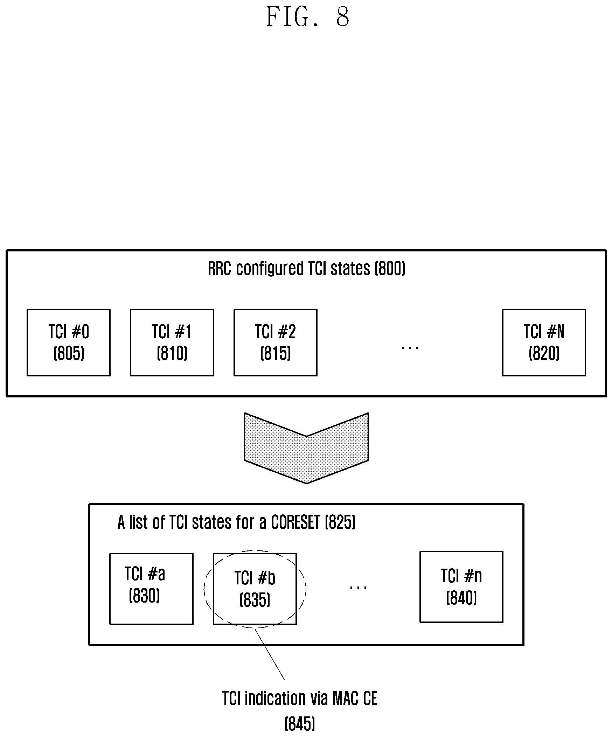

In NR, for dynamic allocation of a PDCCH beam, a hierarchical signaling method as shown in FIG. 8 is supported. Referring to FIG. 8, a base station may configure N TCI states 805, 810, ... , 820 for a LTE via RRC signaling 800, and may configure some of them as TCI states for a CORESET (825). Thereafter, the base station may indicate one of the TCI states 830, 835, and 840 for the CORESET to the LTE via MAC CE signaling (845). Thereafter, the UE may receive a PDCCH based on beam information included in a TCI state indicated by the MAC CE signaling.

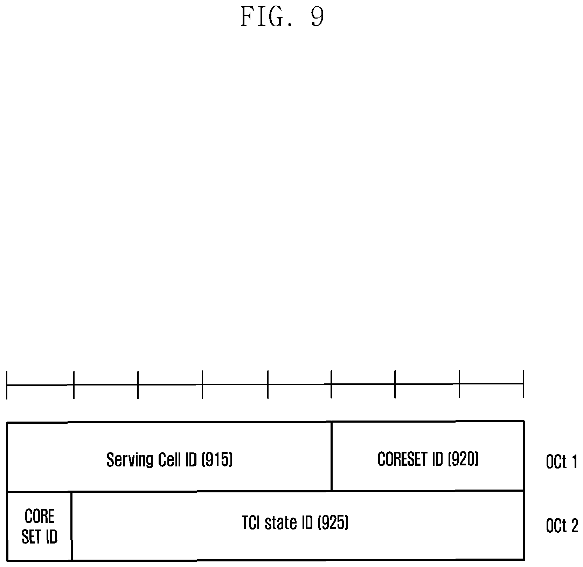

FIG. 9 illustrates a TCI indication MAC CE signaling structure for the PDCCH DMRS. Referring to FIG. 9, the TCI indication MAC CE signaling for the PDCCH DMRS consists of 2 bytes (16 bits), and may include a serving cell ID 915 of 5 bits, a CORESET ID 920 of 4 bits, and a TCI state ID 925 of 7 bits.

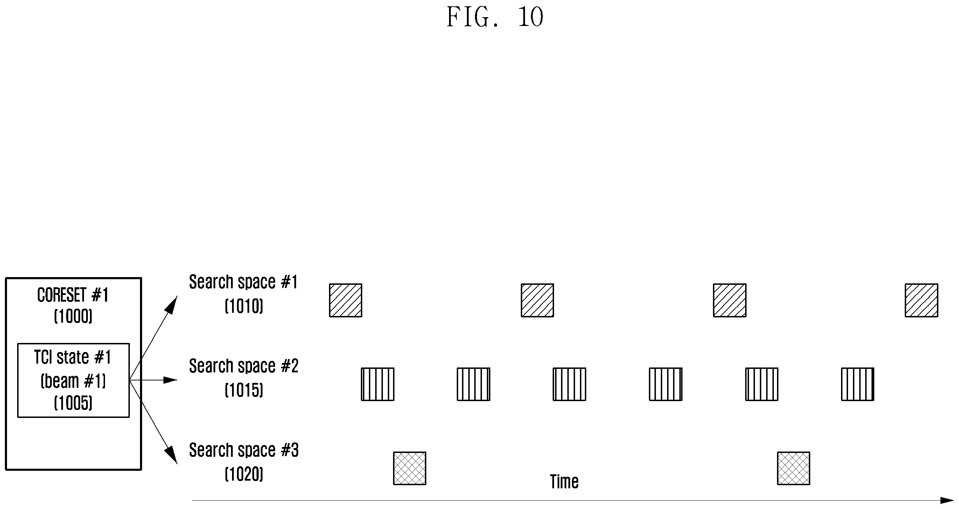

FIG. 10 illustrates an example of control resource set (CORESET) and search space beam configuration according to the above description. Referring to FIG. 10, a base station may indicate one TCI state in a list of TCI states included in a CORESET 1000 configuration through MAC CE signaling (1005). Thereafter, before another TCI state is indicated to the corresponding CORESET through another MAC CE signaling, the UE considers that the same QCL information (beam #1) 1005 is applied to one or more search spaces 1010, 1015, and 1020 connected to the CORESET. According to the above-described PDCCH beam allocation method, it is difficult to indicate a beam change faster than the MAC CE signaling delay, and there is a problem in that the same beam is collectively applied to all CORESETs regardless of search space characteristics, making flexible PDCCH beam management difficult. Embodiments below provide a more flexible PDCCH beam configuration and management method. Hereinafter, in describing embodiments, several distinguished examples are provided for convenience of description, but these are not mutually exclusive and can be applied by appropriately combining with each other depending on the situation.

The base station may configure, in the UE, one or multiple TCI states for a specific control resource set, and may activate one of the configured TCI states through a MAC CE activation command. For example, {TCI state #0, TCI state #1, and TCI state #2} are configured as the TCI state in the CORESET #1, and the base station may transmit, to the LTE, a command of activating to assume the TCI state #0 as the TCI state for the CORESET #1 through the MAC CE. Based on the activation command for the TCI state received by the MAC CE, the UE may correctly receive the DMRS of the corresponding CORESET based on QCL information in the activated TCI state.

For the CORESET (CORESET #0) in which the index is configured to be 0, if the LTE does not receive the MAC CE activation command for the TCI state of the CORESET #0, the UE may assume that DMRS transmitted in the CORESET #0 is QCLed with an SS/PBCH block identified during the initial access procedure or non-contention-based random access procedure that is not triggered by a PDCCH command.

In relation to the CORESET (CORESET #X) in which the index is configured to be a value other than 0, if the UE is not configured with the TCI state for the CORESET #X, or the UE is configured with one or more TCI states but has not received the MAC CE activation command for activating one of the TCI states, the UE may assume that DMRS transmitted in the CORESET #X is QCLed with an SS/PBCH block identified during the initial access procedure.

[PDCCH: QCL Prioritization Rule Related]

Hereinafter, the QCL priority determination operation for PDCCH will be described in detail. When a UE operates in a single cell or intra-band carrier aggregation, and a plurality of CORESETs existing within an activated BWP of a single or multiple cells overlap in time while having the same or different QCL-TypeD characteristics in a specific PDCCH monitoring occasion, the UE may select a specific CORESET according to the QCL prioritization operation and monitor CORESETs having the same QCL-TypeD characteristics as the corresponding CORESET. That is, when a plurality of CORESETs overlap in time, the LTE may receive one QCL-TypeD characteristic. In this case, the criteria for determining the QCL priority may be as follows.

Criterion 1. A CORESET connected to a common search space of the lowest index in a cell corresponding to the lowest index among cells including the common search space.

Criterion 2. A CORESET connected to a UE-specific search space of the lowest index in a cell corresponding to the lowest index among cells including the UE-specific search space.

For the above criteria, if any criterion is not satisfied, another criterion is applied. For example, in the case where CORESETs overlap in time in a specific PDCCH monitoring occasion, if all CORESETs are not connected to a common search space but to a UE-specific search space, that is, if criterion 1 is not satisfied, the UE may omit application of criterion 1 and apply criterion 2.

When the LTE selects a CORESET according to the above-mentioned criteria, the following two matters may be additionally considered for QCL information configured in the CORESET. First, in case that CORESET 1 has CSI-RS 1 as a reference signal having a QCL-TypeD relationship, a reference signal in which the CSI-RS 1 has a QCL-TypeD relationship is SSB 1, and a reference signal in which another CORESET 2 has a QCL-TypeD relationship is SSB 1, the UE may consider that the two CORESETs 1 and 2 have different QCL-TypeD characteristics. Second, in case that CORESET 1 has CSI-RS 1 configured in cell 1 as a reference signal having a QCL-TypeD relationship, and a reference signal in which the CSI-RS 1 has a QCL-TypeD relationship is SSB 1, and CORESET 2 has CSI-RS 2 configured in cell 2 as a reference signal having a QCL-TypeD relationship, and a reference signal in which the CSI-RS 2 has a QCL-TypeD relationship is SSB 1, the UE may consider that the two CORESETs have the same QCL-TypeD characteristic.

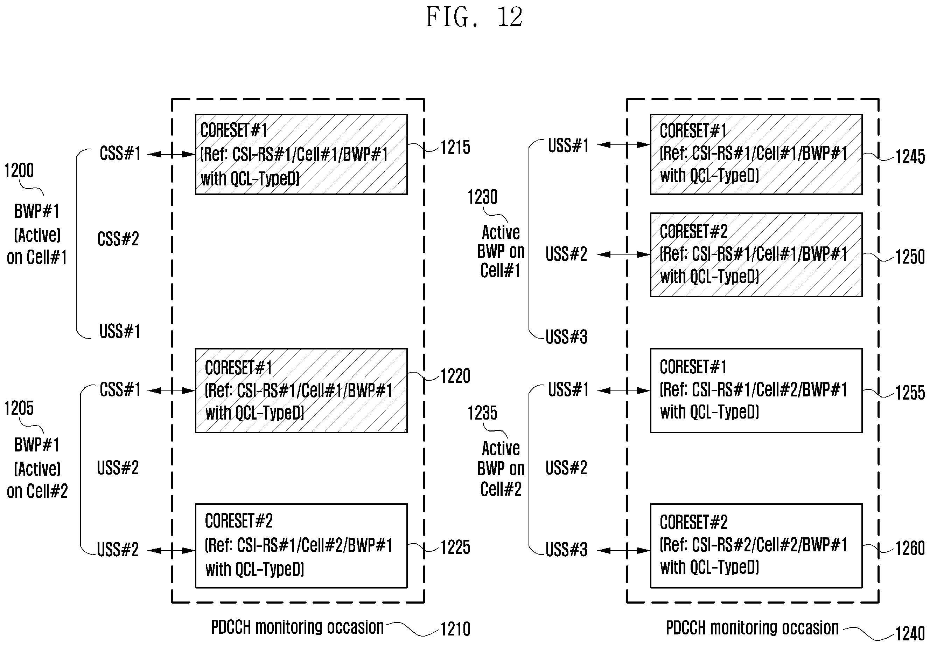

FIG. 12 illustrates a method in which a LTE selects a receivable CORESET by considering a priority when receiving a downlink control channel in a wireless communication system according to an embodiment of the present disclosure. For example, the UE may be configured to receive a plurality of control resource sets overlapping in time in a specific PDCCH monitoring occasion 1210, and these plurality of CORESETs may be connected to a common search space or a UE-specific search space for a plurality of cells. In the corresponding PDCCH monitoring occasion, within BWP #1 1200 of cell #1, CORESET #1 1215 connected to common search space #1 may exist, and within BWP #1 1205 of cell #2, CORESET #1 1220 connected to common search space #1 and CORESET #2 1225 connected to UE-specific search space #2 may exist. The CORESETs 1215 and 1220 have a QCL-TypeD relationship with CSI-RS resource #1 configured in BWP #1 of the cell #1, and the CORESET 1225 may have a QCL-TypeD relationship with CSI-RS resource #1 configured in BWP #1 of the cell #2. Therefore, if the criterion 1 is applied to the corresponding PDCCH monitoring occasion 1210, the UE may receive all other CORESETs having the same QCL-TypeD reference signal as that of the CORESET #1 1215. Accordingly, the UE may receive the CORESETs 1215 and 1220 in the corresponding PDCCH monitoring occasion 1210. In another example, the UE may be configured to receive a plurality of CORESETs overlapping in time in a specific PDCCH monitoring occasion 1240, and these plurality of CORESETs may be connected to a common search space or LTE-specific search space for a plurality of cells. In the corresponding PDCCH monitoring occasion, within BWP #1 1230 of the cell #1, CORESET #1 1245 connected to the UE-specific search space #1 and CORESET #2 connected to the UE-specific search space #2 1250 may exist, and within BWP #1 1235 of the cell #2, CORESET #1 1255 connected to the UE-specific search space #1 and CORESET #2 1260 connected to the UE-specific search space #3 may exist. The CORESETs 1245 and 1250 may have a QCL-TypeD relationship with the CSI-RS resource #1 configured in BWP #1 of the cell #1, and CORESET 1255 may have a QCL-TypeD relationship with the CSI-RS resource #1 configured in BWP #1 of the cell #2, and the CORESET 1260 may have a QCL-TypeD relationship with the CSI-RS resource #2 configured in BWP #1 of the cell #2. However, if the criterion 1 is applied to the corresponding PDCCH monitoring occasion 1240, there is no common search space, and thus the criterion 2 which is the next criterion may be applied. If the criterion 2 is applied to the corresponding PDCCH monitoring occasion 1240, the UE may receive all other CORESETs having the same QCL-TypeD reference signal as that of the CORESET 1245. Accordingly, the UE may receive the CORESETs 1245 and 1250 in the corresponding PDCCH monitoring occasion 1240.

[Rate Matching/Puncturing Related]

Hereinafter, rate matching operation and puncturing operation will be described in detail.
When time and frequency resource A for transmission of predetermined symbol sequence A overlaps predetermined time and frequency resource B, a rate matching or puncturing operation may be considered as the transmission/reception operation of channel A in consideration of resource C corresponding to a region in which the resource A and the resource B overlap. A specific operation may follow, further to the details below.

**Rate Matching Operation**

A base station may map the channel A to the remaining resource regions except for resource C among the entire resource A for transmission of symbol sequence A to a LTE, the resource C corresponding to a region in which the resource B overlap the resource A, and transmit the same. For example, when symbol sequence A is configured by {symbol #1, symbol #2, symbol #3, symbol 4}, the resource A is configured by {resource #1, resource #2, resource #3, resource #4}, and resource B is configured by {resource #3, resource #5}, the base station may sequentially map the symbol sequence A to {resource #1, resource #2, resource #4}, which are the remaining resources except for {resource #3} corresponding to the resource C among the resource A, and transmit the same. As a result, the base station may map the symbol sequence {symbol #1, symbol #2, symbol #3} to {resource #1, resource #2, resource #4}, respectively, and transmit the same.
The UE may determine the resource A and the resource B through scheduling information for symbol sequence A from a base station, and accordingly, the UE may determine resource C corresponding to a region where the resource A and the resource B overlap. The LTE may receive the symbol sequence A based on that the symbol sequence A is mapped to the remaining regions except for the resource C among the entire resource A and transmitted. For example, when the symbol sequence A is configured by {symbol #1, symbol #2, symbol #3, symbol 4}, the resource A is configured by {resource #1, resource #2, resource #3, resource #4}, and the resource B is configured by {resource #3, resource #5}, the UE may receive the symbol sequence A based on an assumption that the symbol sequence A is sequentially mapped to the remaining resources {resource #1, resource #2, resource #4} except for {resource #3} corresponding to the resource C among the resource A. As a result, the LTE assumes that the symbol sequence {symbol #1, symbol #2, symbol #3} are mapped to {resource #1, resource #2, resource #4}, respectively, and transmitted, and may perform a subsequent series of reception operations.

**Puncturing Operation**

When there is resource C corresponding to a region in which resource B overlaps the resource A for transmission of symbol sequence A to a LTE, a base station may map the symbol sequence A to the entire resource A. However, the base station may not perform transmission in a resource region corresponding to the resource C, and may perform transmission to the remaining resource regions except for the resource C among the entire resource A. For example, when symbol sequence A is configured by {symbol #1, symbol #2, symbol #3, symbol 4}, resource A is configured by {resource #1, resource #2, resource #3, resource #4}, and resource B is configured by {resource #3, resource #5}, the base station may map the symbol sequence A {symbol #1, symbol #2, symbol #3, symbol #4} to the resource A {resource #1, resource #2, resource #3, resource #4}, respectively. Further, the base station may transmit the corresponding symbol sequence {symbol #1, symbol #2, symbol #4} to {resource #1, resource #2, resource #4}, which are the remaining resources except for {resource #3} corresponding to the resource C among the entire resource A, and may not transmit {symbol #3} mapped to {resource #3} corresponding to the resource C. As a result, the base station may map the symbol sequence {symbol #1, symbol #2, symbol #4} to {resource #1, resource #2, resource #4}, respectively, and transmit the same.

The LTE may determine the resource A and the resource B through scheduling information for symbol sequence A from the base station, and accordingly, the UE may determine the resource C corresponding to a region where the resource A and the resource B overlap. The LTE may receive the symbol sequence Abased on an assumption that the symbol sequence A is mapped to the entire resource A but transmitted in the remaining regions except for the resource C among the resource A. For example, when the symbol sequence A is configured by {symbol #1, symbol #2, symbol #3, symbol 4}, the resource A is configured by {resource #1, resource #2, resource #3, resource #4}, and the resource B is configured by {resource #3, resource #5}, the LTE may assume that the symbol sequence A {symbol #1, symbol #2, symbol #3, symbol 4} are mapped to {resource #1, resource #2, resource #3, resource #4}, respectively, and that {symbol #3} mapped to {resource #3} corresponding to resource C is not transmitted, and the LTE may receive the symbol sequence Abased on an assumption that the corresponding symbol sequence {symbol #1, symbol #2, symbol #4} are mapped to {resource #1, resource #2, resource #4}, which are the remaining resources except for {resource #3} corresponding to resource C among resource A, and transmitted. As a result, the LTE assumes that the symbol sequence {symbol #1, symbol #2, symbol #4} are mapped to {resource #1, resource #2, resource #4}, respectively, and transmitted, and may perform a subsequent series of reception operations.

Hereinafter, a method of configuring a rate matching resource to perform rate matching in a 5G communication system will be described. The rate matching refers to controlling the size of a signal by considering the amount of resources capable of transmitting the signal. For example, the rate matching of a data channel may be understood as that the size of data is adjusted without mapping and transmitting the data channel with respect to a specific time and frequency resource region.

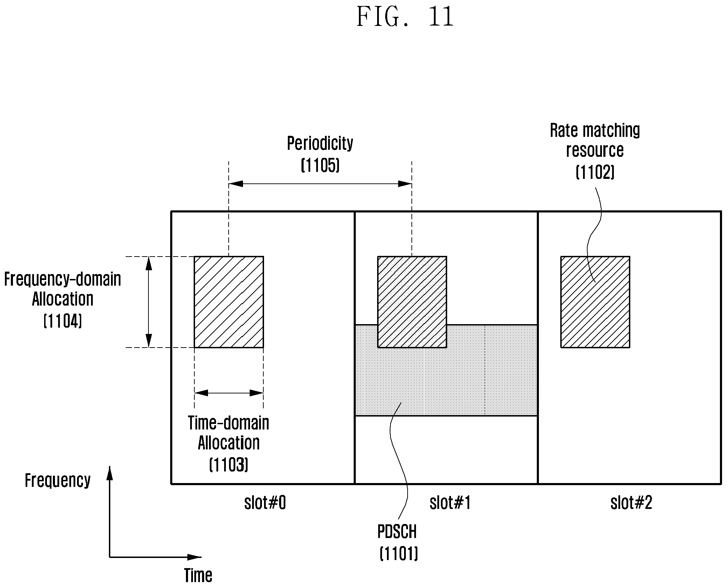

FIG. 11 illustrates a method in which a base station and a LTE perform data transmission or reception by considering a downlink data channel and a rate matching resource.

FIG. 11 shows a PDSCH 1101 and a rate matching resource 1102. The base station may configure one or more rate matching resources 1102 in the LTE through higher layer signaling (e.g., RRC signaling). The configuration information of the rate matching resource 1102 may include time-domain resource allocation information 1103, frequency-domain resource allocation information 1104, and periodicity information 1105. In the following description, a bitmap corresponding to the frequency-domain resource allocation information 1104 is called a first bitmap, a bitmap corresponding to the time-domain resource allocation information 1103 is called a second bitmap, and a bitmap corresponding to the periodicity information 1105 is called a third bitmap. If some or all of the time and frequency resources of the scheduled data channel 1101 overlap the configured rate matching resource 1102, a base station may rate-match the data channel 1101 in the rate matching resource part 1102 and transmit the same. The LTE may perform data reception and decoding after assuming that the data channel 1101 has been rate-matched in the rate matching resource part 1102.

The base station may dynamically notify the LTE of whether the data channel will be rate-matched in the configured rate matching resource part through DCI through an additional configuration (corresponding to a rate matching indicator in the DCI format described above). Specifically, the base station may select some of the configured rate matching resources, may group the selected resources into a rate matching resource group, and may indicate whether the data channel has been rate-matched with each rate matching resource group through DCI using a bitmap method to the UE. For example, when four rate matching resources RMR #1, RMR #2, RMR #3 and RMR #4 have been configured, the base station may configure RMG #1={RMR #1, RMR #2} and RMG #2={RMR #3, RMR #4} as rate matching groups, and may indicate whether rate matching in each of RMG #1 and RMG #2 has been performed using 2 bits of a DCI field to the UE in the form of a bitmap. For example, the base station may indicate '1' if rate matching should be performed, and may indicate '0' if rate matching does not need to be performed.

5G supports the granularity of "RB symbol level" and "RE level" as a method of configuring the above-described rate matching resource in the LTE, and the following configuration method may be followed.

**RB Symbol Level**

The LTE may receive up to four RateMatchPattern for each bandwidth part via higher layer signaling, and one RateMatchPattern may include the following contents.

A reserved resource in a BWP may include a resource, in which a time and frequency resource region of the corresponding reserved resource is configured as a combination of an RB-level bitmap and a symbol-level bitmap on the frequency axis. The reserved resource may span over one or two slots. The UE may be additionally configured with a time-domain pattern (periodicityAndPattern) in which the time and frequency domain including a pair of RB level and symbol level bitmaps are repeated.

A time and frequency domain resource region configured as a CONRESET in a BWP and a resource region corresponding to a time-domain pattern configured as a search space configuration in which the resource region is repeated may be included.

**RE Level**

The LTE may be configured with the following information through higher layer signaling.

The number of ports (nrofCRS-Ports) and LTE-CRS-vshift(s) value (v-shift) of LTE CRS as configuration information (lte-CRS-ToMatchAround) for RE corresponding to an LTE cell-specific reference signal or common reference signal (CRS) pattern, center subcarrier location information (carrierFreqDL) of an LTE carrier from the reference frequency point (e.g., reference point A), the bandwidth size (carrierBandwidthDL) information of the LTE carrier, subframe configuration information (mbsfn-SubframConfigList) corresponding to a multicast-broadcast single-frequency network (MBSFN), and the like, may be included. The LTE may determine the location of the CRS in the NR slot corresponding to the LTE subframe based on the above-described information.

Configuration information for a resource set corresponding to one or multiple zero power (ZP) CSI-RSs in the bandwidth part may be included.

[LTE CRS Rate Match Related]

Next, the rate match process for the above-described LTE CRS will be described in detail. For the coexistence of long term evolution (LTE) and new RAT (NR) (LTE-NR coexistence), NR provides a function of configuring a cell specific reference signal pattern of LTE to an NR LTE. Specifically, the CRS pattern may be provided by RRC signaling including at least one parameter in ServingCellConfig information element (IE) or ServingCellConfigCommon IE. The parameter may include lte-CRS-ToMatchAround, lte-CRS-PatternList1-r16, lte-CRS-PatternList2-r16, crs-RateMatch-PerCORESETPoolIndex-r16, and the like, for example.

Rel-15 NR provides a function in which one CRS pattern can be configured per serving cell through the lte-CRS-ToMatchAround parameter. In Rel-16 NR, the above function has been extended to enable configuration of a plurality of CRS patterns per serving cell. Specifically, one CRS pattern per one LTE carrier may be configured in a single transmission and reception point (TRP) configured LTE, and two CRS patterns per one LTE carrier may be configured in a multi-TRP configured UE. For example, in the single-TRP configured LTE, up to three CRS patterns per serving cell may be configured through the lte-CRS-PatternList1-r16 parameter. For another example, a CRS may be configured for each TRP in the multi-TRP configured LTE. That is, a CRS pattern for TRP1 may be configured through the lte-CRS-PatternList1-r16 parameter, and a CRS pattern for TRP2 may be configured through the lte-CRS-PatternList2-r16 parameter. On the other hand, when two TRPs are configured as described above, whether to apply both the CRS patterns of TRP1 and TRP2 to a specific PDSCH or whether to apply only the CRS pattern for one TRP is determined through crs-RateMatch-PerCORESETPoolIndex-r16 parameter. When the crs-RateMatch-PerCORESETPoolIndex-r16 parameter is configured to be enabled, only one TRP CRS pattern is applied, and in other cases, both TRP CRS patterns are applied.

Table 17 shows the ServingCellConfig IE including the CRS pattern, and Table 18 shows the RateMatchPatternLTE-CRS IE including at least one parameter for the CRS pattern.

[Table 17]

```
ServingCellConfig ::=                    SEQUENCE {
      tdd-UL-DL-ConfigurationDedicated     TDD-UL-DL-ConfigDedicated
OPTIONAL,     -- Cond TDD
      initialDownlinkBWP                        BWP-DownlinkDedicated
OPTIONAL,     -- Need M
      downlinkBWP-ToReleaseList            SEQUENCE (SIZE (1..maxNrofBWPs))
OF BWP-Id                                 OPTIONAL,     -- Need N
      downlinkBWP-ToAddModList            SEQUENCE (SIZE
(1..maxNrofBWPs)) OF BWP-Downlink                              OPTIONAL,     --
Need N
      firstActiveDownlinkBWP-Id          BWP-Id
OPTIONAL,     -- Cond SyncAndCellAdd
```

```
        bwp-InactivityTimer                 ENUMERATED {ms2, ms3, ms4, ms5,
ms6, ms8, ms10, ms20, ms30,
                                                      ms40,ms50, ms60,
ms80,ms100, ms200,ms300, ms500,
                                                      ms750, ms1280, ms1920,
ms2560, spare10, spare9, spare8,
                                                      spare7, spare6, spare5,
spare4, spare3, spare2, spare1 }    OPTIONAL,    --Need R
        defaultDownlinkBWP-Id               BWP-Id
OPTIONAL,    -- Need S
        uplinkConfig                        UplinkConfig
OPTIONAL,    -- Need M
        supplementaryUplink                 UplinkConfig
OPTIONAL,    -- Need M
        pdcch-ServingCellConfig             SetupRelease { PDCCH-
ServingCellConfig }                               OPTIONAL,    -- Need M
        pdsch-ServingCellConfig             SetupRelease { PDSCH-
ServingCellConfig }                               OPTIONAL,    -- Need M
        csi-MeasConfig                      SetupRelease { CSI-MeasConfig }
OPTIONAL,    -- Need M
        sCellDeactivationTimer              ENUMERATED {ms20, ms40, ms80,
ms160, ms200, ms240,
                                                      ms320, ms400, ms480,
ms520, ms640, ms720,
                                                      ms840, ms1280,
spare2,spare1}          OPTIONAL,    -- Cond ServingCellWithoutPUCCH
        crossCarrierSchedulingConfig        CrossCarrierSchedulingConfig
OPTIONAL,    -- Need M
        tag-Id                              TAG-Id,
        dummy                               ENUMERATED {enabled}
OPTIONAL,    -- Need R
```

```
        pathlossReferenceLinking                ENUMERATED {spCell, sCell}
OPTIONAL,      -- Cond SCellOnly
        servingCellMO                           MeasObjectId
OPTIONAL,      -- Cond MeasObject

        ...,
        [[
        lte-CRS-ToMatchAround                   SetupRelease { RateMatchPatternLTE-
CRS }                                           OPTIONAL,     -- Need M
        rateMatchPatternToAddModList            SEQUENCE (SIZE
(1..maxNrofRateMatchPatterns)) OF RateMatchPattern         OPTIONAL,     -- Need N
        rateMatchPatternToReleaseList           SEQUENCE (SIZE
(1..maxNrofRateMatchPatterns)) OF RateMatchPatternId       OPTIONAL,     -- Need N
        downlinkChannelBW-PerSCS-List           SEQUENCE (SIZE (1..maxSCSs)) OF
SCS-SpecificCarrier                             OPTIONAL      -- Need S
        ]],
        [[
        supplementaryUplinkRelease              ENUMERATED {true}
OPTIONAL,      -- Need N
        tdd-UL-DL-ConfigurationDedicated-IAB-MT-r16        TDD-UL-DL-
ConfigDedicated-IAB-MT-r16                                  OPTIONAL,     -- Cond
TDD_IAB
        dormantBWP-Config-r16                   SetupRelease { DormantBWP-Config-
r16 }                                           OPTIONAL,     -- Need M
        ca-SlotOffset-r16                       CHOICE {
            refSCS15kHz                             INTEGER (-2..2),
            refSCS30KHz                             INTEGER (-5..5),
            refSCS60KHz                             INTEGER (-10..10),
            refSCS120KHz                            INTEGER (-20..20)
        }
OPTIONAL,      -- Cond AsyncCA
        channelAccessConfig-r16                 SetupRelease { ChannelAccessConfig-r16 }
OPTIONAL,      -- Need M
```

```
        intraCellGuardBandsDL-List-r16          SEQUENCE (SIZE (1..maxSCSs)) OF
IntraCellGuardBandsPerSCS-r16                    OPTIONAL,     -- Need S
        intraCellGuardBandsUL-List-r16          SEQUENCE (SIZE (1..maxSCSs)) OF
IntraCellGuardBandsPerSCS-r16                    OPTIONAL,     -- Need S
        csi-RS-ValidationWith-DCI-r16           ENUMERATED {enabled}
OPTIONAL,     -- Need R
        lte-CRS-PatternList1-r16                SetupRelease { LTE-CRS-PatternList-r16 }
OPTIONAL,     -- Need M
        lte-CRS-PatternList2-r16                SetupRelease { LTE-CRS-PatternList-r16 }
OPTIONAL,     -- Need M
        crs-RateMatch-PerCORESETPoolIndex-r16   ENUMERATED {enabled}
OPTIONAL,     -- Need R
        enableTwoDefaultTCI-States-r16          ENUMERATED {enabled}
OPTIONAL,     -- Need R
        enableDefaultTCI-StatePerCoresetPoolIndex-r16 ENUMERATED {enabled}
OPTIONAL,     -- Need R
        enableBeamSwitchTiming-r16              ENUMERATED {true}
OPTIONAL,     -- Need R
        cbg-TxDiffTBsProcessingType1-r16        ENUMERATED {enabled}
OPTIONAL,     -- Need R
        cbg-TxDiffTBsProcessingType2-r16        ENUMERATED {enabled}
OPTIONAL      -- Need R
    ]]
}
```

[Table 18]

–   *RateMatchPatternLTE-CRS*

The IE *RateMatchPatternLTE-CRS* is used to configure a pattern to rate match around LTE CRS. See TS 38.214 [19], clause 5.1.4.2.

*RateMatchPatternLTE-CRS* **information element**

-- ASN1START

-- TAG-RATEMATCHPATTERNLTE-CRS-START

```
RateMatchPatternLTE-CRS ::=              SEQUENCE {
    carrierFreqDL                            INTEGER (0..16383),
    carrierBandwidthDL                       ENUMERATED {n6, n15, n25, n50, n75,
n100, spare2, spare1},
    mbsfn-SubframeConfigList                 EUTRA-MBSFN-SubframeConfigList
OPTIONAL,      -- Need M
    nrofCRS-Ports                            ENUMERATED {n1, n2, n4},
    v-Shift                                  ENUMERATED {n0, n1, n2, n3, n4, n5}
}


LTE-CRS-PatternList-r16 ::=              SEQUENCE (SIZE (1..maxLTE-CRS-Patterns-r16))
OF RateMatchPatternLTE-CRS


-- TAG-RATEMATCHPATTERNLTE-CRS-STOP
-- ASN1STOP
```

| *RateMatchPatternLTE-CRS* field descriptions |
|---|
| *carrierBandwidthDL*<br>BW of the LTE carrier in number of PRBs (see TS 38.214 [19], clause 5.1.4.2). |
| *carrierFreqDL*<br>Center of the LTE carrier (see TS 38.214 [19], clause 5.1.4.2). |
| *mbsfn-SubframeConfigList*<br>LTE MBSFN subframe configuration (see TS 38.214 [19], clause 5.1.4.2). |
| *nrofCRS-Ports*<br>Number of LTE CRS antenna port to rate-match around (see TS 38.214 [19], clause 5.1.4.2). |
| *v-Shift*<br>Shifting value v-shift in LTE to rate match around LTE CRS (see TS 38.214 [19], clause 5.1.4.2). |

[PDSCH: Frequency-Domain Resource Allocation Related]

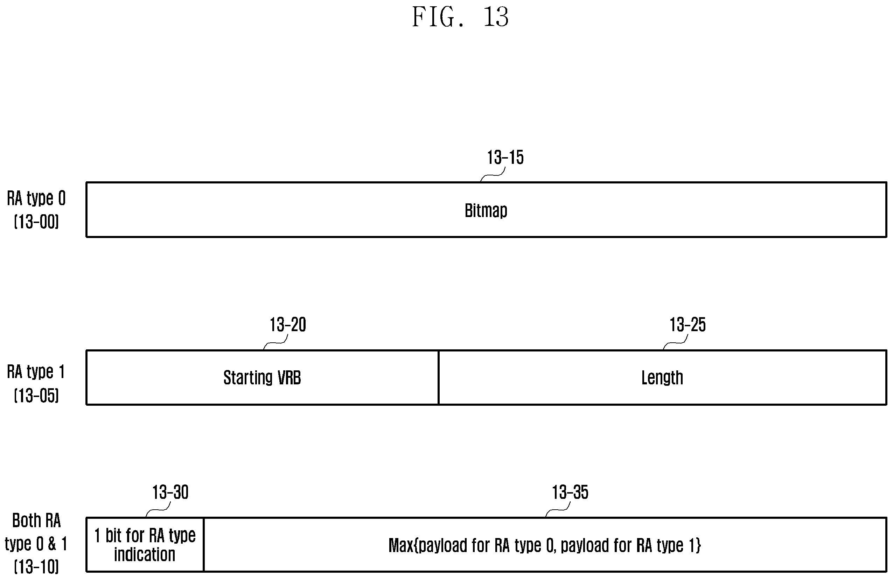

FIG. 13 illustrates an example of frequency-domain resource allocation of a PDSCH in a wireless communication system according to an embodiment of the present disclosure.

FIG. 13 shows three frequency-domain resource allocation methods of type 0 (13-00), type 1 (13-05), and dynamic switch (13-10) configurable through a higher layer in an NR wireless communication system.

Referring to FIG. 13, if a LTE is configured to use only resource type 0 via higher layer signaling (13-00), some DCI for allocation of PDSCH to the corresponding LTE includes a bitmap formed of non-deterministic random generator (NRBG) bits, with NRBG denoting the number of resource block groups (RBGs) determined further to Table 19 below, according to a BWP size allocated by a BWP indicator and a higher layer parameter rbg-Size, and data is transmitted to RBG indicated as ' 1' in the bitmap.

[Table 19]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

If the LTE is configured to use only resource type 1 via higher layer signaling (13-05), some DCI for allocation of the PDSCH to the LTE includes frequency-domain resource allocation information configured by

$$\lceil \log_2 (N_{RB}^{DL,BWP} (N_{RB}^{DL,BWP} +1)/2 \rceil$$

bits. Through this information, the base station may configure a starting VRB 13-20 and the length of frequency-domain resources 13-25 continuously allocated therefrom.

If the LTE is configured to use both resource type 0 and resource type 1 via higher layer signaling (13-10), some DCI for allocation of PDSCH to the LTE includes frequency-domain resource allocation information configured by bits of a greater value 13-35 among a payload 13-15 for configuration of resource type 0 and payloads 13-20 and 13-25 for configuration of resource type 1, a condition for which will be described later. Here, one bit is added to the most significant bit (MSB) of the frequency-domain resource allocation information in the DCI, if the corresponding bit has a value of '0', it indicates that resource type 0 is used, and if the corresponding bit has a value of '1', it indicates that resource type 1 is used.

[PDSCH/PUSCH: Time-Domain Resource Allocation Related]

Hereinafter, a method of allocating time domain resources for a data channel in a next-generation mobile communication system (5G or NR system) will be described.

A base station may configure, for a UE, a table for time-domain resource allocation information for a downlink data channel (PDSCH) and an uplink data channel (PUSCH) via higher layer signaling (e.g., RRC signaling). For PDSCH, a table including maxNrofDL-Allocations=16 entries may be configured, and for PUSCH, a table including maxNrofUL-Allocations=16 entries may be configured. In an embodiment, the time-domain resource allocation information may include PDCCH-to-PDSCH slot timing (corresponding to a time interval in slot units between a time point at which a PDCCH is received and a time point at which a PDSCH scheduled by the received PDCCH is transmitted, and denoted by K0), PDCCH-to-PUSCH slot timing (corresponding to a time interval in slot units between a time point at which a PDCCH is received and a time point at which a PUSCH scheduled by the received PDCCH is transmitted, and denoted by K2), information on the position and length of a start symbol in which the PDSCH or PUSCH is scheduled within a slot, a mapping type of PDSCH or PUSCH, and the like. For example, information such as Table 20 or Table 21 below may be transmitted from the base station to the UE.

[Table 20]

| *PDSCH-TimeDomainResourceAllocationList* information element |
| --- |
| PDSCH-TimeDomainResourceAllocationList ::=    SEQUENCE (SIZE(1..maxNrofDL-Allocations)) OF PDSCH-TimeDomainResourceAllocation<br><br>PDSCH-TimeDomainResourceAllocation ::=    SEQUENCE {<br>   k0                                                                                         INTEGER(0..32)<br>OPTIONAL,      -- Need S<br>     mappingType                                                         ENUMERATED {typeA, typeB},<br>     startSymbolAndLength                                           INTEGER (0..127)<br>} |

[Table 21]

| *PUSCH-TimeDomainResourceAllocation* information element |
| --- |
| PUSCH-TimeDomainResourceAllocationList ::=    SEQUENCE (SIZE(1..maxNrofUL-Allocations)) OF PUSCH-TimeDomainResourceAllocation<br><br>PUSCH-TimeDomainResourceAllocation ::=   SEQUENCE {<br>   k2                                                                                          INTEGER(0..32)<br>OPTIONAL,      -- Need S<br>     mappingType                                                          ENUMERATED {typeA, typeB},<br>     startSymbolAndLength                                            INTEGER (0..127)<br>} |

The base station may notify one of the entries in the above-described table representing the time-domain resource allocation information to the LTE via L1 signaling (e.g., DCI) (e.g., may be indicated by a 'time-domain resource allocation' field in DCI). The LTE may acquire time-domain resource allocation information for the PDSCH or PUSCH based on the DCI received from the base station.

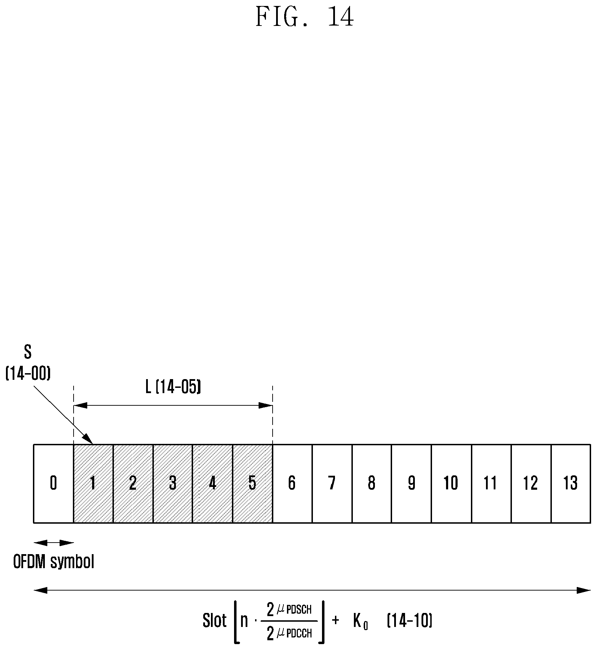

FIG. 14 illustrates an example of time-domain resource allocation of a PDSCH in a wireless communication system according to an embodiment of the present disclosure.

Referring to FIG. 14, a base station may indicate a time-domain position of a PDSCH resource according to a start position 14-00 and a length 14-05 of an OFDM symbol in one slot 14-10 dynamically indicated based on the subcarrier spacing (SCS) ($\mu_{PDSCH}$, $\mu_{PDCCH}$) of a data channel and a control channel configured using a higher layer, a scheduling offset (K0) value, and DCI.

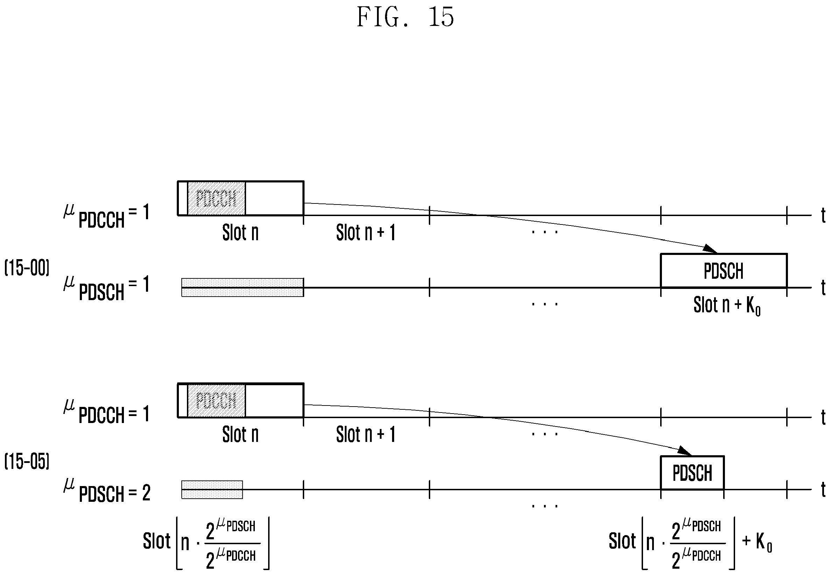

FIG. 15 illustrates an example of time-domain resource allocation according to the subcarrier spacings of a data channel and a control channel in a wireless communication system according to an embodiment of the present disclosure.

Referring to FIG. 15, if a data channel and a control channel have the same subcarrier spacing (15-00, $\mu_{PDSCH}$ = $\mu_{PDCCH}$), since a data slot number and a control slot number are the same, a base station and a LTE may generate a scheduling offset adjusted according to predetermined slot offset K0. On the other hand, when the subcarrier spacing of the data channel and the subcarrier spacing of the control channel are different (15-05, $\mu_{PDSCH} \neq \mu_{PDCCH}$), since a data slot number and a control slot number are different, the base station and the LTE may generate a scheduling offset adjusted according to the predetermined slot offset K0 based on the subcarrier spacing of the PDCCH.

[PDSCH: Processing Procedure Time]

Next, PDSCH processing procedure time will be described. When the base station is configured to schedule transmission of a PDSCH using DCI format 1_0, 1_1, or 1_2 to the UE, the UE may require a PDSCH processing procedure time for reception of the PDSCH by applying transmission methods indicated through DCI (modulation/demodulation and coding indication index (MCS), demodulation reference signal related information, time and frequency resource allocation information, etc.) In NR, the PDSCH processing procedure time is defined in consideration of the above methods. The PDSCH processing procedure time of LTE may follow Equation 3 below.

$$[Equation\ 3]$$

$$T_{proc,1} = ( N_1 + d_{1,1} + d_2)( 2048 + 144 )\, \kappa 2^{-\mu} T_c + T_{ext}$$

Each variable in $T_{proc,1}$ described by Equation 3 may have the following meaning.

$N_1$: The number of symbols determined according to numerology $\mu$ and LTE processing capability 1 or 2 according to the LTE capability. When LTE processing capability 1 is reported according to UE capability report (in case of PDSCH processing capability 1), $N_1$ may have the value in Table 22, and when LTE processing capability 2 is reported and it is configured via higher layer signaling that LTE processing capability 2 can be used (in case of PDSCH processing capability 2), $N_1$ may have the value in Table 23. The numerology $\mu$ may correspond to the minimum value among $\mu_{PDCCH}$, $\mu_{PDSCH}$, and $\mu_{UL}$ so as to maximize the $T_{proc,1}$, and $\mu_{PDCCH}$, $\mu_{PDSCH}$, and $\mu_{UL}$ may refer to the numerology of a PDCCH for scheduling of a PDSCH, the numerology of the scheduled PDSCH, and the numerology of an uplink channel through which HARQ-ACK is to be transmitted, respectively.

[Table 22] PDSCH processing time in case of PDSCH processing capability 1

| | PDSCH decoding time $N_1$ [symbols] | |
|---|---|---|
| $\mu$ | In case that both PDSCH mapping type A and B are dmrs-AdditionalPosition = pos0 in higher layer signaling DMRS-DownlinkConfig | In case that both PDSCH mapping types A and B are not dmrs-AdditionalPosition = pos0 in higher layer signaling DMRS-DownlinkConfig, or that no higher layer parameters are configured |
| 0 | 8 | $N_{1,0}$ |
| 1 | 10 | 13 |
| 2 | 17 | 20 |
| 3 | 20 | 24 |

[Table 23] PDSCH processing time in case of PDSCH processing capability 2

| $\mu$ | PDSCH decoding time $N_1$ [symbols] |
|---|---|
| | In case that both PDSCH mapping type A and B are dmrs-AdditionalPosition = pos0 in higher layer signaling DMRS-DownlinkConfig |
| 0 | 3 |
| 1 | 4.5 |

(continued)

| μ | PDSCH decoding time $N_1$ [symbols] |
|---|---|
| | In case that both PDSCH mapping type A and B are dmrs-AdditionalPosition = pos0 in higher layer signaling DMRS-DownlinkConfig |
| 2 | 9 for frequency range 1 |

$\kappa$: 64

$T_{ext}$: When the LTE uses a shared spectrum channel access method, the LTE may calculate $T_{ext}$ and apply the calculated text to PUSCH preparation procedure time. Otherwise, $T_{ext}$ is assumed to be 0.

If $I_1$ indicating the position value of PDSCH DMRS is 12, $N_{1,0}$ of Table 22 has the value of 14, otherwise $I_1$ has the value of 13.

With regard to PDSCH mapping type A, the last symbol of the PDSCH is the i-th symbol in the slot in which the PDSCH is transmitted, and if i<7, $d_{1,1}$ is 7-i, otherwise $d_{1,1}$ has the value of 0.

$d_2$: When a PUCCH having a high priority index and a PUCCH or PUSCH having a low priority index overlap in time, $d_2$ of the PUCCH having a high priority index may be configured to be a value reported by the UE. Otherwise, $d_2$ has the value of 0.

When PDSCH mapping type B is used for UE processing capability 1, the value of $d_{1,1}$ may be determined according to L, which is the number of symbols of the scheduled PDSCH, and d, which is the number of overlapping symbols between a PDCCH scheduling the PDSCH and the scheduled PDSCH, as follows.

If $L \geq 7$, then $d_{1,1}$=0.
If $L \geq 4$ and $L \leq 6$, then $d_{1,1}$=7-L.
If L=3, then $d_{1,1}$=min (d, 1).
If L=2, then $d_{1,1}$=3+d.

When PDSCH mapping type B is used for UE processing capability 2, the value of $d_{1,1}$ may be determined according to L, which is the number of symbols of the scheduled PDSCH, and d, which is the number of overlapping symbols between a PDCCH scheduling the PDSCH and the scheduled PDSCH, as follows.

If $L \geq 7$, then $d_{1,1}$=0.
If $L \geq 4$ and $L \leq 6$, then $d_{1,1}$=7-L.
If L=2,

If the scheduled PDCCH exists in a CORESET configured by three symbols, and the corresponding CORESET and the scheduled PDSCH have the same start symbol, $d_{1,1}$=3.

Otherwise, $d_{1,1}$=d.

In a case of a UE supporting capability 2 in a given serving cell, the PDSCH processing time according to LTE processing capability 2 may be applied when the LTE is configured such that processingType2Enabled which is higher layer signaling with regard to the cell to be an enable state.

If the position of the first uplink transmission symbol of the PUCCH including HARQ-ACK information (in the corresponding position, $K_1$ defined as the transmission time of HARQ-ACK, a PUCCH resource used for HARQ-ACK transmission, and timing advance effect may be considered) is not started before the first uplink transmission symbol that appears after a time equal to $T_{proc,1}$ from the last symbol of the PDSCH, the LTE should transmit a valid HARQ-ACK message. That is, the LTE should transmit the PUCCH including HARQ-ACK only when a PDSCH processing time is sufficient. Otherwise, the LTE may not provide the base station with valid HARQ-ACK information corresponding to the scheduled PDSCH. The $T_{proc,1}$ may be used for both normal or extended CP. In case of a PDSCH configured by two PDSCH transmission occasions in one slot, $d_{1,1}$ is calculated based on the first PDSCH transmission occasion in the corresponding slot.

[PDSCH: Reception Preparation Time during Cross-Carrier Scheduling]

Next, in case that $\mu_{PDCCH}$, which is numerology for transmission of a scheduling PDCCH, and $\mu_{PDSCH}$, which is numerology for transmission of a PDSCH scheduled through the corresponding PDCCH, are different cross-carrier scheduling, $N_{pdsch}$, which is the PDSCH reception preparation time of the LTE defined for a time interval between the PDCCH and the PDSCH, will be described.

If $\mu_{PDCCH} < \mu_{PDSCH}$, the scheduled PDSCH cannot be transmitted earlier than the first symbol of a slot appearing after the $N_{pdsch}$ symbol from the last symbol of the PDCCH for which the PDSCH is scheduled. A transmission symbol of the corresponding PDSCH may include a DM-RS.

If $\mu_{PDCCH} > \mu_{PDSCH}$, the scheduled PDSCH may be transmitted after the $N_{pdsch}$ symbol from the last symbol of the PDCCH for which the corresponding PDSCH is scheduled. A transmission symbol of the corresponding PDSCH may include a DM-RS.

[Table 24] $N_{pdsch}$ according to the scheduled PDCCH subcarrier spacing

| $\mu_{PDCCH}$ | $N_{pdsch}$ [symbols] |
|---|---|
| 0 | 4 |
| 1 | 5 |
| 2 | 10 |
| 3 | 14 |

[PDSCH: TCI State Activation MAC-CE]

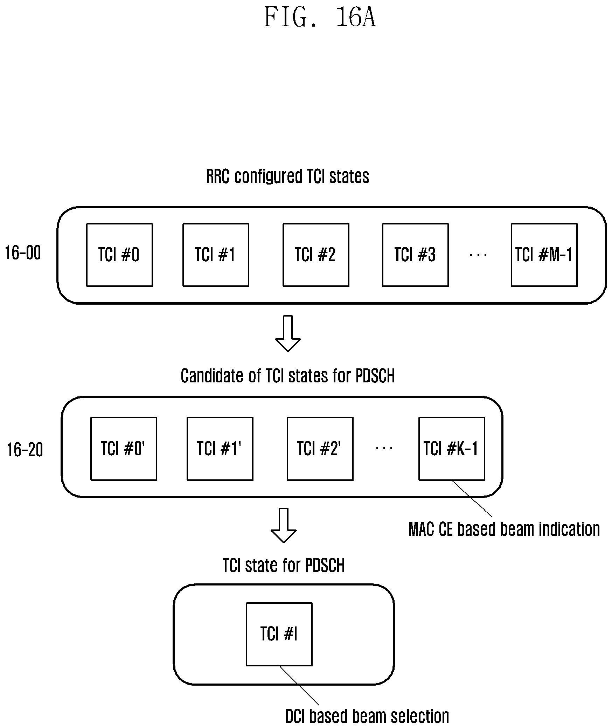

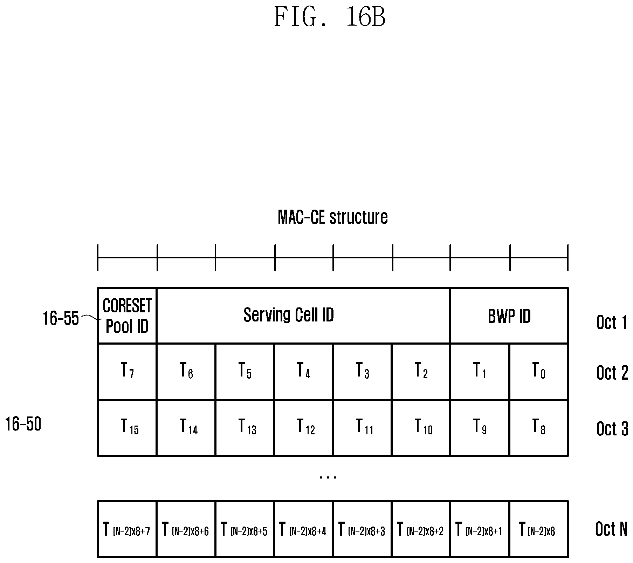

Next, a beam configuration method for a PDSCH will be described. FIGS. 16A and 16B illustrate a procedure for beam configuration and activation of a PDSCH. A list of TCI states for a PDSCH may be indicated through a higher layer list such as RRC (16-00). The list of TCI states may be indicated by, for example, tci-StatesToAddModList and/or tci-StatesToReleaseList in PDSCH-Config IE for each BWP. Next, a part of the list of the TCI states may be activated through the MAC-CE (16-20). The maximum number of activated TCI states may be determined according to the capability reported by a LTE. Reference numeral 16-50 shows an example of a MAC-CE structure for PDSCH TCI state activation/deactivation.

The meaning of each field in the MAC CE and values configurable for each field are as follows.

- **Serving Cell ID:** This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;

- **BWP ID:** This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;

- $T_i$: If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with $T_i$ field set to 1 shall be mapped to the codepoint value 0, second TCI State with Ti field set to 1 shall be mapped to the codepoint value 1 and so on. The maximum number of activated TCI states is 8;

- **CORESET Pool ID:** This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[SRS Related]

Next, a method for estimating an uplink channel by using a sounding reference signal (SRS) transmission of the LTE will be described. The base station may configure at least one SRS configuration for each uplink BWP in order to transfer configuration information for SRS transmission to the LTE, and may configure at least one SRS resource set for each SRS configuration. As an example, the base station and the LTE may exchange higher layer signaling information as follows in order to transfer information about the SRS resource set.

srs-ResourceSetId: SRS resource set index
srs-ResourceIdList: A set of SRS resource indexes referenced in the SRS resource set
resourceType: This is the time-domain transmission configuration of the SRS resource referenced in the SRS resource set, and may be configured as one of 'periodic', 'semi-persistent', and 'aperiodic'. If it is configured as 'periodic' or 'semi-persistent', the associated CSI-RS information may be provided according to the usage of the SRS resource set. If it is configured as 'aperiodic', an aperiodic SRS resource trigger list and slot offset information may be provided, and associated CSI-RS information may be provided according to the usage of the SRS resource set.
usage: It is a configuration for the usage of the SRS resource referenced in the SRS resource set, and may be configured as one of 'beamManagement', 'codebook', 'nonCodebook', and 'antennaSwitching'.
alpha, p0, pathlossReferenceRS, srs-PowerControlAdjustmentStates: It provides parameter configurations for adjusting the transmit power of the SRS resource referenced in the SRS resource set.

The LTE may understand that the SRS resource included in the set of SRS resource indexes referenced in the SRS resource set follows the information configured in the SRS resource set.

In addition, the base station and the LTE may transmit or receive higher layer signaling information in order to transfer individual configuration information for the SRS resource. As an example, the individual configuration information for the SRS resource may include time-frequency domain mapping information in a slot of the SRS resource, and this may include information about intra-slot or inter-slot frequency hopping of the SRS resource. In addition, the individual configuration information for the SRS resource may include the time-domain transmission configuration of the SRS resource, and may be configured as one of 'periodic', 'semi-persistent', and 'aperiodic'. The individual configuration information may be limited to have the same time-domain transmission configuration as the SRS resource set including the SRS resource. If the time-domain transmission configuration of the SRS resource is configured as 'periodic' or 'semi-persistent', the SRS resource transmission period and slot offset (e.g., periodicityAndOffset) may be additionally included in the time-domain transmission configuration.

The base station may activate, deactivate, or trigger SRS transmission to the LTE via higher layer signaling including RRC signaling or MAC CE signaling, or L1 signaling (e.g., DCI). For example, the base station may activate or deactivate periodic SRS transmission to the LTE via higher layer signaling. The base station may indicate the UE to activate the SRS resource set, in which the resource Type is configured as periodic, via higher layer signaling, and the LTE may transmit the SRS resource referenced in the activated SRS resource set. The time-frequency domain resource mapping in a slot of the transmitted SRS resource follows the resource mapping information configured in the SRS resource, and the slot mapping including the transmission period and the slot offset follows the periodicityAndOffset configured in the SRS resource. In addition, the spatial domain transmission filter applied to the SRS resource to be transmitted may refer to spatial relation info configured in the SRS resource, or may refer to associated CSI-RS information configured in the SRS resource set including the SRS resource. The UE may transmit the SRS resource within the uplink BWP activated for the periodic SRS resource activated via higher layer signaling.

For example, the base station may activate or deactivate semi-persistent SRS transmission to the LTE via higher layer signaling. The base station may indicate to activate the SRS resource set through MAC CE signaling, and the LTE may transmit the SRS resource referenced in the activated SRS resource set. The SRS resource set activated through MAC CE signaling may be limited to the SRS resource set in which the resource Type is configured to be semi-persistent. The time-frequency domain resource mapping in a slot of the SRS resource to be transmitted follows the resource mapping information configured in the SRS resource, and the slot mapping including the transmission period and the slot offset follows the periodicityAndOffset configured in the SRS resource. In addition, the spatial domain transmission filter applied to the SRS resource to be transmitted may refer to spatial relation info configured in the SRS resource, or may refer to associated CSI-RS information configured in the SRS resource set including the SRS resource. If spatial relation info is configured in the SRS resource, a spatial domain transmission filter may be determined, not based on the configured spatial relation info, but by referring to configuration information for the spatial relation information transferred through MAC CE signaling that activates semi-persistent SRS transmission. The LTE may transmit the SRS resource in the uplink BWP activated for the semi-persistent SRS resource activated via higher layer signaling.

For example, the base station may trigger aperiodic SRS transmission to the LTE through DCI. The base station may indicate one of aperiodic SRS resource triggers (aperiodicSRS-ResourceTrigger) through an SRS request field of DCI. The LTE may understand that the SRS resource set including the aperiodic SRS resource trigger indicated through DCI in the aperiodic SRS resource trigger list, among the configuration information of the SRS resource set, is triggered. The UE may transmit the SRS resource referenced in the triggered SRS resource set. The time-frequency domain resource mapping in the slot of the SRS resource to be transmitted follows the resource mapping information configured in the SRS resource. In addition, the slot mapping of the SRS resource to be transmitted may be determined through the slot offset between the PDCCH including DCI and the SRS resource, and the slot offset may refer to the value(s) included in the slot offset set configured in the SRS resource set. Specifically, the slot offset between the PDCCH including DCI and the SRS resource may be applied with a value indicated in the time domain resource assignment field of DCI among the offset value(s) included in the slot offset set configured in the SRS resource set. In addition, the spatial domain transmission filter applied to the SRS resource to be transmitted may refer to spatial relation info configured in the SRS resource, or may refer to associated CSI-RS information configured in the SRS resource set including the SRS resource. The LTE may transmit the SRS resource in the uplink BWP activated for the aperiodic SRS resource triggered through DCI.

When the base station triggers aperiodic SRS transmission to the UE through DCI, in order for the LTE to transmit the SRS by applying the configuration information for the SRS resource thereto, the minimum time interval between the PDCCH including the DCI for triggering the aperiodic SRS transmission and the transmitted SRS may be used. The time interval for SRS transmission of the LTE may be the number of symbols between the first symbol to which the SRS resource, which is transmitted first among the transmitted SRS resource(s), is mapped, and the last symbol of the PDCCH including the DCI for triggering aperiodic SRS transmission. The minimum time interval may be determined by making reference to PUSCH preparation procedure time used for LTE to prepare PUSCH transmission. In addition, the minimum time interval may have a different value depending on the usage of the SRS resource set including the transmitted SRS resource. For example, the minimum time interval may be determined as an N2 symbol in consideration of the LTE processing capability according to the LTE capability by making reference to the PUSCH preparation procedure time of the UE. In addition, if the usage of the SRS resource set is configured as 'codebook' or 'antennaSwitching' by considering the usage of the SRS resource set including the transmitted SRS resource, the minimum time interval is configured to be N2 symbol, and if the usage of the SRS resource set is configured as 'non-Codebook' or 'beamManagement', the minimum time interval may be determined to be the N2+14 symbol. If the time interval for a periodic SRS transmission is greater than or equal to the minimum time interval, the LTE may transmit the aperiodic SRS, and if the time interval for aperiodic SRS transmission is less than the minimum time interval, the LTE may ignore DCI for triggering the aperiodic SRS.

[Table 25]

```
SRS-Resource ::=                              SEQUENCE {
    srs-ResourceId                                SRS-ResourceId,
    nrofSRS-Ports                                 ENUMERATED {port1,
ports2, ports4},
    ptrs-PortIndex                                ENUMERATED {n0, n1 }
OPTIONAL,      -- Need R
    transmissionComb                              CHOICE {
        n2                                            SEQUENCE {
            combOffset-n2                                 INTEGER (0..1),
            cyclicShift-n2                                INTEGER (0..7)
        },
        n4                                            SEQUENCE {
            combOffset-n4                                 INTEGER (0..3),
            cyclicShift-n4                                INTEGER (0..11)
        }
    },
    resourceMapping                               SEQUENCE {
        startPosition                                 INTEGER (0..5),
        nrofSymbols                                   ENUMERATED {n1, n2,
n4},
```

```
        repetitionFactor                          ENUMERATED {n1, n2,
n4}
    },
    freqDomainPosition                            INTEGER (0..67),
    freqDomainShift                               INTEGER (0..268),
    freqHopping                                   SEQUENCE {
        c-SRS                                         INTEGER (0..63),
        b-SRS                                         INTEGER (0..3),
        b-hop                                         INTEGER (0..3)
    },
    groupOrSequenceHopping                        ENUMERATED { neither,
groupHopping, sequenceHopping },
    resourceType                                  CHOICE {
        aperiodic                                     SEQUENCE {
            ...
        },
        semi-persistent                           SEQUENCE {
            periodicityAndOffset-sp                   SRS-
PeriodicityAndOffset,
            ...
        },
        periodic                                  SEQUENCE {
            periodicityAndOffset-p                    SRS-
PeriodicityAndOffset,
            ...
        }
    },
    sequenceId                                    INTEGER (0..1023),
    spatialRelationInfo                           SRS-SpatialRelationInfo
OPTIONAL,    -- Need R
    ...
}
```

The spatial RelationInfo configuration information in Table 25 is allowed to be applied to the beam information of the reference signal and a beam used for the corresponding SRS transmission by referring to one reference signal. For example, the configuration of spatialRelationInfo may include information as shown in Table 26 below.

[Table 26]

```
SRS-SpatialRelationInfo ::=        SEQUENCE {
       servingCellId                         ServCellIndex
OPTIONAL,      -- Need S
       referenceSignal                       CHOICE {
            ssb-Index                              SSB-Index,
            csi-RS-Index                           NZP-CSI-RS-ResourceId,
            srs                                    SEQUENCE {
                 resourceId                             SRS-ResourceId,
                 uplinkBWP                              BWP-Id
            }
       }
}
```

Referring to the spatialRelationInfo configuration, an SS/PBCH block index, CSI-RS index, or SRS index may be configured as an index of a reference signal to be referenced in order to use beam information of a specific reference signal. The higher layer signaling referenceSignal is configuration information indicating which reference signal beam information is to be referred to for the corresponding SRS transmission, ssb-index denotes the index of the SS/PBCH block, csi-RS-Index denotes the index of the CSI-RS, and srs denotes the index of the SRS. If the value of the higher layer signaling referenceSignal is configured as 'ssb-Index', the LTE may apply a reception beam used when receiving the SS/PBCH block corresponding to the ssb-Index as a transmission beam of the corresponding SRS transmission. If the value of the higher layer signaling referenceSignal is configured as 'csi-RS-Index', the LTE may apply a reception beam used when receiving the CSI-RS corresponding to the csi-RS-Index as a transmission beam of the corresponding SRS transmission. If the value of the higher layer signaling referenceSignal is configured as 'srs', the LTE may apply a transmission beam used when transmitting the SRS corresponding to srs as a transmission beam of the corresponding SRS transmission.

[PUSCH: Transmission Method Related]

Next, a scheduling scheme of PUSCH transmission will be described. PUSCH transmission may be dynamically scheduled by a UL grant in DCI or may be operated by a configured grant Type 1 or Type 2. Dynamic scheduling indication for PUSCH transmission is possible using DCI format 0_0 or 0_1.

Configured grant Type 1 PUSCH transmission does not receive a UL grant in DCI, and may be semi-statically configured through reception of configuredGrantConfig including rrc-ConfiguredUplinkGrant of Table 27 via higher layer signaling. Configured grant Type 2 PUSCH transmission may be semi-persistently scheduled by UL grant in DCI after reception of configuredGrantConfig that does not include the rrc-ConfiguredUplinkGrant of Table 27 via higher layer signaling. When PUSCH transmission is operated by a configured grant, parameters applied to PUSCH transmission are applied through configuredGrantConfig, which is higher layer signaling of Table 27, except for dataScramblingIdentityPUSCH, txConfig, codebookSubset, maxRank, and scaling of UCI-OnPUSCH, which are provided by pusch-Config of Table 28, which is higher layer signaling. If the LTE is provided with transformPrecoder in configuredGrantConfig, which is higher layer signaling of Table 27, the LTE applies tp-pi2BPSK in the pusch-Config of Table 28 with regards to PUSCH transmission operated by the configured grant.

[Table 27]

| | |
|---|---|
| ConfiguredGrantConfig ::= | SEQUENCE { |
|     frequencyHopping | ENUMERATED {intraSlot, interSlot}          OPTIONAL,   -- Need S, |
|     cg-DMRS-Configuration | DMRS-UplinkConfig, |
|     mcs-Table | ENUMERATED {qam256, qam64LowSE}       OPTIONAL,  --Need S |
|     mcs-TableTransformPrecoder | ENUMERATED {qam256, qam64LowSE}       OPTIONAL,  --Need S |

```
    uci-OnPUSCH                        SetupRelease { CG-UCI-
OnPUSCH }                                    OPTIONAL,      --
Need M
    resourceAllocation                ENUMERATED
{ resourceAllocationType0, resourceAllocationType1, dynamicSwitch },
    rbg-Size                          ENUMERATED {config2}
OPTIONAL,      -- Need S
    powerControlLoopToUse             ENUMERATED {n0, n1},
    p0-PUSCH-Alpha                    P0-PUSCH-AlphaSetId,
    transformPrecoder                 ENUMERATED {enabled, disabled}
OPTIONAL,      -- Need S
    nrofHARQ-Processes                INTEGER(1..16),
    repK                              ENUMERATED {n1, n2, n4, n8},
    repK-RV                           ENUMERATED {s1-0231, s2-
0303, s3-0000}                               OPTIONAL,      -- Need R
    periodicity                       ENUMERATED {
                                        sym2, sym7, sym1x14,
sym2x14, sym4x14, sym5x14, sym8x14, sym10x14, sym16x14, sym20x14,
                                        sym32x14, sym40x14,
sym64x14, sym80x14, sym128x14, sym160x14, sym256x14, sym320x14,
sym512x14,
                                        sym640x14,
sym1024x14, sym1280x14, sym2560x14, sym5120x14,
                                        sym6, sym1x12,
sym2x12, sym4x12, sym5x12, sym8x12, sym10x12, sym16x12, sym20x12,
sym32x12,
                                        sym40x12, sym64x12,
sym80x12, sym128x12, sym160x12, sym256x12, sym320x12, sym512x12,
sym640x12,
                                        sym1280x12,
sym2560x12
    },
```

| | |
|---|---|
| configuredGrantTimer | INTEGER (1..64) |
| OPTIONAL,    -- Need R | |
| rrc-ConfiguredUplinkGrant | SEQUENCE { |
| timeDomainOffset | INTEGER (0..5119), |
| timeDomainAllocation | INTEGER   (0..15), |
| frequencyDomainAllocation | BIT STRING (SIZE(18)), |
| antennaPort | INTEGER (0..31), |
| dmrs-SeqInitialization | INTEGER (0..1) |
| OPTIONAL,    -- Need R | |
| precodingAndNumberOfLayers | INTEGER (0..63), |
| srs-ResourceIndicator | INTEGER (0..15) |
| OPTIONAL,    -- Need R | |
| mcsAndTBS | INTEGER (0..31), |
| frequencyHoppingOffset | INTEGER (1.. |
| maxNrofPhysicalResourceBlocks-1) | OPTIONAL,    -- Need |
| R | |
| pathlossReferenceIndex | INTEGER |
| (0..maxNrofPUSCH-PathlossReferenceRSs-1), | |
| ... | |
| } | |
| OPTIONAL,    -- Need R | |
| ... | |
| } | |

Next, a PUSCH transmission method will be described. A DMRS antenna port for PUSCH transmission is the same as an antenna port for SRS transmission. PUSCH transmission may be based on a codebook-based transmission method and a non-codebook-based transmission method, respectively, depending on whether the value of txConfig in pusch-Config of Table 28, which is higher layer signaling, is 'codebook' or 'nonCodebook'.

As described above, PUSCH transmission may be dynamically scheduled through DCI format 0_0 or 0_1, and may be semi-statically configured by a configured grant. If the LTE is indicated to schedule PUSCH transmission through DCI format 0_0, the LTE performs beam configuration for PUSCH transmission by using pucch-spatialRelationInfoID corresponding to the LTE-specific PUCCH resource corresponding to the minimum ID in the uplink BWP activated in the serving cell, and here, PUSCH transmission is based on a single antenna port. The LTE does not expect scheduling for PUSCH transmission through DCI format 0_0 within a BWP in which the PUCCH resource including the pucch-spatialRelationInfo is not configured. If the LTE is not configured with txConfig in pusch-Config of Table 28, the UE does not expect to be scheduled in DCI format 0_1.

[Table 28]

```
PUSCH-Config ::=                              SEQUENCE {
        dataScramblingIdentityPUSCH           INTEGER (0..1023)
OPTIONAL,      -- Need S
        txConfig                              ENUMERATED {codebook,
nonCodebook}                                      OPTIONAL,    -- Need S
        dmrs-UplinkForPUSCH-MappingTypeA      SetupRelease { DMRS-
UplinkConfig }                                    OPTIONAL,    -- Need
M
        dmrs-UplinkForPUSCH-MappingTypeB      SetupRelease { DMRS-
UplinkConfig }                                    OPTIONAL,    -- Need
M


        pusch-PowerControl                    PUSCH-PowerControl
OPTIONAL,      -- Need M
        frequencyHopping                      ENUMERATED {intraSlot,
interSlot}                                        OPTIONAL,     -- Need S
        frequencyHoppingOffsetLists           SEQUENCE (SIZE (1..4)) OF
INTEGER (1.. maxNrofPhysicalResourceBlocks-1)

OPTIONAL,      -- Need M
        resourceAllocation                    ENUMERATED
{ resourceAllocationType0, resourceAllocationType1, dynamicSwitch},
        pusch-TimeDomainAllocationList        SetupRelease { PUSCH-
TimeDomainResourceAllocationList }                OPTIONAL,     -- Need M
```

```
        pusch-AggregationFactor                    ENUMERATED { n2, n4, n8 }
OPTIONAL,      -- Need S
        mcs-Table                                  ENUMERATED {qam256,
qam64LowSE}                                               OPTIONAL,      --
Need S
        mcs-TableTransformPrecoder                 ENUMERATED {qam256,
qam64LowSE}                                               OPTIONAL,      --
Need S
        transformPrecoder                          ENUMERATED {enabled,
disabled}                                                OPTIONAL,      -- Need S
        codebookSubset                             ENUMERATED
{fullyAndPartialAndNonCoherent, partialAndNonCoherent,nonCoherent}


OPTIONAL, -- Cond codebookBased
        maxRank                                    INTEGER (1..4)
OPTIONAL, -- Cond codebookBased
        rbg-Size                                   ENUMERATED { config2}
OPTIONAL, -- Need S
        uci-OnPUSCH                                SetupRelease { UCI-
OnPUSCH}                                          OPTIONAL, -- Need M
        tp-pi2BPSK                                 ENUMERATED {enabled}
OPTIONAL, -- Need S
        ...

}
```

Next, codebook-based PUSCH transmission will be described. Codebook-based PUSCH transmission may be dynamically scheduled through DCI format 0_0 or 0_1, and may operate semi-statically by a configured grant. When the codebook-based PUSCH is dynamically scheduled by DCI format 0_1 or is configured semi-statically by a configured grant, the LTE determines a precoder for PUSCH transmission based on an SRS resource indicator (SRI), a transmission precoding matrix indicator (TPMI), and a transmission rank (the number of PUSCH transport layers).

Here, the SRI may be given through a field SRS resource indicator in DCI or may be configured through srs-ResourceIndicator, which is higher layer signaling. The LTE is configured with at least one SRS resource when transmitting a codebook-based PUSCH, and may be configured with up to two SRS resources. When the LTE is provided with an SRI through DCI, the SRS resource indicated by the corresponding SRI denotes an SRS resource corresponding to the SRI among SRS resources transmitted before the PDCCH including the corresponding SRI. In addition, TPMI and transmission rank may be given through field precoding information and number of layers in DCI, or may be configured through precodingAndNumberOfLayers, which is higher layer signaling. TPMI is used to indicate a precoder applied to PUSCH transmission. If the LTE is configured with one SRS resource, the TPMI is used to indicate a precoder to be applied in the configured one SRS resource. If the LTE is configured with multiple SRS resources, the TPMI is used to indicate a precoder to be applied in the SRS resource indicated through the SRI.

A precoder to be used for PUSCH transmission is selected from an uplink codebook having the same number of antenna ports as the value of nrofSRS-Ports in SRS-Config, which is higher layer signaling. In codebook-based PUSCH transmission, the LTE determines a codebook subset based on the TPMI and codebookSubset in pusch-Config, which is higher layer signaling. CodebookSubset in pusch-Config, which is higher layer signaling, may be configured with one of 'fullyAndPartialAndNonCoherent', 'partialAndNonCoherent', or 'noncoherent' based on the LTE capability reported by the UE to the base station. If the LTE reports 'partialAndNonCoherent' as LTE capability, the LTE does not expect that the value of codebookSubset, which is higher layer signaling, is configured to be 'fullyAndPartialAndNon-Coherent'. In addition, if the LTE reports 'noncoherent' as LTE capability, the UE does not expect that the value of codebookSubset, which is higher layer signaling, is configured to be 'fullyAndPartialAndNonCoherent' or 'partialAnd-NonCoherent'. When nrofSRS-Ports in SRS-ResourceSet, which is higher layer signaling, indicates two SRS antenna ports, the LTE does not expect that the value of codebookSubset, which is higher layer signaling, is configured to be 'partialAndNonCoherent'.

The LTE may be configured with one SRS resource set in which the value of usage in the SRS-ResourceSet, which is higher layer signaling, is configured to be 'codebook', and one SRS resource in the corresponding SRS resource set may be indicated through SRI. If multiple SRS resources are configured in the SRS resource set in which the usage value in the SRS-ResourceSet, which is higher layer signaling, is configured to be 'codebook', the LTE expects that the values of nrofSRS-Ports in the SRS-Resource, which is higher layer signaling, are configured to be the same value with respect to all SRS resources.

The LTE transmits, to the base station, one or multiple SRS resources included in the SRS resource set in which the value of usage is configured to be 'codebook' according to higher layer signaling, and the base station indicates the LTE to perform PUSCH transmission by selecting one of the SRS resources transmitted by the LTE and using transmission beam information of the corresponding SRS resource. Here, in the codebook-based PUSCH transmission, the SRI is used as information for selection of the index of one SRS resource and is included in the DCI. Additionally, the base station includes, in the DCI, information indicating a rank and a TPMI to be used by the UE for PUSCH transmission. The UE performs PUSCH transmission by using the SRS resource indicated by the SRI and applying a rank indicated based on the transmission beam of the SRS resource and a precoder indicated by the TPMI.

Next, non-codebook-based PUSCH transmission will be described. Non-codebook-based PUSCH transmission may be dynamically scheduled through DCI format 0_0 or 0_1, and may be semi-statically operated by a configured grant. When at least one SRS resource is configured in the SRS resource set in which the value of usage in the SRS-ResourceSet, which is higher layer signaling, is configured to be 'nonCodebook', the LTE may be scheduled with non-codebook-based PUSCH transmission through DCI format 0_1.

For the SRS resource set in which the value of usage in the SRS-ResourceSet, which is higher layer signaling, is configured to be 'nonCodebook', the LTE may be configured with one connected non-zero power CSI-RS (NZP CSI-RS) resource. The LTE may perform calculation of the precoder for SRS transmission by measuring the NZP CSI-RS resource connected to the SRS resource set. If the difference between the last received symbol of the aperiodic NZP CSI-RS resource connected to the SRS resource set and the first symbol of aperiodic SRS transmission in the LTE is less than 42 symbols, the LTE does not expect information on the precoder for SRS transmission to be updated.

When the value of resource Type in the SRS-ResourceSet, which is higher layer signaling, is configured to be 'aperiodic', the connected NZP CSI-RS is indicated by SRS request, which is a field in DCI format 0_1 or 1_1. Here, if the connected NZP CSI-RS resource is an aperiodic NZP CSI-RS resource, the connected NZP CSI-RS exists when the value of the SRS request field in DCI format 0_1 or 1_1 is not '00'. In this case, the DCI should not indicate cross carrier or cross BWP scheduling. In addition, if the value of the SRS request indicates the existence of the NZP CSI-RS, the corresponding NZP CSI-RS is located in a slot in which a PDCCH including the SRS request field is transmitted. Here, TCI states configured via the scheduled subcarrier are not configured to be QCL-TypeD.

If a periodic or semi-persistent SRS resource set is configured, the connected NZP CSI-RS may be indicated through associated CSI-RS in the SRS-ResourceSet, which is higher layer signaling. For non-codebook-based transmission, the LTE does not expect that spatialRelation Info, which is higher layer signaling for SRS resource, and associated CSI-RS in SRS-ResourceSet, which is higher layer signaling, are configured together.

When the LTE is configured with multiple SRS resources, the UE may determine a precoder to be applied to PUSCH transmission and a transmission rank, based on the SRI indicated by the base station. Here, the SRI may be indicated through a field SRS resource indicator in DCI or may be configured through srs-ResourceIndicator, which is higher layer signaling. As in the above-described codebook-based PUSCH transmission, when the LTE is provided with an SRI through DCI, an SRS resource indicated by the SRI denotes an SRS resource corresponding to the SRI among SRS resources transmitted before the PDCCH including the SRI. The LTE may use one or multiple SRS resources for SRS transmission, and the maximum number of SRS resources that can be simultaneously transmitted in the same symbol in one SRS resource set are determined by LTE capability reported by the LTE to the base station. Here, the SRS resources simultaneously transmitted by the LTE occupy the same RB. The UE configures one SRS port for each SRS resource. Only one SRS resource set in which the value of usage in the SRS-ResourceSet, which is higher layer signaling, is configured to be 'nonCodebook' can be configured, and up to four SRS resources for non-codebook-based PUSCH transmission can be configured.

The base station transmits one NZP-CSI-RS connected to the SRS resource set to the UE, and the UE performs calculation of a precoder to be used for transmission of one or multiple SRS resources in the corresponding SRS resource set based on a result of measurement at the time of reception of the NZP-CSI-RS. The LTE applies, to the base station, the calculated precoder when transmitting one or multiple SRS resources in the SRS resource set in which usage is configured to be 'nonCodebook', and the base station selects one or multiple SRS resources among the received one or multiple SRS resources. In this case, in non-codebook-based PUSCH transmission, the SRI indicates an index capable of expressing one or a combination of multiple SRS resources, and the SRI is included in the DCI. Here, the number of SRS resources indicated by the SRI transmitted by the base station may be the number of transmission layers of the PUSCH, and the UE performs PUSCH transmission by applying a precoder applied for SRS resource transmission to each layer.

[PUSCH: Preparation Procedure Time]

Next, a PUSCH preparation procedure time will be described. When the base station is configured to schedule transmission of a PUSCH using DCI format 0_0, 0_1, or 0_2 to the LTE, the UE may require a PUSCH preparation procedure time for transmission of a PUSCH by applying transmission methods indicated through DCI (transmission precoding method of SRS resource, number of transmission layers, or spatial domain transmission filter). In NR, the PUSCH preparation procedure time is defined in consideration of the above methods. The PUSCH preparation procedure time of LTE may follow Equation 4 below.

$$[\text{Equation 4}]$$

$$T_{proc,2} = \max(( N_2 + d_{2,1} + d_2)( 2048 + 144 ) \kappa 2^{-\mu} T_c + T_{ext} + T_{switch}, d_{2,2} )$$

Each variable in $T_{proc,2}$ described above in Equation 4 may have the following meaning.

**[0205]** - $N_2$: The number of symbols determined according to numerology $\mu$ and LTE processing capability 1 or 2 according to the LTE capability. When LTE processing capability 1 is reported according to the capability report of the LTE, it may have the value in Table 29. When LTE processing capability 2 is reported and it is configured that LTE processing capability 2 can be used via higher layer signaling, it may have the value in Table 30.

[Table 29]

| $\mu$ | PUSCH preparation time $N_2$ [symbols] |
|---|---|
| 0 | 10 |
| 1 | 12 |
| 2 | 23 |
| 3 | 36 |

[Table 30]

| $\mu$ | PUSCH preparation time $N_2$ [symbols] |
|---|---|
| 0 | 5 |
| 1 | 5.5 |

(continued)

| $\mu$ | PUSCH preparation time $N_2$ [symbols] |
|---|---|
| 2 | 11 for frequency range 1 |

$d_{2,1}$: It is the number of symbols determined as 0 when all resource elements of the first OFDM symbol of PUSCH transmission are configured to consist of DM-RS only, or as 1 otherwise.

$\kappa$ : 64

$\mu$: It follows $\mu_{DL}$ or $\mu_{UL}$, which makes $T_{proc,2}$ larger. Here, $\mu_{DL}$ denotes a downlink numeral through which a PDCCH including a DCI for scheduling a PUSCH is transmitted, and $\mu_{UL}$ denotes an uplink numeral through which a PUSCH is transmitted.

$T_c$: It has $1/(\Delta f_{max} \cdot N_f)$, $\Delta f_{max}=480 \cdot 10^3 Hz$, $N_f$=4096.

$d_{2,2}$: It follows BWP switching time when DCI for scheduling PUSCH indicates BWP switching, and otherwise it has the value of 0.

$d_2$: When OFDM symbols of a PUCCH, a PUSCH having a high priority index, and a PUCCH having a low priority index overlap in time, the $d_2$ value of the PUSCH having a high priority index is used. Otherwise, $d_2$ has the value of 0.

$T_{ext}$: When a LTE uses a shared spectrum channel access method, the LTE may calculate $T_{ext}$ and apply the calculated $T_{ext}$ to PUSCH preparation procedure time. Otherwise, $T_{ext}$ is assumed to be 0.

$T_{switch}$: When the uplink switching interval is triggered, $T_{switch}$ is assumed to be the switching interval time. Otherwise, $T_{switch}$ is assumed to be 0.

The base station and the UE may determine that the PUSCH preparation procedure time is not sufficient, when considering time-domain resource mapping information of the PUSCH scheduled through DCI and timing advance effect between uplink and downlink, in case that the first symbol of the PUSCH starts earlier than the first uplink symbol where the CP starts after $T_{proc,2}$ from the last symbol of the PDCCH including the DCI for scheduling the PUSCH. If not, the base station and the LTE determine that the PUSCH preparation procedure time is sufficient. The LTE may transmit the PUSCH only if the PUSCH preparation procedure time is sufficient, and may ignore the DCI for scheduling the PUSCH when the PUSCH preparation procedure time is not sufficient.

[PUSCH: Repetitive Transmission Related]

Hereinafter, repetitive transmission of an uplink data channel in a 5G system will be described in detail. In the 5G system, two types of repetitive transmission methods of the uplink data channel are supported: PUSCH repetitive transmission type A and PUSCH repetitive transmission type B. The LTE may be configured with one of PUSCH repetitive transmission types A and B via higher layer signaling.

**PUSCH Repetitive Transmission Type A**

As described above, the position of the start symbol and the symbol length of the uplink data channel are determined in one slot by a time-domain resource allocation method, and a base station may provide notification of a number of repetitive transmissions to a LTE via higher layer signaling (e.g., RRC signaling) or L1 signaling (e.g., DCI).

The LTE may perform repetitive transmission of an uplink data channel, having the same start symbol and symbol length as that of the configured uplink data channel based on the number of repetitive transmissions received from the base station, in consecutive slots. Here, if a slot configured for downlink by the base station to the LTE or at least one symbol among symbols of an uplink data channel configured for the LTE are configured for downlink, the UE omits uplink data channel transmission but counts the number of repetitive transmissions of the uplink data channel.

**PUSCH Repetitive Transmission Type B**

As described above, the start symbol and length of the uplink data channel are determined in one slot by the time-domain resource allocation method, and the base station may provide notification of the number of repetitive transmissions, numberofrepetitions, to the LTE via higher layer signaling (e.g., RRC signaling) or L1 signaling (e.g., DCI).

Based on the first configured start symbol and length of the uplink data channel, nominal repetition of the uplink data channel is determined as follows. A slot in which the nth nominal repetition begins is given by $K_s + \left\lfloor \dfrac{S + n \cdot L}{N_{symb}^{slot}} \right\rfloor$ , and a start symbol in the slot is given by $\mathrm{mod}\left(S + n \cdot L, N_{symb}^{slot}\right)$ . A slot in which the nth nominal repetition ends is given by $K_s + \left\lfloor \dfrac{S + (n+1) \cdot L - 1}{N_{symb}^{slot}} \right\rfloor$ , and an end symbol in the slot is given by $\mathrm{mod}\left(S + (n+1) \cdot L - 1, N_{symb}^{slot}\right)$ . Here, n=0, ..., numberofrepetitions-1, S is the start symbol of the configured uplink data channel, and L represents the symbol length of the configured uplink data channel. $K_s$ denotes a slot in which PUSCH transmission starts, and $N_{symb}^{slot}$ denotes the number of symbols for one slot.

The LTE determines an invalid symbol for PUSCH repetitive transmission type B. A symbol configured for downlink by tdd-UL-DL-ConfigurationCommon or tdd-UL-DL-ConfigurationDedicated is determined as an invalid symbol for PUSCH repetitive transmission type B. Additionally, an invalid symbol may be configured using a higher layer parameter (e.g., InvalidSymbolPattern). A higher layer parameter (e.g., InvalidSymbolPattern) provides a symbol-level bitmap spanning one or two slots so that invalid symbols can be configured. In the bitmap, '1' represents an invalid symbol. Additionally, the period and pattern of the bitmap may be configured using a higher layer parameter (e.g., periodicityAndPattern). If a higher layer parameter (e.g., InvalidSymbolPattern) is configured and InvalidSymbolPatternIndicator-ForDCIFormat0_1 or InvalidSymbolPatternIndicator-ForDCIFormat0_2 parameter indicates '1', the LTE applies an invalid symbol pattern, and if the parameter indicates 0, the LTE does not apply the invalid symbol pattern. If a higher layer parameter (e.g., InvalidSymbolPattern) is configured and the InvalidSymbolPatternIndicator-ForDCIFormat0_1 or InvalidSymbolPatternIndicator-ForDCIFormat0_2 parameter is not configured, the LTE applies an invalid symbol pattern.

After the invalid symbol is determined, the LTE may consider, for each nominal repetition, symbols other than the invalid symbol as valid symbols. If one or more valid symbols are included in each nominal repetition, the nominal repetition may include one or more actual repetitions. Here, each actual repetition includes a consecutive set of valid symbols that can be used for PUSCH repetitive transmission type B in one slot.

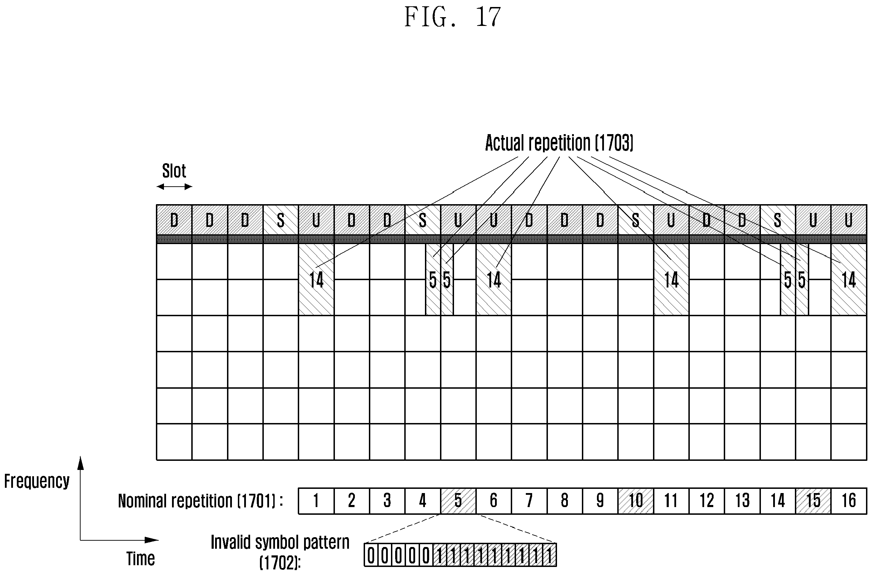

FIG. 17 illustrates an example of PUSCH repetitive transmission type B in a wireless communication system according to an embodiment of the present disclosure. The LTE may be configured with the uplink data channel having a start symbol S of 0, the uplink data channel length L of 14, and the number of repetitive transmissions being configured as 16. In this case, nominal repetition is indicated in 16 consecutive slots (1701). Thereafter, the LTE may determine a symbol, which is configured as a downlink symbol in each nominal repetition 1701, as an invalid symbol. In addition, the UE determines symbols, which are configured to be '1' in an invalid symbol pattern 1702, as invalid symbols. In each nominal repetition, when valid symbols, which are not invalid symbols, are configured by one or more consecutive symbols in one slot, the valid symbols are configured as actual repetition and transmitted (1703).

In addition, with regard to PUSCH repetitive transmission, in NR Release 16, the following additional methods are provided for configured grant-based PUSCH transmission and UL grant-based PUSCH transmission beyond the slot boundary.

Method 1 (mini-slot level repetition): Two or more PUSCH repetitive transmissions are scheduled, through one UL grant, within one slot or beyond the boundary of consecutive slots. In addition, with regard to method 1, time-domain resource allocation information in DCI indicates a resource of the first repetitive transmission. In addition, according to time domain resource information of the first repetitive transmission and the uplink or downlink direction determined for each symbol of each slot, time domain resource information of the remaining repetitive transmissions may be determined. Each repetitive transmission occupies consecutive symbols.

Method 2 (multi-segment transmission): Two or more PUSCH repetitive transmissions are scheduled in consecutive slots through one UL grant. In this case, one transmission is designated for each slot, and different starting points or different repetition lengths may be configured for each of transmissions. In addition, in method 2, the time-domain resource allocation information in DCI indicates the start points and repetition lengths of all repetitive transmissions. In addition, in a case of performing repetitive transmission in a single slot by using method 2, if multiple bundles of consecutive uplink symbols exist in the corresponding slot, each repetitive transmission is performed for each bundle of uplink symbols. If a bundle of consecutive uplink symbols only exists in the corresponding slot, one PUSCH repetitive transmission is performed according to the method of NR Release 15.

Method 3: Two or more PUSCH repetitive transmissions are scheduled in consecutive slots through two or more UL grants. Here, one transmission is designated for each slot, and the n-th UL grant may be received before the PUSCH transmission scheduled with the (n-1)th UL grant ends.

Method 4: One or multiple PUSCH repetitive transmissions in a single slot, or two or more PUSCH repetitive transmissions spanning the boundary of consecutive slots may be supported through one UL grant or one configured grant. The number of repetitions indicated by the base station to the LTE is only a nominal value, and the number of PUSCH repetitive transmissions actually performed by the LTE may be greater than the nominal number of repetitions. The time-domain resource allocation information in DCI or in a configured grant denotes a resource of the first repetitive transmission indicated by the base station. Time domain resource information of the remaining repetitive transmissions may be determined by referring to at least resource information of the first repetitive transmission and the uplink or downlink direction of the symbols. If the time domain resource information of the repetitive transmission indicated by the base station spans the slot boundary or includes an uplink/downlink switching point, the repetitive transmission may be divided into multiple repetitive transmissions. In this case, one repetitive transmission may be included for each uplink period in one slot.

[PUSCH: Frequency Hopping Procedure]

Hereinafter, frequency hopping of an uplink data channel (PUSCH) in a 5G system will be described in detail.

In 5G, as a frequency hopping method of an uplink data channel, two methods are supported for each PUSCH repetition transmission type. First, PUSCH repetitive transmission type A supports intra-slot frequency hopping and inter-slot frequency hopping, and PUSCH repetitive transmission type B supports inter-repetition frequency hopping and inter-slot frequency hopping.

The intra-slot frequency hopping method supported by PUSCH repetitive transmission type A is a method in which the LTE changes the allocated resources of the frequency domain by a configured frequency offset in two hops within one slot and transmits the same. In intra-slot frequency hopping, the start RB of each hop may be expressed by Equation 5.

$$[\text{Equation 5}]$$

$$\text{RB}_{\text{start}} = \begin{cases} \text{RB}_{\text{start}} & i = 0 \\ \left( \text{RB}_{\text{start}} + \text{RB}_{\text{offset}} \right) \bmod N_{BWP}^{size} & i = 1 \end{cases}$$

In Equation 5, i=0 and i=1 indicate the first hop and the second hop, respectively, and $\text{RB}_{\text{start}}$ denotes the start RB in the UL BWP and is calculated based on the frequency resource allocation method. $\text{RB}_{\text{offset}}$ indicates the frequency offset between the two hops through the higher layer parameter. The number of symbols of the first hop may be represented by $\left\lfloor N_{symb}^{PUSCH,s} / 2 \right\rfloor$, and the number of symbols of the second hop may be represented by $N_{symb}^{PUSCH,s} - \left\lfloor N_{symb}^{PUSCH,s} / 2 \right\rfloor$. $N_{symb}^{PUSCH,s}$ is the length of PUSCH transmission in one slot, and is represented by the number of OFDM symbols.

Next, the inter-slot frequency hopping method supported by the PUSCH repetitive transmission types A and B is a method in which the UE changes the allocated resources of the frequency domain for each slot by a configured frequency offset and transmits the same. In inter-slot frequency hopping, a start RB during $n_s^\mu$ slot may be expressed by Equation 6.

[Equation 6]

$$\mathrm{RB}_{\mathrm{start}}\left(n_s^{\mu}\right)=\begin{cases}\mathrm{RB}_{\mathrm{start}} & n_s^{\mu}\bmod 2=0\\ \left(\mathrm{RB}_{\mathrm{start}}+\mathrm{RB}_{\mathrm{offset}}\right)\bmod N_{BWP}^{size} & n_s^{\mu}\bmod 2=1\end{cases}$$

In Equation 6, $n_s^{\mu}$ denotes a current slot number in multi-slot PUSCH transmission, and $\mathrm{RB}_{\mathrm{start}}$ denotes a start RB in the UL BWP and is calculated based on a frequency resource allocation method. $\mathrm{RB}_{\mathrm{offset}}$ denotes a frequency offset between two hops via a higher layer parameter.

Next, the inter-repetition frequency hopping method supported by the PUSCH repetitive transmission type B is to perform transmission by moving a resource, which is allocated in the frequency domain for one or multiple actual repetitions within each nominal repetition, by a configured frequency offset. $\mathrm{RB}_{\mathrm{start}}(n)$, which is the index of the start RB in the frequency domain for one or multiple actual repetitions within the n-th nominal repetition, mayfollow Equation 7 below.

[Equation 7]

$$\mathrm{RB}_{\mathrm{start}}\left(n\right)=\begin{cases}\mathrm{RB}_{\mathrm{start}} & n\bmod 2=0\\ \left(\mathrm{RB}_{\mathrm{start}}+\mathrm{RB}_{\mathrm{offset}}\right)\bmod N_{BWP}^{size} & n\bmod 2=1\end{cases}$$

In Equation 7, n denotes an index of nominal repetition, and $\mathrm{RB}_{\mathrm{offset}}$ denotes an RB offset between two hops via a higher layer parameter.

[LTE Capability Report Related]

In LTE and NR, the LTE may perform a procedure of reporting the LTE-supported capability to the corresponding base station while being connected to a serving base station. In the description below, this is referred to as a LTE capability report.

The base station may transmit a LTE capability enquiry message requesting capability report from the LTE which is in a connected state. The message may include a LTE capability request for each radio access technology (RAT) type of the base station. The request for each RAT type may include supported frequency band information and the like. Further, the LTE capability enquiry message may make a request for LTE capability for each of multiple RAT types through one RRC message container transmitted by the base station, or the base station may transmit multiple LTE capability enquiry messages including a LTE capability request for each RAT type to the LTE. That is, the LTE capability enquiry may be repeated multiple times, and the LTE may configure a UE capability information message corresponding to the repeated LTE capability enquiry and make multiple reports of the LTE capability information message. In the next generation telecommunication system, a LTE capability request for multi-RAT dual connectivity (MR-DC) including NR, LTE, and E-UTRA-NR dual connectivity (EN-DC) may be made. Further, in general, the LTE capability enquiry message is transmitted initially after the LTE establishes a connection with the base station. However, the UE capability enquiry message may be requested under any condition if the base station needs.

In the above operation, the LTE, which has received a request for a LTE capability report from the base station, configures LTE capability according to frequency band information and a RAT type, which are requested by the base station. A method for configuring a LTE capability by a UE in the NR system may be summarized as follows:

1. If the LTE receives lists of LTE, and/or NR frequency bands according to a LTE capability request from a base station, the LTE configures a band combination (BC) of EN-DC and NR stand-alone (SA). That is, the LTE configures a candidate BC list for EN-DC and NR SA, based on frequency bands requested, through FreqBandList, from the base station. Further, the bands are prioritized in the order described in the FreqBandList.

2. If the base station requests the LTE capability report by setting the "eutra-nr-only" flag or the "eutra flag", the LTE removes matters relating to NR SABCs among the configured BC candidate list. This operation may occur only if the LTE base station (eNB) requests the "eutra" capability.

3. Thereafter, the UE removes fallback BCs from the candidate BC list configured in the above operation. Here, the fallback BCs refer to BCs obtainable by removing a band corresponding to at least one SCell band from a random BC, and may be omitted because a BC before removing a band corresponding to at least one SCell may already cover the fallback BC. This operation is further applied to MR-DC, i.e., LTE bands. The BCs remaining after performing this operation are included in the final "candidate BC list".

4. The LTE selects BCs to be reported by selecting BCs suitable for the requested RAT type from the final "candidate BC list". In this operation, the LTE configures the supportedBandCombinationList in a predetermined order. That is, the LTE configures BCs and a LTE capability to be reported according to a predetermined order of RAT type (nr -> eutra-nr -> eutra). Further, the UE configures featureSetCombination for the configured supportedBandCombinationList and configures a list of "candidate feature set combinations" from the candidate BC list from which a list of fallback BCs (including the same or lower level capabilities) has been removed. The "candidate feature set combinations" include all of feature set combinations for NR and EUTRA-NABC, and may be obtained from feature set combinations of containers of LTE-NR-Capabilities and LTE-MRDC-Capabilities.

5. Further, if the requested RAT type is EUTRA-NR and makes some influence, featureSetCombinations is included in both containers of the UE-MRDC-Capabilities and LTE-NR-Capabilities. However, the feature set of NR includes only LTE-NR-Capabilities.

The LTE capability is configured and then the LTE transmits a LTE capability information message including the LTE capability to the base station. Thereafter, the base station performs suitable scheduling and transmission/reception management for the corresponding LTE, based on the LTE capability received from the LTE.

[CA/DC Related]

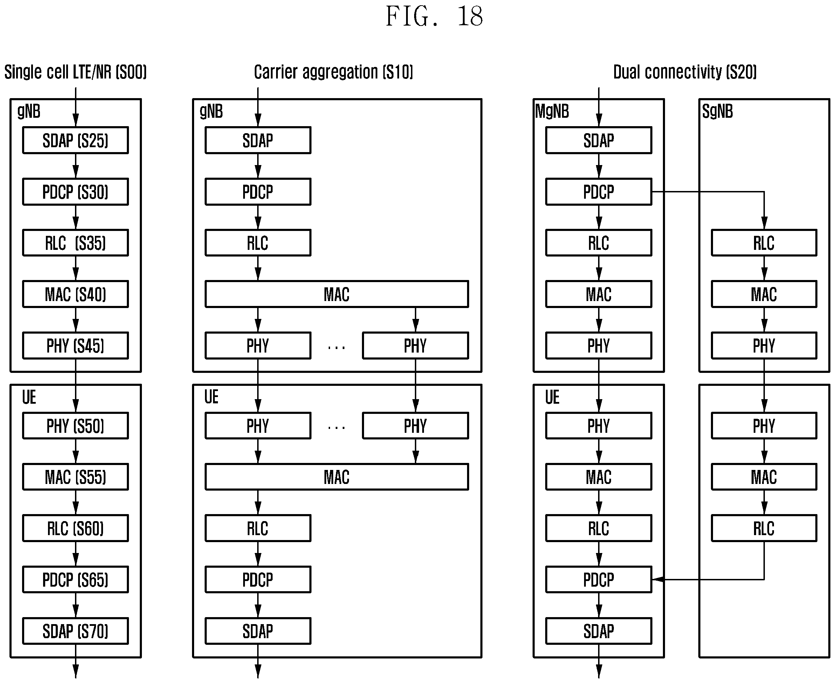

FIG. 18 illustrates a radio protocol structure of a base station and a LTE in a single cell, carrier aggregation, and dual connectivity situation in a wireless communication system according to an embodiment of the present disclosure.

Referring to FIG. 18, the radio protocol of the next generation mobile communication system includes, for each of a LTE and an NR base station, NR service data adaptation protocols (NR SDAPs) S25 and S70, NR packet data convergence protocols (NR PDCPs) S30 and S65, NR radio link controls (NR RLCs) S35 and S60, and NR medium access control (NR MACs) S40 and S55.

The functions of the NR SPAPs S25 and S70 may include one or more of the following functions:

Transfer of user plane data.
Mapping between a quality of service (QoS) flow and a data bearer (DRB) for both DL and UL.
Marking QoS flow ID in both DL and UL packets.
Reflective QoS flow to DRB mapping for the UL SDAP PDUs.

With respect to the SDAP layer device, a UE may receive, through an RRC message, a configuration associated with whether to use a header of the SDAP layer device or whether to use a function of the SDAP layer device, according to each PDCP layer device, each bearer, and each logical channel. If the SDAP header is configured, the LTE is instructed by a one-bit NAS reflective QoS indicator (NAS reflective QoS) and a one-bit AS reflective QoS indicator (AS reflective QoS) of the SDAP header to update or reconfigure mapping information between a data bearer and a QoS flow of uplink and downlink. The SDAP header may include QoS flow ID information indicating QoS. The QoS information may be used as a data processing priority for supporting smooth services, scheduling information, or the like.

The functions of the NR PDCPs S30 and S65 may include one or more of the following functions:

Header compression and decompression: robust header compression (ROHC) only.
Transfer of user data.
In-sequence delivery of higher layer PDUs.
Out-of-sequence delivery of higher layer PDUs.
PDCP PDU reordering for reception.
Duplicate detection of lower layer service data units (SDUs).

-    Retransmission of PDCP SDUs.

Ciphering and deciphering.
Timer-based SDU discard in uplink.

In the above, a reordering function of the NR PDCP device refers to a function of sequentially reordering PDCP PDUs, received from a lower layer, based on a PDCP sequence number (SN), and may include a function of transmitting data to a higher layer in the sequence of reordering. Alternatively, the reordering function of the NR PDCP device may include a function of transmitting data without considering the sequence, a function of reordering the sequence and recording missing PDCP PDUs, a function of providing a state report on the missing PDCP PDUs to a transmission side, and a function of requesting retransmission for the missing PDCP PDUs.

The functions of the NR RLCs S35 and S60 may include one or more of the following functions:

Transfer of higher layer PDUs.
In-sequence delivery of higher layer PDUs.
Out-of-sequence delivery of higher layer PDUs.
Error Correction through ARQ.
Concatenation, segmentation and reassembly of RLC SDUs.
Re-segmentation of RLC data PDUs.
Reordering of RLC data PDUs.
Duplicate detection.
Protocol error detection.
RLC SDU discard.
RLC re-establishment.

The in-sequence delivery function of the NR RLC device refers to a function of transmitting RLC SDUs, received from a lower layer, to a higher layer in the sequence of reception. The in-sequence delivery function of the NR RLC device may include: if one RLC SDU is originally segmented into multiple RLC SDUs and received, a function of reassembling and transmitting the multiple RLC SDUs; a function of reordering the received RLC PDUs based on an RLC SN or PDCP SN; a function of reordering the sequence and recording missing RLC PDUs; a function of providing a state report on the missing RLC PDUs to a transmission side; and a function of requesting retransmission for the missing RLC PDUs. If the missing RLC SDU occurs, the in-sequence delivery function of the NR RLC device may include a function of sequentially transmitting only the RLC SDUs prior to the missing RLC SDU to a higher layer or sequentially transmitting all the RLC SDUs received before a timer starts to a higher layer if a predetermined timer expires although there is a missing RLC SDU. Alternatively, the in-sequence delivery function of the NR RLC device may include a function of sequentially transmitting all RLC SDUs received so far to a higher layer if a predetermined timer expires although there is a missing RLC SDU. In addition, the RLC PDUs may be processed in the sequence that the RLC PDUS are received (in the sequence of arrival regardless of the sequence of serial number and sequence number), and may be transmitted to a PDCP device out of sequence delivery. In a case of segments, the in-sequence delivery function may include a function of receiving segments stored in a buffer or segments to be received later, reconfiguring the segments in one complete RLC PDU, processing the RLC PDU, and transmitting the RLC PDU to the PDCP device. The NR RLC layer may not include a concatenation function, and the concatenation function may be performed by the NR MAC layer or may be replaced by a multiplexing function of the NR MAC layer.

In the above, the out-of-sequence delivery function of the NR RLC device refers to a function of directly transmitting the RLC SDUs, received from the lower layer, to a higher layer regardless of the order, and may include, if one RLC SDU has been originally segmented into multiple RLC SDUs and received, a function of reassembling the multiple RLC SDUs and transmitting the same, and a function of storing the RLC SNs or PDCP SNs of the received RLC PDUs, reordering the sequence, and recording the missing RLC PDUs.

The NR MACs S40 and S55 may be connected to multiple NR RLC layer devices configured in one LTE, and functions of the NR MAC may include one or more of the following functions:

Mapping between logical channels and transport channels.
Multiplexing/de-multiplexing of MAC SDUs.
Scheduling information reporting.
Error correction through HARQ.
Priority handling between logical channels of one LTE.
Priority handling between LTEs by means of dynamic scheduling.
Multimedia broadcast service (MBMS) identification.
Transport format selection.
Padding.

The NR PHY layers S45 and S50 may perform an operation of channel-coding and modulating higher layer data, generating the higher layer data into an OFDM symbol, transmitting the OFDM symbols via a radio channel, or demodulating and channel decoding of the OFDM symbols received via the radio channel, and transferring the OFDM symbol to a higher layer.

The detailed structure of the above-described radio protocol structure may be variously changed according to a carrier (or cell) management method. For example, when the base station performs single carrier (or cell)-based data transmission to the LTE, the base station and the LTE use a protocol structure, which has a single structure for each layer, such as 1800. On the other hand, when the base station transmits data to the LTE based on carrier aggregation (CA) using multiple carriers in a single TRP, the base station and the LTE has a single structure up to RLC but uses a protocol structure of multiplexing a PHY layer through a MAC layer, such as 1810. As another example, when the base station transmits data to the LTE based on dual connectivity (DC) using multiple carriers in multiple TRP, the base station and the LTE have a single structure up to RLC, but use a protocol structure of multiplexing a PHY layer through a MAC layer, such as 1820.

Referring to the descriptions related to PDCCH and beam configuration described above, since PDCCH repetitive transmission is not currently supported in Rel-15 and Rel-16 NRs, it is difficult to achieve the required reliability in scenarios requiring high reliability, such as URLLC. The present disclosure proposes a method for improving PDCCH reception reliability of a LTE by providing a PDCCH repetitive transmission method through multiple transmission points (TRP). Specific methods are described in detail in the following embodiments.

Now, embodiments of the present disclosure will be described in detail with the accompanying drawings. The present disclosure is applicable to both FDD and TDD systems. Hereinafter, in the present disclosure, higher signaling (or higher layer signaling) is a signal transmission method in which data is transmitted from a base station to a LTE using a downlink data channel of a physical layer or transmitted from a LTE to a base station using an uplink data channel of a physical layer, and may be referred to as RRC signaling, PDCP signaling, or medium access control (MAC) control element (CE) (MAC CE).

In determining whether to apply coordinated communication, a UE may use various methods such as a method in which PDCCH(s) for allocating PDSCH to which coordinated communication is applied has a specific format, a method in which the PDCCH(s) for allocating PDSCH to which coordinated communication is applied includes a specific indicator for informing whether coordinated communication is applied, a method in which the PDCCH(s) for allocating PDSCH to which coordinated communication is applied is scrambled by a specific RNTI, or a method in which it is assumed that coordinated communication is applied in a specific section indicated by a higher layer. Hereinafter, for convenience of description, a case in which a LTE receives a PDSCH to which coordinated communication is applied based on conditions similar to the above will be referred to as an NC-JT case.

Hereinafter, determining a priority between A and B refers to selecting one having a higher priority according to a predetermined priority rile to perform an operation corresponding thereto or omitting (or dropping) an operation for the other one having a lower priority.

Examples are described through a plurality of embodiments, but the examples are not independent and one or more embodiments can be applied at the same time or in combination.

[NC-JT Related]

According to an embodiment of the present disclosure, non-coherent joint transmission (NC-JT) may be used for a UE to receive a PDSCH from multiple TRPs.

Unlike the conventional communication system, 5G wireless communication system may support not only a service requiring a high transmission rate, but also a service having a very short transmission delay and a service requiring a high connection density. In a wireless communication network including multiple cells, transmission and reception points (TRPs), or beams, coordinated transmission between respective cells, TRPs, and/or beams may satisfy various service requirements by increasing the strength of a signal received by the LTE or efficiently performing interference control between respective cells, TRPs, and/or beams.

Joint transmission (JT) is a representative transmission technology for the above-described coordinated communication, and which performs signal transmission to one LTE through multiple different cells, TRPs, and/or beams to increase the throughput or the strength of a signal received by the LTE. Here, channels between the respective cells, TRPs, and/or beams and the LTE may have significantly different characteristics. In particular, NC-JT supporting non-coherent precoding between cells, TRPs, and/or beams, individual precoding may require individual precoding, MCS, resource allocation, TCI indication, and the like according to link-specific channel characteristic between each cell, TRP, and/or beams and the UE.

The above-described NC-JT transmission may be applied to at least one channel among a downlink data channel (PDSCH), a downlink control channel (e.g., PDCCH), an uplink data channel (PUSCH), and an uplink control channel (physical uplink control channel (PUCCH)). During PDSCH transmission, transmission information such as precoding, MCS, resource allocation, and TCI is indicated by DL DCI, and in order to perform NC-JT transmission, the transmission information should be independently indicated for each cell, TRP, and/or beam. This is a major factor that increases payload used for DLDCI transmission, which may adversely affect the reception performance of PDCCH for transmission of DCI. Therefore, it is necessary to carefully design a tradeoff between the amount of DCI information and the control information reception performance for JT support of PDSCH.

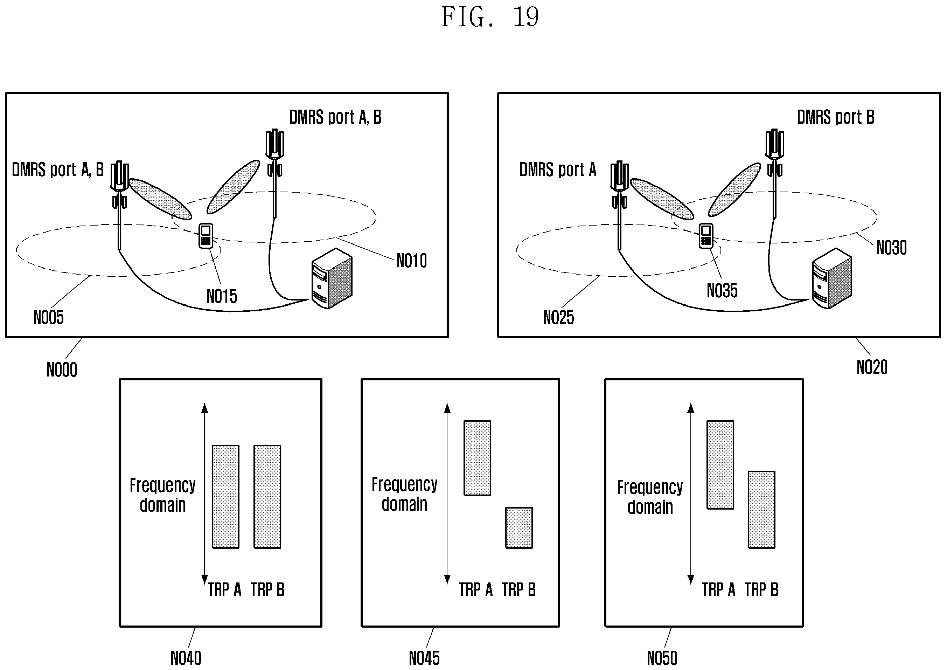

FIG. 19 illustrates an example of an antenna port configuration and resource allocation for transmitting a PDSCH using cooperative communication in a wireless communication system according to an embodiment of the present disclosure.

Referring to FIG. 19, examples for PDSCH transmission are shown according to joint transmission (JT) scheme, and examples of radio resource allocation for each TRP are illustrated.

In FIG. 19, an example N000 of coherent joint transmission (C-JT) supporting coherent precoding between cells, TRPs, and/or beams is shown.

In a case of C-JT, TRP A N005 and TRP B N010 may transmit single data on a PDSCH to UE N015, and multiple TRPs may perform joint precoding. This may be understood as that the same DMRS ports are used for the same PDSCH transmission in TRP A N005 and TRP B N010. For example, TRP A N005 and TRP B N010 may transmit DRMS to the LTE through DMRS port A and DMRS B, respectively. In this case, the UE may receive one DCI information for receiving one PDSCH demodulated based on the DMRS transmitted through the DMRS ports A and B.

In FIG. 19, an example N020 of NC-JT supporting non-coherent precoding between respective cells, TRPs, and/or beams is shown.

In a case of NC-JT, a PDSCH is transmitted to LTE N035 for each cell, TRP, and/or beam, and individual precoding may be applied to each PDSCH. Each cell, TRP, and/or beam may be used for transmission of a different PDSCH or a different PDSCH layer to the UE to improve throughput compared to single cell, TRP, and/or beam transmission. In addition, each cell, TRP, and/or beam may repeatedly transmit the same PDSCH to the LTE to improve reliability compared to single cell, TRP, and/or beam transmission. For convenience of explanation, a cell, a TRP, and/or a beam is hereinafter collectively referred to as a TRP.

Here, when all the frequency and time resources used for PDSCH transmission by multiple TRPs are the same (N040), when the frequency and time resources used by multiple TRPs do not overlap at all (N045), and when some of the frequency and time resources used by multiple TRPs overlap (N050), various radio resource allocations may be considered.

In order to simultaneously allocate a plurality of PDSCHs to one LTE for NC-JT support, DCI of various types, structures, and relationships may be considered.

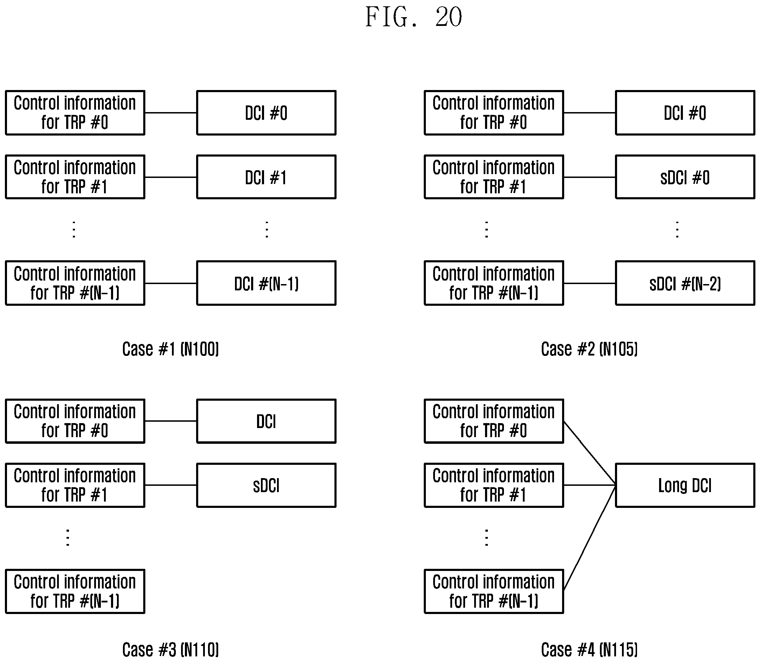

FIG. 20 illustrates an example of the configuration of downlink control information (DCI) for NC-JT in which each TRP transmits a different PDSCH or a different PDSCH layer to LTE in a wireless communication system according to an embodiment of the present disclosure.

Referring to FIG. 20, case #1 N100 illustrates, in a situation in which different (N-1) PDSCHs are transmitted from (N-1) additional TRPs (TRP #1 to TRP #(N-1)) in addition to a serving TRP (TRP #0) used for single PDSCH transmission, an example in which control information for PDSCHs transmitted from (N-1) additional TRPs and control information for PDSCHs transmitted in the serving TRP are transmitted independently from each other. That is, the LTE may acquire control information for PDSCHs transmitted from different TRPs (TRP #0 to TRP #(N-1)) through pieces of independent DCI (DCI #0 to DCI #(N-1)). The format between pieces of independent DCI may be the same or different from each other, and the payload between DCIs may also be the same or different from each other. In the above-described case #1, the degree of freedom for control or allocation of each PDSCH may be completely guaranteed, but when each piece of DCI is transmitted from a different TRP, a coverage difference for each DCI may occur, and reception performance may deteriorate.

Case #2 N105 illustrates, in a situation in which different (N-1) PDSCHs are transmitted from (N-1) additional TRPs (TRP #1 to TRP #(N-1)) in addition to a serving TRP (TRP #0) used for single PDSCH transmission, an example in which each piece of control information (i.e., DCI) for PDSCH transmitted from (N-1) additional TRPs is transmitted and each piece of DCI is dependent on control information for PDSCH transmitted from the serving TRP.

For example, in a case of DCI #0, which is control information for the PDSCH transmitted from the serving TRP (TRP #0), all information elements of DCI format 1_0, DCI format 1_1, and DCI format 1_2 are included, but shortened DCI (sDCI) (sDCI #0 to sDCI #(N-2)), which is control information for PDSCHs transmitted from cooperative TRPs (TRP #1 to TRP #(N-1)) may include some of the information elements of DCI format 1_0, DCI format 1_1, DCI format 1_2. Therefore, in a case of sDCI for transmission of control information for PDSCHs transmitted from cooperative TRPs, the payload may be small compared to normal DCI (nDCI) for transmission of control information related to PDSCH transmitted from the serving TRP and thus it is possible to include reserved bits compared to nDCI.

In case #2 described above, the degree of freedom for control or allocation of each PDSCH may be limited according to the contents of the information element included in the sDCI, or since the reception performance of sDCI is superior to that of nDCI, the probability of occurrence of a coverage difference for each DCI may be lowered.

Case #3 N110 illustrates, in a situation in which different (N-1) PDSCHs are transmitted from (N-1) additional TRPs (TRP #1 to TRP #(N-1)) other than a serving TRP (TRP #0) used when transmitting a single PDSCH, an example in which one piece of control information for PDSCHs of (N-1) additional TRPs is transmitted and this DCI is dependent on control information for PDSCHs transmitted from the serving TRP.

For example, in a case of DCI #0, which is control information for the PDSCH transmitted from the serving TRP (TRP #0), all information elements of DCI format 1_0, DCI format 1_1, and DCI format 1_2 are included, and in a case of control information for PDSCHs transmitted from cooperative TRPs (TRP #1 to TRP #(N-1)), some of the information elements of DCI format 1_0, DCI format 1_1, and DCI format 1_2 may be included in one sDCI and transmitted. For example, the sDCI may include at least one of HARQ-related information such as frequency domain resource assignment, time domain resource assignment, and MCS of cooperative TRPs. In addition, in a case of information not included in the sDCI, such as a BWP indicator or a carrier indicator, it may follow DCI (DCI #0, normal DCI, nDCI) of the serving TRP.

In case #3 N110, the degree of freedom for control or allocation of each PDSCH may be limited according to the contents of the information element included in the sDCI. However, it is possible to adjust the reception performance of sDCI, and the complexity of DCI blind decoding of the LTE may be reduced compared to case #1 N100 or case #2 N105.

Case #4 N115 illustrates, in a situation in which different (N-1) PDSCHs are transmitted from (N-1) additional TRPs (TRP #1 to TRP #(N-1)) in addition to a serving TRP (TRP #0) used for single PDSCH transmission, an example in which control information for PDSCHs transmitted from (N-1) additional TRPs is transmitted through the same DCI (long DCI (LDCI)) as control information for PDSCHs transmitted from the serving TRP. That is, the UE may obtain control information for PDSCHs transmitted from different TRPs (TRP #0 to TRP #(N-1)) through single DCI. In case #4 N115, the complexity of DCI blind decoding of the LTE may not increase, but the degree of freedom of PDSCH control or allocation may be low, such that the number of cooperative TRPs is limited according to the long DCI payload limitation.

In the following descriptions and embodiments, sDCI may refer to various pieces of supplementary DCI such as shortened DCI, secondary DCI, or normal DCI (DCI format 1_0 to 1_1 described above) including PDSCH control information transmitted in the cooperative TRP. Unless special restrictions are specified, the description is similarly applicable to the various pieces of supplementary DCI.

In the following description and embodiments, case #1 N100, case #2 N105, and case #3 N110 in which at least one DCI on a PDCCH is used for NC-JT support may be classified into multiple PDCCH-based NC-JTs, and case #4 N115 in which single DCI on a PDCCH is used for NC-JT support may be classified into a single PDCCH-based NC-JT. In multiple PDCCH-based PDSCH transmission, a CORESET in which DCI of a serving TRP (TRP #0) is scheduled and a CORESET in which DCI of a cooperative TRPs (TRP #1 to TRP #(N-1)) are scheduled may be distinguished. As a method for distinguishing CORESETs, there may be a method for distinguishing through a higher layer indicator for each CORESET, a method for distinguishing through a beam configuration for each CORESET, and the like. In addition, in a single PDCCH-based NC-JT, single DCI schedules a single PDSCH having a plurality of layers instead of scheduling a plurality of PDSCHs, and the above-mentioned plurality of layers may be transmitted from a plurality of TRPs. Here, a connection relationship between a layer and a TRP for transmission of the layer may be indicated through a TCI indication for the layer.

In embodiments of the present disclosure, the "cooperative TRP" may be replaced by various terms including a "cooperative panel" or a "cooperative beam" in practical application.

In embodiments of the present disclosure, "the case where NC-JT is applied" may be variously interpreted to fit the context, such as "the case where LTE simultaneously receives one or more PDSCHs in one BWP", "the case where LTE simultaneously receives PDSCHs based on two or more transmission configuration indications in one BWP", "the case where a PDSCH received by UE is associated with one or more DMRS port group", and the like, but one expression is used herein for convenience of explanation.

A radio protocol architecture for NC-JT may be variously used depending on TRP development scenarios. For example, when there is no or little backhaul delay between cooperative TRPs, it is possible to use a structure based on MAC layer multiplexing similar to S10 of FIG. 18 (CA-like method). On the other hand, when the backhaul delay between cooperative TRPs is so large that the backhaul delay cannot be ignored (e.g., when a time of 2 ms or more is used for information exchange such as CSI, scheduling, HARQ-ACK, and the like between cooperative TRPs), similar to S20 of FIG. 18, it is possible to secure characteristics robust to delay by using an independent structure for each TRP from the RLC layer (DC-like method).

A UE supporting C-JT/NC-JT may receive a C-JT/NC-JT related parameter or setting value from a higher layer configuration, and may set an RRC parameter of the LTE based on the received parameter or value. For higher layer configuration, the LTE may utilize a LTE capability parameter, for example, tci-StatePDSCH. Here, the LTE capability parameter, for example, tci-StatePDSCH may define TCI states for the purpose of PDSCH transmission, and the number of TCI states may be configured to be 4, 8, 16, 32, 64, and 128 in FR1, may be configured to be 64 and 128 in FR2, and may be configured up to eight states, which can be indicated by 3 bits of the TCI field of DCI through a MAC CE message, among the configured numbers. The maximum value of 128 denotes a value indicated by maxNumberConfiguredTCIstatesPerCC in the tci-StatePDSCH parameter included in capability signaling of the LTE. As such, a series of configuration processes from higher layer configuration to MAC CE configuration may be applied to a beamforming indication or a beamforming change command for at least one PDSCH in one TRP.

[Multi-DCI Based Multi-TRP]

As one embodiment of the present disclosure, a multi-DCI-based multi-TRP transmission method will be described. The multi-DCI-based multi-TRP transmission method may configure a downlink control channel for NC-JT transmission based on the multi-PDCCH.

In NC-JT based on multiple PDCCHs, when performing transmission of DCI for PDSCH scheduling of each TRP, there may be a CORESET or search space distinguished for each TRP. A CORSET or search space for each TRP may be configured as at least one of the following cases.

Higher layer index configuration by CORESET: The CORESET configuration information configured via a higher layer may include an index value, and a TRP for transmission of a PDCCH in the corresponding CORESET may be distinguished by the index value for each configured CORESET. That is, in the set of CORESETs having the same higher layer index value, it may be considered that the same TRP transmits a PDCCH or that a PDCCH for scheduling a PDSCH of the same TRP is transmitted. The above-described index for each CORESET may be referred to as CORESETPoolIndex, and it may be considered that the PDCCH is transmitted from the same TRP with regard to CORESETs in which the same CORESETPoolIndex value is configured. In a case of CORESET in which the CORESETPoolIndex value is not configured, it may be considered that the default value of CORESETPoolIndex has been configured, and the above-described default value may be 0.

In the present disclosure, when the type of CORESETPoolIndex for each of a plurality of CORESETs included in PDCCH-Config, which is higher layer signaling, exceeds one, that is, when each CORESET has a different CORESETPoolIndex, a LTE may consider that a base station may use a multi-DCI-based multi-TRP transmission method.

Contrary to this, in the present disclosure, if the type of CORESETPoolIndex for each of a plurality of CORESETs included in PDCCH-Config, which is higher layer signaling, is one, that is, if all CORESETs have the same CORESETPoolIndex of 0 or 1, a LTE may consider that the base station perform transmission using single-TRP instead of using a multi-DCI-based multi-TRP transmission method.

Multiple PDCCH-Config configurations: Multiple PDCCH-Configs are configured in one BWP, and each PDCCH-Config may include PDCCH configuration for each TRP. That is, one PDCCH-Config may include a list of CORESETs for each TRP and/or a list of search spaces for each TRP, one or more CORESETs and one or more search spaces included in one PDCCH-Config may be considered to correspond to a specific TRP.

CORESET beam/beam group configuration: TRP corresponding to the corresponding CORESET may be distinguished through a beam or beam group configured for each CORESET. For example, when the same TCI state is configured in multiple CORESETs, the corresponding CORESETs may be considered to be transmitted through the same TRP or it may be considered that a PDCCH for scheduling a PDSCH of the same TRP is transmitted in the corresponding CORESET.

Search space beam/beam group configuration: A beam or beam group is configured for each search space, and through this, TRP for each search space may be distinguished. For example, when the same beam/beam group or TCI state is configured in multiple search spaces, it may be considered that the same TRP transmits the PDCCH in the search space, or that a PDCCH for scheduling a PDSCH of the same TRP is transmitted in the search space.

By distinguishing the CORESET or search space by TRP as described above, PDSCH and HARQ-ACK information may be classified for each TRP, and thus, an independent HARQ-ACK codebook for each TRP may be generated and independent PUCCH resources may be used.

The above configuration may be independent for each cell or for each BWP. For example, two different CORESETPoolIndex values are configured in PCell, whereas the CORESETPoolIndex value may not be configured in a specific SCell. Here, it may be considered that NC-JT transmission is configured in the PCell, whereas NC-JT transmission is not configured in SCell in which the CORESETPoolIndex value is not configured.

The PDSCH TCI state activation/deactivation MAC-CE applicable to the multi-DCI-based multi-TRP transmission method may follow FIGS. 16A and 16B. If the LTE is not configured with CORESETPoolIndex for each of all CORESETs in the higher layer signaling PDCCH-Config, the UE may ignore a CORESET Pool ID field 16-55 in the corresponding MAC-CE 16-50. If the LTE can support the multi-DCI-based multi-TRP transmission method, that is, when the UE has a different CORESETPoolIndex for each CORESET in the higher layer signaling PDCCH-Config, the UE may activate a TCI state in DCI included in a PDCCH transmitted from CORESETs, which have the same CORESETPoolIndex value as the CORESET Pool ID field 16-55 in the corresponding MAC-CE 16-50. For example, if the CORESET Pool ID field 16-55 in the corresponding MAC-CE 16-50 has the value of 0, the TCI state in the DCI included in the PDCCH transmitted from CORESETs having the CORESETPoolIndex of 0 may follow the activation information of the corresponding MAC-CE.

When the UE is configured to use the multi-DCI-based multi-TRP transmission method from the base station, that is, when the type of CORESETPoolIndex for each of a plurality of CORESETs included in PDCCH-Config, which is higher layer signaling, exceeds one, or when CORESETs have different CORESETPoolIndexes, the UE may know that the following restrictions exist for PDSCHs scheduled from PDCCHs in each of CORESETs having two different CORESETPoolIndexes.

1) When PDSCHs, which are indicated by the PDCCH in each CORESET having two different CORESETPoolIndexes, fully or partially overlap, the UE may apply the TCI states indicated by each PDCCH to different CDM groups, respectively. That is, two or more TCI states may not be applied to one CDM group.

2) When PDSCHs, which are indicated by the PDCCH in each CORESET having two different CORESETPoolIndexes, fully or partially overlap, the UE may expect that the number of actual front-loaded DMRS symbols, the number of additional DMRS symbols, the position of the actual DMRS symbols, and DMRS types of respective PDSCHs not to be different from one another.

3) The LTE may expect that the same bandwidth part and the same subcarrier spacing are indicated from the PDCCH in each CORESET having two different CORESETPoolIndexes.

4) The LTE may expect that information about a PDSCH scheduled from the PDCCH in each CORESET having two different CORESETPoolIndexes is completely included in each PDCCH.

[Single DCI-Based Multi-TRP]

As another embodiment of the present disclosure, a single DCI-based multi-TRP transmission method will be described. The single DCI-based multi-TRP transmission method may configure a downlink control channel for NC-JT transmission based on single PDCCH.

In single DCI-based multi-TRP transmission method, a PDSCH transmitted by multiple TRPs may be scheduled by one DCI. Here, the number of TCI states may be used as a method of indicating the number of TRPs for transmission of the corresponding PDSCH. That is, if the number of TCI states indicated in the DCI for scheduling the PDSCH is two, it may be considered as single PDCCH-based NC-JT transmission, and if the number of TCI states is one, it may be considered as single-TRP transmission. The TCI states indicated through the DCI may correspond to one or two TCI states among TCI states activated by MAC-CE. When the TCI states of DCI correspond to the two TCI states activated by MAC-CE, a correspondence relationship between a TCI codepoint indicated through DCI and TCI states activated by MAC-CE is established, and two TCI states may be activated by MAC-CE corresponding to the TCI codepoint.

As another example, if at least one codepoint among all codepoints of the TCI state field in DCI indicates two TCI states, the LTE may consider that the base station may perform transmission based on the single-DCI-based multi-TRP method. Here, at least one codepoint indicating two TCI states in the TCI state field may be activated through enhanced PDSCH TCI state activation/deactivation MAC-CE.

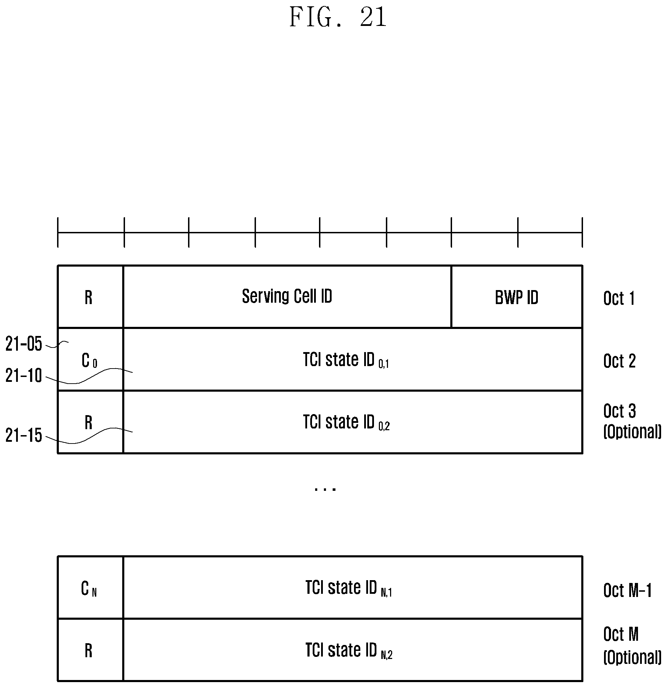

FIG. 21 illustrates an enhanced PDSCH TCI state activation/deactivation MAC-CE structure. The meaning of each field in the MAC CE and values configurable for each field are as follows.

---

- **Serving Cell ID:** This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2,* respectively;

- **BWP ID:** This field indicates a DL BWP for which the MAC CE applies as the codepoint of the DCI bandwidth part indicator field as specified in TS 38.212 [9]. The length of the BWP ID field is 2 bits;

- $C_i$: This field indicates whether the octet containing TCI state $ID_{i,2}$ is present. If this field is set to "1", the octet containing TCI state $ID_{i,2}$ is present. If this field is set to "0", the octet containing TCI state $ID_{i,2}$ is not present;

- **TCI state $ID_{i,j}$:** This field indicates the TCI state identified by TCI-StateId as specified in TS 38.331 [5], where i is the index of the codepoint of the DCI Transmission configuration indication field as specified in TS 38.212 [9] and TCI state $ID_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state $ID_{i,j}$ fields, i.e. the first TCI codepoint with TCI state $ID_{0,1}$ and TCI state $ID_{0,2}$ shall be mapped to the codepoint value 0, the second TCI codepoint with TCI state $ID_{1,1}$ and TCI state $ID_{1,2}$ shall be mapped to the codepoint value 1 and so on. The TCI state $ID_{i,2}$ is optional based on the indication of the Ci field. The maximum number of activated TCI codepoint is 8 and the maximum number of TCI states mapped to a TCI codepoint is 2.

- **R:** Reserved bit, set to "0".

---

In FIG. 21, if the $C_0$ field 21-05 has the value of 1, the corresponding MAC-CE may include the TCI state $ID_{0,2}$ field 21-15 in addition to the TCI state $ID_{0,1}$ field 21-10. This may refer that TCI state $ID_{0,1}$ and TCI state $ID_{0,2}$ are activated for the 0th codepoint of the TCI state field included in DCI. If the base station indicates the corresponding codepoint to the LTE, the LTE may receive an indication of two TCI states. If the $C_0$ field 21-05 has the value of 0, the corresponding MAC-CE may not include the TCI state $ID_{0,2}$ field 21-15, and this may be understood as that one TCI state corresponding to TCI state $ID_{0,1}$ is activated for the 0th codepoint of the TCI state field included in DCI.

The above configuration may be independent for each cell or for each BWP. For example, a PCell may include up to two activated TI states corresponding to one TCI codepoint, whereas a specific SCell (may include up to one activated to state corresponding to one TCI codepoint. Here, it may be considered that NC-JT transmission is configured in the PCell, whereas NC-JT transmission is not configured in the above-described SCell.

[Single-DCI-Based Multi-TRP PDSCH Repetitive Transmission Scheme (TDM/FDM/SDM) Distinguishing Method]

Next, a method for distinguishing between single-DCI-based multi-TRP PDSCH repetitive transmission schemes will be described. The LTE may be indicated with different single-DCI-based multi-TRP PDSCH repetitive transmission schemes (e.g., TDM, FDM, SDM) according to the value indicated by a DCI field and a higher layer signaling configuration from the base station. Table 31 below shows a method of distinguishing between single- or multi-TRP-based schemes indicated to the UE according to the value of a specific DCI field and the higher layer signaling configuration.

[Table 31]

| Combination | Number of TCI states | Number of CDM groups | repetitionNumber configuration and indication condition | repetitionScheme configuration | Transmission scheme indicated to UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 1 | Condition 3 | Configured | Multi-TRP FDM scheme A/FDM scheme B/TDM scheme A |
| 9 | 2 | 1 | Condition 1 | Not configured | Multi-TRP TDM scheme B |

In Table 31, each column may be described as follows.
Number of TCI states (column 2): It refers to the number of TCI states indicated by the TC state field in DCI, and may be one or two.

- Number of CDM groups (column 3): It refers to the number of different CDM groups of DMRS ports indicated by the antenna port field in DCI. The number of CDM groups may be 1, 2, or 3.

repetitionNumber configuration and indication condition (column 4): Three conditions may exist according to whether repetitionNumber is configured for all TDRA entries that can be indicated by a time-domain resource allocation field in DCI and whether the actually indicated TDRA entry has repetitionNumber configuration.
Condition 1: At least one of all TDRA entries that can be indicated by the time-domain resource allocation field includes the configuration for repetitionNumber, and the TDRA entry indicated by the time-domain resource allocation field in DCI includes configuration for repetition Number greater than 1.
Condition 2: At least one of all TDRA entries that can be indicated by the time-domain resource allocation field includes the configuration for repetitionNumber, and the TDRA entry indicated by the time-domain resource allocation field in DCI does not include the configuration for repetitionNumber.
Condition 3: When all TDRA entries that can be indicated by the time-domain resource allocation field do not include configuration for repetitionNumber.

repetitionScheme configuration (column 5): It refers to whether repetitionScheme, which is a higher layer signaling, is configured. The repetitionScheme, which is higher layer signaling, may be configured with one of 'tdmSchemeA', 'fdmSchemeA', and 'fdmSchemeB'.

Transmission scheme indicated to LTE (column 6): It refers to single or multiple TRP schemes indicated according to each combination (column 1) shown in Table 31 above.

Single-TRP: It refers to single TRP-based PDSCH transmission. If the UE is configured with the pdsch-AggregationFactor in the higher layer signaling PDSCH-config, the LTE may receive scheduling for single TRP-based PDSCH repetitive transmission by the configured number of times. Otherwise, the LTE may receive scheduling for single TRP-based PDSCH single transmission.

Single-TRP TDM scheme B: It refers to single TRP-based inter-slot time resource division-based PDSCH repetitive transmission. According to the above-described repetitionNumber-related Condition 1, the LTE repeatedly transmits the PDSCH in the time dimension as many times as the number of slots, having the repetitionNumber having the value greater than 1, configured in the TDRA entry indicated by the time-domain resource allocation field. Here, the same start symbol and symbol length of the PDSCH indicated by the TDRA entry are applied to each slot equal to the number of repetitionNumber, and the same TCI state is applied to each PDSCH repetitive transmission. This scheme is similar to a slot aggregation method in that an inter-slot PDSCH repetitive transmission is performed on time resources, but is different from slot aggregation in that it is possible to dynamically determine whether to indicate repetitive transmission based on the time-domain resource allocation field in DCI.

Multi-TRP SDM: It refers to a multi-TRP-based spatial resource division PDSCH transmission method. This is a method of performing reception from each TRP by dividing layers. Although the multi-RP SDM is not a repetitive transmission method, it is possible to increase the number of layers and lower the coding rate to transmit, so as to increase the reliability of the PDSCH transmission. The LTE may receive the PDSCH by applying the two TCI states indicated through the TCI state field in DCI to two CDM groups indicated by the base station, respectively.

Multi-TRP FDM scheme A: It refers to a multi-TRP-based frequency resource division PDSCH transmission scheme, and has one PDSCH transmission occasion, so that it is not possible to perform repetitive transmission like multi-TRP SDM, but to perform transmission with high reliability by increasing the frequency resource amount and lowering the coding rate. The multi-TRP FDM scheme A may apply two TCI states, indicated through the TCI state field in DCI, to frequency resources that do not overlap each other. If the PRB bundling size is determined to be wideband, the LTE performs reception by applying the first TCI state to the first ceil(N/2) RBs and applying the second TCI state to the remaining floor(N/2) RBs, when the number of RBs indicated by the frequency domain resource allocation field is N. Here, ceil(.) and floor(.) are operators for rounding up and rounding down the first digit after decimal point. If the PRB bundling size is determined to be 2 or 4, the LTE performs reception by applying the first TCI state to even-numbered PRGs and applying the second TCI state to odd-numbered PRGs.

Multi-TRP FDM scheme B: It refers to a multi-TRP-based frequency resource division PDSCH repetitive transmission scheme, and has two PDSCH transmission occasions, so that the PDSCH can be repeatedly transmitted to each occasion. Multi-TRP FDM scheme B may also apply two TCI states, indicated through the TCI state field in DCI, to frequency resources that do not overlap each other, in the same manner as the multi-TRP FDM scheme A. If the PRB bundling size is determined to be wideband, the LTE performs reception by applying the first TCI state to the first ceil(N/2) RBs and applying the second TCI state to the remaining floor(N/2) RBs, when the number of RBs indicated by the frequency domain resource allocation field is N. Here, ceil(.) and floor(.) are operators for rounding up and rounding down the first digit after decimal point. If the PRB bundling size is determined to be 2 or 4, the LTE performs reception by applying the first TCI state to even-numbered PRGs and applying the second TCI state to odd-numbered PRGs.

Multi-TRP TDM scheme A: It refers to a multi-TRP-based time resource division intra-slot PDSCH repetitive transmission scheme. The LTE includes two PDSCH transmission occasions in one slot, and the first reception location may be determined based on the start symbol and symbol length of a PDSCH indicated through the time-domain resource allocation field in DCI. The start symbol of the second reception occasion of the PDSCH may be an occasion to which as many symbol offsets as *StartingSymbolOffsetK,* which is higher layer signaling, are applied from the last symbol of the first transmission occasion, and the transmission occasion may be determined by the indicated symbol length therefrom. If *StartingSymbolOffsetK,* which is higher layer signaling, is not configured, the symbol offset may be regarded as 0.

Multi-TRP TDM scheme B: It refers to a multi-TRP-based time resource division inter-slot PDSCH repetitive transmission scheme. The LTE includes one PDSCH transmission occasion in one slot, and may receive repetitive transmission based on the start symbol and symbol length of the same PDSCH during a slot equal to the number of repetitionNumber indicated through the time domain resource allocation field in DCI. If repetitionNumber is 2, the UE may receive PDSCH repetitive transmissions in the first and second slots by applying the first and second TCI states, respectively. If repetitionNumber is greater than 2, the UE may use different TCI state application methods according to which higher layer signaling tciMapping is configured. If tciMapping is configured as cyclicMapping, the first and second TCI states are applied to the first and second PDSCH transmission occasions, respectively, and this TCI state application method is equally applied to the remaining PDSCH transmission occasions. If tciMapping is configured as sequentialMapping, the first TCI state is applied to the first and second PDSCH transmission occasions, the second TCI state is applied to the third and fourth PDSCH transmission occasions, and this TCI state application method is equally applied to the remaining PDSCH transmission occasions.

Hereinafter, for convenience of explanation in the present disclosure, cells, transmission points, panels, beams and/or transmission directions, which can be distinguished through higher layer/L1 parameters such as TCI state or spatial relation information, or indicators such as cell ID, TRP ID, panel ID, etc., are unified and described as a transmission reception point (TRP). Therefore, in actual application, it is possible to appropriately replace TRP with one of the above terms.

In the present disclosure, when the LTE determines whether cooperative communication is applied, it is possible to use various methods, such as, in which PDCCH(s) for allocation of PDSCH to which the cooperative communication is applied has a specific format, PDCCH(s) for allocation of PDSCH to which the cooperative communication is applied include a specific indicator indicating whether cooperative communication is applied, PDCCH(s) for allocation of PDSCH to which cooperative communication is applied is scrambled by a specific RNTI, or cooperative communication is assumed to be applied in a specific interval indicated by a higher layer. Hereinafter, for convenience of description, a case in which a LTE receives a PDSCH to which cooperative communication is applied based on conditions similar to the above will be referred to as an NC-JT case.

Hereinafter, embodiments of the present disclosure will be described in detail with reference to the accompanying drawings. In the present disclosure, the base station, as a subject performing resource allocation of a terminal, may be at least one of gNode B, gNB, eNode B, Node B, BS, radio access unit, base station controller, or node on a network. The terminal may include a UE, an MS, a cellular phone, a smartphone, a computer, or a multimedia system capable of performing a communication function. Hereinafter, an embodiment will be described using a 5G system as an example, but the embodiment may be applied to other communication systems having a similar technical background or channel type. For example, LTE or LTE-A mobile communication and mobile communication technology developed after 5G may be included therein. Accordingly, the embodiments may be applied to other communication systems through some modifications within a range that does not significantly depart from the scope of the present disclosure as determined by those of ordinary skilled in the art. The contents of the present disclosure are applicable to FDD and TDD systems.

In addition, in the description of the present disclosure, if it is determined that a detailed description of a related function or configuration may unnecessarily obscure the subject matter of the present disclosure, the detailed description thereof will be omitted. In addition, the terms to be described later are terms defined considering functions in the present disclosure, which may vary according to intentions or customs of users and operators. Therefore, the definition should be made based on the entire description herein.

Hereinafter, higher layer signaling may be signaling corresponding to at least one or a combination of one or more of the following signaling.

Master information block (MIB)
System information block (SIB) or SIB X (X=1, 2, ...)
Radio resource control (RRC)
Medium access control (MAC) control element (CE)

In addition, L1 signaling may be signaling corresponding to at least one or a combination of one or more of signaling methods using the following physical layer channel or signaling.

Physical downlink control channel (PDCCH)
Downlink control information (DCI)
LTE-specific DCI
Group common DCI
Common DCI
Scheduling DCI (for example, DCI used for scheduling downlink or uplink data)
Non-scheduling DCI (for example, DCI not for the purpose of scheduling downlink or uplink data)
Physical uplink control channel (PUCCH)
Uplink control information (UCI)

In the present disclosure, determining a priority between A and B refers to selecting one having a higher priority according to a predetermined priority rule to perform an operation corresponding thereto or omitting (or dropping) an operation for the other one having a lower priority.

In the following description, the above-examples will be described through a plurality of embodiments, but the examples are not independent and one or more embodiments can be applied at the same time or in combination.

<First Embodiment: Downlink Data Channel Repetitive Transmission Method considering Single or Multiple TRPs according to higher layer signaling configuration conditions>

As one embodiment of the present disclosure, a downlink data channel repetitive transmission method considering single or multiple TRPs based on a single DCI is described. According to combinations 4 and 9 in Table 31 described above, TDM scheme B support considering single or multiple TRPs based on a single DCI may be possible. In this case, TDM scheme B may be an inter-slot TDM scheme as described above. Higher layer signaling related to time domain resource allocation may be considered as follows.

If the base station supports the single or multiple TRP-based downlink data channel repetitive transmission method to the LTE using DCI format 1_0 and 1_1, the LTE can be configured with PDSCH-TimeDomainResourceAllocationList-r16 by using pdsch-TimeDomainAllocationList-r16 in PDSCH-Config which is higher layer signaling from the base station. The UE can receive set-up configuration for PDSCH-TimeDomainResourceAllocationList-r16 through pdsch-TimeDomainAllocationList-r16 in PDSCH-config which is higher layer signaling.

The LTE can be configured with a multiple pieces of PDSCH-TimeDomainResourceAllocation-r16 in PDSCH-TimeDomainResourceAllocationList-r16, and each PDSCH-TimeDomainResourceAllocation-r16 can correspond to each entry in the time domain resource allocation field in DCI format 1_0 or 1_1.

As shown in Table 32 below, each PDSCH-TimeDomainResourceAllocation-r16 may include higher layer signaling k0-r16, mappingType-r16, startSymbolAndLength-r16, and repetitionNumber-r16 (or repetitionNumber). In particular, repetitionNumber-r16 (or repetitionNumber), which is higher layer signaling, may or may not exist depending on the "Cond Formats1-0and1-1" condition. The meaning of the condition "Cond Formats1-0and1-1" may be as follows.

If higher layer signaling PDSCH-TimeDomainResourceAllocation-r 16 exists in pdsch - TimeDomainResourceAllocationList - r 16 or pdsch-TimeDomainResourceAllocationList-r17, the corresponding field may be optionally present, and the condition in this case may be "Need R".

If higher layer signaling PDSCH-TimeDomainResourceAllocation-r 16 exists in pdsch-TimeDomainAllocationListDCI-1-2, pdsch-TimeDomainAllocationListForMultiPDSCH, or SIB20, the corresponding field does not exist.

[Table 32]

```
PDSCH-TimeDomainResourceAllocation-r16 ::=    SEQUENCE {

    k0-r16                            INTEGER(0..32)

    OPTIONAL,      -- Need S

    mappingType-r16                   ENUMERATED {typeA, typeB},

    startSymbolAndLength-r16     INTEGER (0..127),

    repetitionNumber-r16              ENUMERATED {n2, n3, n4, n5, n6, n7, n8, n16}

    OPTIONAL,       -- Cond Formats1-0and1-1

        ...

    }
```

- If the base station supports the single or multiple TRP-based downlink data channel repetitive transmission method to the LTE using DCI format 1_2, the LTE can be configured with PDSCH-TimeDomainResourceAllocationList-r16 by using pdsch-TimeDomainAllocationList-r16 or pdsch-TimeDomainAllocationListDCI-1-2 in PDSCH-Config which is higher layer signaling from the base station. That is, the LTE can receive set-up configuration for PDSCH-TimeDomainResourceAllocationList-r16 through pdsch-TimeDomainAllocationList-r16 in PDSCH-config which is higher layer signaling from the base station, or the LTE can receive set-up configuration for PDSCH-TimeDomainResourceAllocationList-r16 through pdsch-TimeDomainAllocationListDCI-1-2 in PDSCH-config which is higher layer signaling from the base station.

The LTE can be configured with a multiple pieces of PDSCH-TimeDomainResourceAllocation-r16 in PDSCH-TimeDomainResourceAllocationList-r16, and each PDSCH-TimeDomainResourceAllocation-r16 can correspond to each entry in the time domain resource allocation field in DCI format 1_2.

As shown in Table 32 above, each PDSCH-TimeDomainResourceAllocation-r16 may include higher layer signaling k0-r16, mappingType-r16, startSymbolAndLength-r16, and repetitionNumber-r16 (or repetitionNumber). In particular, repetitionNumber-r16 (or repetitionNumber), which is higher layer signaling, may or may not exist depending on the "Cond Formats1-0and1-1" condition. The meaning of the condition "Cond Formats1-0and1-1" may be as follows.

If higher layer signaling PDSCH-TimeDomainResourceAllocation-r16 exists in pdsch-TimeDomainAllocation-List-r16 or pdsch-TimeDomainAllocationList-r17, the corresponding field may be optionally present, and the condition in this case may be "Need R".

If higher layer signaling PDSCH-TimeDomainResourceAllocation-r 16 exists in pdsch-TimeDomainAllocation-ListDCI-1-2, pdsch-TimeDomainAllocationListForMultiPDSCH, or SIB20, the corresponding field does not exist.

The LTE can select the higher layer signaling applied to the time domain resource allocation field in DCI format 1_2, based on the higher layer signaling related to time domain resource allocation configured by the base station.

[Configuration Condition 1] If the LTE is configured with pdsch-TimeDomainAllocationList-r16 and not configured with pdsch-TimeDomainAllocationListDCI-1-2 in PDSCH-config which is higher layer signaling from the base station, the LTE can apply pdsch-TimeDomainAllocationList-r16 to the time domain resource allocation field in DCI format 1_2. In this case, according to the above-mentioned condition "Cond Formats1-0and1-1", the higher layer signaling repetitionNumber-r16 (or repetitionNumber) can exist within each PDSCH-TimeDomainResourceAllocation-r16 in the PDSCH-TimeDomainResourceAllocationList-r16 for which the set-up configuration is received through pdsch-TimeDomainAllocationList-r16 as described above, so that the LTE can be indicated a TDRA entry configured with higher layer signaling repetitionNumber-r16 (or repetitionNumber) even through DCI format 1_2 from the base station.

[Configuration Condition 2] If the LTE is configured with pdsch-TimeDomainAllocationListDCI-1-2 from the base station, regardless of whether pdsch-TimeDomainAllocationList-r16 is configured in PDSCH-config which is higher layer signaling, the UE can apply pdsch-TimeDomainAllocationListDCI-1-2 to the domain resource allocation field in DCI format 1_2. In this case, according to the above-mentioned condition "Cond Formats1-0and1-1", the higher layer signaling repetitionNumber-r16 (or repetitionNumber) cannot exist within each PDSCH-TimeDomainResourceAllocation-r16 in the PDSCH-TimeDomainResourceAllocationList-r16 for which the set-up configuration is received through pdsch-Time-DomainAllocationListDCI-1-2 as described above, so that the LTE cannot be indicated a TDRA entry configured with higher layer signaling repetitionNumber-r1 6 (or repetitionNumber) through DCI format 1_2 from the base station. That is, in this higher layer signaling configuration situation, the LTE cannot receive scheduling of the inter-slot TDM-based downlink data channel repetitive transmission method considering the single DCI-based single or multiple TRP through DCI format 1_2 from the base station.

To support the inter-slot TDM-based downlink data channel repetitive transmission method considering the single or multiple TRPs based on a single DCI, the LTE can report the LTE capability to the base station. The LTE capability may include at least one of the following information. The LTE can report the UE capability to the base station per band. The number of the LTE capability may be FG 16-2b-5.

- Indication of the maximum value of repetitionNumber-r16 (or repetitionNumber), wherein repetitionNumber-r16 (or repetitionNumber) can be configured in higher layer signaling PDSCH-TimeDomainResourceAllocation

Indication of the maximum TBS size that can be supported by the function
Maximum number of TCI states (1 or 2)
However, as described above, depending on the configuration situation of specific higher layer signaling, the LTE cannot receive scheduling of the inter-slot TDM-based downlink data channel repetitive transmission method considering the single or multiple TRPs through DCI format 1_2 from the base station, and the corresponding information is not described in the LTE capability.

<Second Embodiment: Downlink Data Channel Repetitive Transmission Method considering Single or Multiple TRPs based on DCI format 1_2>

As another embodiment of the present disclosure, an inter-slot TDM-based downlink data channel repetitive transmission method considering a single DCI-based single or multiple TRPs based on DCI format 1_2 is described. As described above, in a specific higher layer signaling configuration situation, a LTE cannot receive scheduling of the inter-slot TDM-based downlink data channel repetitive transmission method considering the single DCI-based single or multiple TRPs through DCI format 1_2 from a base station.

Meanwhile, DCI format 1_2 was introduced to support purposes such as URLLC, and supports the ability to make the size of DCI smaller than or equal to the existing DCI format 1_0 and 1_1, thereby having the advantage of being able to maintain more robustness, based on lower code rates, even in bad channel situations. Therefore, supporting the repetitive transmission method that can obtain the robustness of the downlink data channel through DCI format 1_2, which supports such robustness, may be a natural scheduling method that can prevent the downlink data channel from becoming a bottleneck channel. In particular, in the case of time domain resource allocation among DCI fields, higher layer signaling, referenceOfSLIVDCI-1-2, is configured, and the downlink data channel is scheduled with DCI format 1_2 including a CRC scrambled with C-RNTI, MCS-C-RNTI, or CS-RNTI. When the scheduling slot offset of the corresponding downlink data channel is 0 slot, the definition of the start symbol of the Start and Length Indicator Value (SLIV) included in the TDRA entry indicated according to the time domain resource allocation field may be based on the PDCCH monitoring occasion on which the corresponding DCI format 1_2 is successfully received, or otherwise, it may be based on the start symbol of the slot as before. The function of changing the definition of the start symbol as such was introduced because the corresponding DCI format 1_2 often schedules a downlink data channel with a relatively short symbol length at the same slot position. In addition, by setting the number of TDRA entries to a small number, the length of the time domain resource allocation field, which was previously fixed at 4 bits, can be reduced to 1, 2, and 3 bits. Therefore, in case of being based on the above-described [Configuration Condition 1] for higher layer signaling, all DCI formats should share the existing time domain resource allocation configuration information, so in this case, DCI format 1_2 may be in a situation where the existing configuration information should be used compulsorily without being suitable for its purpose. Therefore, as described above, if DCI format 1_2 is to be used for purposes such as a more robust transmission method than other DCI formats, time resource allocation without slot offset (when the slot offset value is 0), and minimizing the number of TDRA entries, the LTE should receive configuration from the base station, such as the above-described [Configuration Condition 2] for higher layer signaling.

In the following, a higher layer signaling configuration method and LTE capability reporting to support the inter-slot TDM-based downlink data channel repetitive transmission method considering the single or multiple TRPs based on DCI format 1_2 will be described.

[Method 1] Change of the "Cond Formats1-0and1-1" condition

The LTE can be configured with higher layer signaling, PDSCH-TimeDomainResourceAllocation-r16, from the base station, and the parameter may include higher layer signaling, repetitionNumber-r16 (or repetitionNumber). In this case, "Cond Formats1-0and1-1", which is the configuration condition of repetitionNumber-r16 (or repetitionNumber), can be changed as follows.

The name of the condition can be changed to "Cond Formats1-0and1-1and1-2".

repetitionNumber-r16 (or repetitionNumber) may optionally present regardless of whether higher layer signaling, PDSCH-TimeDomainResourceAllocation-r16, is configured in pdsch-TimeDomainAllocationList-r16 or pdsch-TimeDomainAllocationListDCI-1-2, and the conditions in that case may be "Need R".

repetitionNumber-r16 (or repetitionNumber) may be absent if higher layer signaling, PDSCH-TimeDomainResourceAllocation-r16, is configuredt in pdsch-TimeDomainAllocationListForMultiPDSCH or SIB20.

The LTE may report the above-described LTE capability FG 16-2b-5, including the indication that support is possible for DCI formats 1_0, 1_1, and 1_2. At this time, for DCI format 1_0, regardless of the maximum number of TCI states indicated, the number of TCI states supported may be 1.

[Method 2] Change of the "Cond Formats1-0and1-1" condition and addition of DCI format 1_2 dedicated new higher layer signaling

The LTE can be configured with higher layer signaling, PDSCH-TimeDomainResourceAllocation-r16, from the base station, and the parameter may include higher layer signaling, repetitionNumber-r16 (or repetitionNumber), or new higher layer signaling, repetitionNumber-r17, indicating the number of repetitive transmissions. In this case, the condition of repetitionNumber-r16 (or repetitionNumber) may include at least one of the following items.

If higher layer signaling, PDSCH-TimeDomainResourceAllocation-r16, exists in pdsch-TimeDomainResourceAllocationList-r16 or pdsch-TimeDomainResourceAllocationList-r17, the corresponding field may optionally present, and the condition in this case may be "Need R".

If higher layer signaling, PDSCH-TimeDomainResourceAllocation-r16, exists in pdsch-TimeDomainAllocationListDCI-1-2, pdsch-TimeDomainAllocationListForMultiPDSCH, or SIB20, the corresponding field is absent.

The above-described new higher layer signaling, repetitionNumber-r17, can be configured based on the condition "Cond Format1-2", and the condition "Cond Format1-2" may include at least one of the following items.

If higher layer signaling, PDSCH-TimeDomainResourceAllocation-r16, exists in pdsch-TimeDomainAllocation-ListDCI-1-2, the corresponding field may optionally present, and the condition in this case may be "Need R".

If higher layer signaling, PDSCH-TimeDomainResourceAllocation-r16, exists in pdsch-TimeDomainResourceAllocationList-r16, pdsch-TimeDomainResourceAllocationList-r17, pdsch-TimeDomainAllocationListForMultiPDSCH, or SIB20, the corresponding field is absent.

If higher layer signaling, PDSCH-TimeDomainResourceAllocation-r16, exists in pdsch-TimeDomainAllocation-

ListForMultiPDSCH, or SIB20, the corresponding field is absent.

The above-described repetitionNumber-r16 (or repetitionNumber) and repetitionNumber-17 can be configured independently. That is, the values of the two parameters may be the same or different for a specific TDRA entry, and only repetitionNumber-r16 (or repetitionNumber) or only repetitionNumber-r17 may be configured for a specific TDRA entry.

The LTE can report the above-described UE capability FG 16-2b-5, including the fact that it can support DCI formats 1_0 and 1_1. At this time, for DCI format 1_0, regardless of the maximum number of TCI states indicated, the number of TCI states supported may be 1.

For the above-described LTE capability FG 16-2b-5, the LTE may report that the support for the inter-slot TDM-based downlink data channel repetitive transmission method considering single or multiple TRPs based on a single DCI through DCI format 1_2 is possible only if pdsch-TimeDomainAllocationList-r16 is configured in higher layer signaling, PDSCH-config, and pdsch-TimeDomainAllocationListDCI-1-2 is not configured. That is, the LTE can transfer to the base station through the corresponding LTE capability report that the inter-slot TDM-based downlink data channel repetitive transmission method considering single or multiple TRPs based on a single DCI can be supported only in the case of [Configuration Condition 1].

The LTE can define a new LTE capability, and the LTE capability may include the meaning that the inter-slot TDM-based downlink data channel repetitive transmission method considering single or multiple TRPs based on a single DCI can be supported based on DCI format 1_2 regardless of higher layer signaling configuration conditions. Therefore, regardless of the above-described [Configuration Condition 1] or [Configuration Condition 2], it is possible to report the meaning that the inter-slot TDM-based downlink data channel repetitive transmission method considering a single DCI-based single or multiple TRPs can be supported through DCI format 1_2. In addition, in the case of [Configuration condition 2] described above, it is possible to report the meaning that the inter-slot TDM-based downlink data channel repetitive transmission method considering a single DCI-based single or multiple TRPs can be supported through DCI format 1_2. The base station can configure the above-described new higher layer signaling, repetitionNumber-r17, only for the LTE that has reported the corresponding new LTE capability. When the UE reports new LTE capability, it can expect to receive the above-described new higher layer signaling, repetitionNumber-r17, from the base station.

[Method 3] Change of the "Cond Formats1-0and1-1" condition and addition of new higher layer signaling

The LTE can be configured with higher layer signaling, PDSCH-TimeDomainResourceAllocation-r16, from the base station, and the parameter may include higher layer signaling, repetitionNumber-r16 (or repetitionNumber), or new higher layer signaling, repetitionNumber-r17, indicating the number of repetitive transmissions. In this case, the condition of repetitionNumber-r16 (or repetitionNumber) may include at least one of the following items.

If higher layer signaling, PDSCH-TimeDomainResourceAllocation-r16, exists in pdsch-TimeDomainResourceAllocationList-r16 or pdsch-TimeDomainResourceAllocationList-r17, the corresponding field may optionally present, and the condition in this case may be "Need R".

If higher layer signaling, PDSCH-TimeDomainResourceAllocation-r16, exists in pdsch-TimeDomainAllocationListDCI-1-2, pdsch-TimeDomainAllocationListForMultiPDSCH, or SIB20, the corresponding field is absent.

The above-described new higher layer signaling, repetitionNumber-r17, can be configured based on the condition "Cond Formats1-0and1-1and1-2", and the condition "Cond Formats1-0and1-1and1-2" may include at least one of the following items.

If higher layer signaling, PDSCH-TimeDomainResourceAllocation-r16, exists in pdsch-TimeDomainResourceAllocationList-r16, pdsch-TimeDomainResourceAllocationList-r17, or pdsch-TimeDomainAllocationListDCI-1-2, the corresponding field may optionally present, and the condition in this case may be "Need R".

If higher layer signaling, PDSCH-TimeDomainResourceAllocation-r16, exists in pdsch-TimeDomainAllocationListForMultiPDSCH, or SIB20, the corresponding field is absent.

The above-described repetitionNumber-r16 (or repetitionNumber) and repetitionNumber-17 can be configured independently. However, if two higher layer signalings are configured at the same time, the LTE can preferentially use one of repetitionNumber-r16 (or repetitionNumber) or repetitionNumber-r17. An operation considering this priority may be applied regardless of the DCI format, or different priorities may be applied depending on the DCI format. For example, repetitionNumber-r16 (or repetitionNumber) may be prioritized for DCI format 1_0 and 1_1, and repetitionNumber-r17 may be prioritized for DCI format 1_2.

The LTE can report the above-described UE capability FG 16-2b-5, including the fact that it can support DCI formats 1_0 and 1_1. At this time, for DCI format 1_0, regardless of the maximum number of TCI states indicated, the number of TCI states supported may be 1.

For the above-described LTE capability FG 16-2b-5, the LTE may report that the support for the inter-slot TDM-based downlink data channel repetitive transmission method considering single or multiple TRPs based on a single DCI through DCI format 1_2 is possible only if pdsch-TimeDomainAllocationList-r16 is configured in higher layer signaling, PDSCH-config, and pdsch-TimeDomainAllocationListDCI-1-2 is not configured. That is, the LTE can transfer to the base station through the corresponding LTE capability report that the inter-slot TDM-based downlink data channel repetitive transmission method considering single or multiple TRPs based on a single DCI can be supported only in the case of [Configuration Condition 1].

The LTE can define a new LTE capability, and the LTE capability may include the meaning that the inter-slot TDM-based downlink data channel repetitive transmission method considering single or multiple TRPs based on a single DCI can be supported based on DCI format 1_2 regardless of higher layer signaling configuration conditions. Therefore, regardless of the above-described [Configuration Condition 1] or [Configuration Condition 2], it is possible to report the meaning that the inter-slot TDM-based downlink data channel repetitive transmission method considering a single DCI-based single or multiple TRPs can be supported through DCI format 1_2. In addition, in the case of [Configuration condition 2] described above, it is possible to report the meaning that the inter-slot TDM-based downlink data channel repetitive transmission method considering a single DCI-based single or multiple TRPs can be supported through DCI format 1_2. The base station can configure the above-described new higher layer signaling, repetitionNumber-r17, only for the LTE that has reported the corresponding new LTE capability. When the UE reports new LTE capability, it can expect to receive the above-described new higher layer signaling, repetitionNumber-r17, from the base station.

[Method 4] Change of the "Cond Formats1-0and1-1" condition and selection between existing higher layer signaling and new higher layer signaling

The LTE can be configured with higher layer signaling, PDSCH-TimeDomainResourceAllocation-r16, from the base station, and the parameter may be selected as one of higher layer signaling, repetitionNumber-r16 (or repetition-Number), or new higher layer signaling, repetitionNumber-r17, when including higher layer signaling indicating the number of repetitive transmissions. That is, the LTE can be configured from the base station by selecting one of the parameters, repetitionNumber-r16 (or repetitionNumber), repetitionNumber-r17, or none (means that neither is selected), in the form of "CHOICE". If none is selected, meaning that neither is selected, the corresponding TDRA entry may indicate a single transmission of the downlink data channel without repetitionNumber.
In this case, the condition of repetitionNumber-r16 (or repetitionNumber) may include at least one of the following items.
If higher layer signaling, PDSCH-TimeDomainResourceAllocation-r16, exists in pdsch-TimeDomainResourceAllocationList-r16 or pdsch-TimeDomainResourceAllocationList-r17, the corresponding field may optionally present, and the condition in this case may be "Need R".
If higher layer signaling, PDSCH-TimeDomainResourceAllocation-r16, exists in pdsch-TimeDomainAllocation-ListDCI-1-2, pdsch-TimeDomainAllocationListForMultiPDSCH, or SIB20, the corresponding field is absent.
The above-described new higher layer signaling, repetitionNumber-r17, may have the condition mentioned in [Method 2] or [Method 3] described above.
The LTE can report the above-described UE capability FG 16-2b-5, including the fact that it can support DCI formats 1_0 and 1_1. At this time, for DCI format 1_0, regardless of the maximum number of TCI states indicated, the number of TCI states supported may be 1.
For the above-described LTE capability FG 16-2b-5, the LTE may report that the support for the inter-slot TDM-based downlink data channel repetitive transmission method considering single or multiple TRPs based on a single DCI through DCI format 1_2 is possible only if pdsch-TimeDomainAllocationList-r16 is configured in higher layer signaling, PDSCH-config, and pdsch-TimeDomainAllocationListDCI-1-2 is not configured. That is, the LTE can transfer to the base station through the corresponding LTE capability report that the inter-slot TDM-based downlink data channel repetitive transmission method considering single or multiple TRPs based on a single DCI can be supported only in the case of [Configuration Condition 1].
The LTE can define a new LTE capability, and the LTE capability may include the meaning that the inter-slot TDM-based downlink data channel repetitive transmission method considering single or multiple TRPs based on a single DCI can be supported based on DCI format 1_2 regardless of higher layer signaling configuration conditions. Therefore, regardless of the above-described [Configuration Condition 1] or [Configuration Condition 2], it is possible to report the meaning that the inter-slot TDM-based downlink data channel repetitive transmission method considering a single DCI-based single or multiple TRPs can be supported through DCI format 1_2. In addition, in the case of [Configuration condition 2] described above, it is possible to report the meaning that the inter-slot TDM-based downlink data channel repetitive transmission method considering a single DCI-based single or multiple TRPs can be supported through DCI format 1_2. The base station can configure the above-described new higher layer signaling, repetitionNumber-r17, only for the LTE that has reported the corresponding new LTE capability. When the UE reports new LTE capability, it can expect to receive the above-described new higher layer signaling, repetitionNumber-r17, from the base station.

<Third Embodiment: Downlink Data Channel Repetitive Transmission Method considering Single or Multiple TRPs>

As still another embodiment of the present disclosure, taking into account the methods described above in the first and second embodiments, an inter-slot TDM-based downlink data channel repetitive transmission method considering a single DCI-based single or multiple TRPs is described. [Specific Conditions] mentioned in the description below may include at least one of the following items.

In the case that the LTE is configured with repetitionNumber in higher layer signaling, pdsch-TimeDomainAllocationList or pdsch-TimeDomainAllocationList-r16, or configured with repetitionNumber in higher layer signaling, pdsch-TimeDomainAllocationListDCI-1-2-r16, and the LTE is indicated a TDRA entry containing repetitionNumber or repetitionNumber-r17 through DCI.

In the case that the LTE is configured with repetitionNumber or repetitionNumber-r17 in higher layer signaling, PDSCH-TimeDomainResourceAllocation, and the LTE is indicated a TDRA entry containing repetitionNumber or repetitionNumber-r17 through DCI.

In the case that the LTE is configured with repetitionNumber in PDSCH-TimeDomainResourceAllocation in higher layer signaling, PDSCH-TimeDomainAllocationList, for DCI format 1_0, 1_1, or 1_2 and pdsch-TimeDomainAllocationListDCI-1-2-r16 is not configured, or in the case that the LTE is configured with repetitionNumber-r17 in PDSCH-TimeDomainResourceAllocation in higher layer signaling, pdsch-TimeDomainAllocationListDCI-1-2-r16, for DCI format 1_2, and the UE is indicated a TDRA entry containing repetitionNumber or repetitionNumber-r17 through DCI.

Hereinafter, in case of further considering other conditions in addition to the above-described [Specific Conditions], possible operations when the LTE receives scheduling of the inter-slot TDM-based downlink data channel repetitive transmission method considering single or multiple TRPs based on a single DCI from the base station will be described.

[Operation 1]

Regardless of whether higher layer signaling, tci-PresentInDCI and tci-PresentDCI-1-2, is configured in RRC connected mode, if the LTE is not configured with dl-OrJoint-TCIStateList-r17, if PDSCH scheduling offset is shorter than timeDurationForQCL, and if at least one of configured TCI states includes QCL-TypeD,
If the LTE is configured with higher layer signaling, enableTwoDefaultTCI-States, and at least one codepoint of the TCI state field in the DCI has two TCI states, the LTE may have, for DM-RS of PDSCH transmission location, a QCL assumption of two TCI states corresponding to the lowest codepoint having two TCI states among the codepoints of the TCI state field. In this case, if the UE is configured with tdmSchemeA for higher layer signaling, repetitionScheme, or in the case of [Specific Conditions], or in the case that the scheduling offset between the first PDSCH transmission location and PDCCH is less than timeDurationForQCL, or in the case that, based on the TCI state activated in a slot of the first PDSCH transmission location, two TCI states corresponding to the lowest codepoint with two TCI states among codepoints in the TCI state field are mapped to each PDSCH transmission location,
If the value of repetitionNumber or repetitionNumber-r17 is 2, the LTE may apply the first TCI state of the two TCI states corresponding to the lowest codepoint with two TCI states among the codepoints of the TCI state field to the first PDSCH transmission location, and apply the second TCI state to the second PDSCH transmission location.

If the value of repetitionNumber or repetitionNumber-r17 is greater than 2 and higher layer signaling, tciMapping, is set to cyclicMapping, the LTE may apply the first TCI state of the two TCI states corresponding to the lowest codepoint with two TCI states among the codepoints of the TCI state field to the first PDSCH transmission location, and apply the second TCI state to the second PDSCH transmission location. Then, for the subsequent PDSCH transmission locations, the LTE can apply the TCI states in the same order.

If the value of repetitionNumber or repetitionNumber-r17 is greater than 2 and higher layer signaling, tciMapping, is set to sequentialMapping, the LTE may apply the first TCI state of the two TCI states corresponding to the lowest codepoint with two TCI states among the codepoints of the TCI state field to the first and second PDSCH transmission locations, and apply the second TCI state to the third and fourth PDSCH transmission locations. Then, for the subsequent PDSCH transmission locations, the UE can apply the TCI states in the same order.

[Operation 2]

If the LTE satisfies the above-described [Specific Conditions], the LTE can perform the following operation depending on whether the number of TCI states indicated through DCI is one or two.

If the LTE is indicated a codepoint with two TCI states through the TCI state field in the DCI and is indicated a single or multiple DM-RS ports belonging to one CDM group through the Antenna port field in the DCI, the LTE may interpret time resource allocation information of PDSCH by applying the same SLIV value in consecutive slots equal to the number of repetition transmissions indicated by repetitionNumber or repetitionNumber-r17.

If the value of repetitionNumber or repetitionNumber-r17 is 2, the LTE may apply the first TCI state of the two indicated tci states to the first PDSCH transmission location, and apply the second TCI state to the second PDSCH transmission location.

If the value of repetitionNumber or repetitionNumber-r17 is greater than 2, and higher layer signaling, tciMapping, is set to cyclicMapping, the LTE may apply the first TCI state of the two indicated tci states to the first PDSCH transmission location, and apply the second TCI state to the second PDSCH transmission location. Then, for the subsequent PDSCH transmission locations, the LTE can apply the TCI states in the same order.

If the value of repetitionNumber or repetitionNumber-r17 is greater than 2 and higher layer signaling, tciMapping, is set to sequentialMapping, the LTE apply the first TCI state of the two indicated tci states to the first and second PDSCH transmission locations, and apply the second TCI state to the third and fourth PDSCH transmission locations. Then, for the subsequent PDSCH transmission locations, the LTE can apply the TCI states in the same order.

If the LTE is indicated a codepoint with one TCI state through the TCI state field in the DCI and is indicated a single or multiple DM-RS ports belonging to one CDM group through the Antenna port field in the DCI, the LTE may interpret time resource allocation information of PDSCH by applying the same SLIV value in consecutive slots equal to the number of repetition transmissions indicated by repetitionNumber or repetitionNumber-r17, and apply the same TCI state at all PDSCH transmission locations.

[Operation 3]

If the LTE does not satisfy the above-described [Specific Conditions], and if the LTE is not configured with higher layer signaling, sfnSchemePdsch, is indicated a codepoint containing two TCI states through the TCI state field in the DCI, and is indicated DM-RS ports belonging to two CDM groups through the Antenna port field in the DCI,

The first TCI state may be applied to the CDM group to which the first antenna port indicated through the Antenna port field belongs, and the second TCI state may be applied to the remaining CDM groups.

[Operation 4]

If the LTE does not satisfy the above-described [Specific Conditions], the LTE is configured with higher layer signaling, maxNrofPorts, set to n2, the LTE is not configured with higher layer signaling, sfnSchemePdsch, and the UE is indicated a codepoint containing two TCI states through the TCI state field in the DCI, and is indicated DM-RS ports belonging to two CDM groups through the Antenna port field in the DCI, the LTE can receive two PT-RS ports. In this case, the first PT-RS port may be connected to the DM-RS with the lowest index among the DM-RS ports to which the first TCI state is applied, and the second PT-RS port may be connected to the DM-RS with the lowest index among DM-RS ports to which the second TCI state is applied.

[Operation 5]

If the LTE satisfies the higher layer signaling condition in [Specific Conditions], the LTE may not expect higher layer signaling, repetitionScheme, to be configured.

[Operation 6]

If the LTE satisfies [Specific Conditions], or if the LTE is configured with one of fdmSchemeA, fdmSchemeB, and tdmSchemeA as higher layer signaling repetitionScheme, the UE may not expect higher layer signaling pdsch-AggregationFactor to be configured.

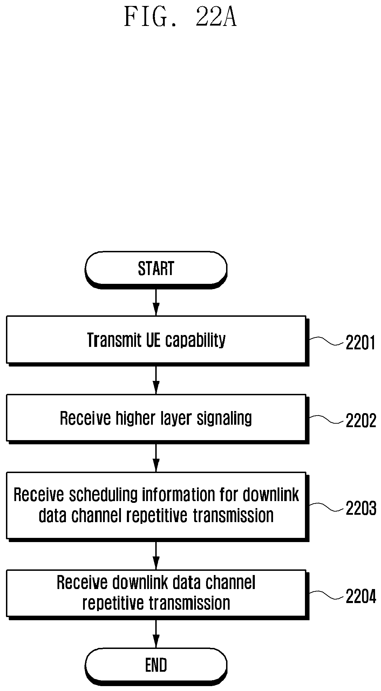

FIG. 22A is a diagram illustrating the operation of a LTE according to an embodiment of the present disclosure.

The LTE may transmit LTE capability to the base station (2201). At this time, the LTE capability that can be included may be at least one of those described above in the first and second embodiments (for example, FG 16-2b-5 or/and new terminal capability, etc.). Thereafter, the UE may receive higher layer signaling from the base station (2202). At this time, the higher layer signaling that can be included may be at least one of those described above in the first and second embodiments (for example, PDSCH-TimeDomainResourceAllocation-r16 including repetitionNumber-r16 (or repetitionNumbe) or/and repetitionNumber-r17, etc.). Thereafter, the LTE may receive scheduling information for an inter-slot TDM-based downlink data channel repetitive transmission considering single or multiple TRPs based on a single DCI from the base station. This information can be indicated through DCI format 1_0, 1_1, or 1_2, and the condition of each field within the corresponding DCI can be the same as combination 4 or 9 in Table 32 described above. Based on this information, the UE may receive the inter-slot TDM-based downlink data channel repetitive transmission considering a single DCI-based single or multiple TRP from the base station (2204). In addition, according to the above-described [Specific Conditions] and additional conditions, the LTE may perform the above-described [Operation 1] to [Operation 6] when receiving the inter-slot TDM-based downlink data channel repetitive transmission considering a

74

single DCI-based single or multiple TRP.

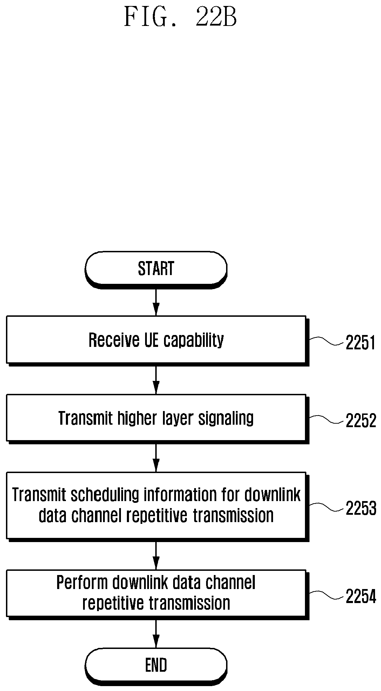

FIG. 22B is a diagram illustrating the operation of a base station according to an embodiment of the present disclosure.

The base station may receive LTE capability from the LTE (2251). At this time, the LTE capabiliy that can be included may be at least one of those described above in the first and second embodiments (for example, FG 16-2b-5 or/and new terminal capability, etc.). Thereafter, the base station may transmit higher layer signaling to the LTE (2252). At this time, the higher layer signaling that can be included may be at least one of those described above in the first and second embodiments (for example, PDSCH-TimeDomainResourceAllocation-r16 including repetitionNumber-r16 (or repetitionNumbe) or/and repetitionNumber-r17, etc.). Thereafter, the base station may transmit scheduling information for an inter-slot TDM-based downlink data channel repetitive transmission considering single or multiple TRPs based on a single DCI to the LTE. This information can be indicated through DCI format 1_0, 1_1, or 1_2, and the conditions of each field within the corresponding DCI can be the same as combination 4 or 9 in Table 32 described above. Based on this information, the base station may perform repetitive transmission to the LTE for the inter-slot TDM-based downlink data channel considering a single DCI-based single or multiple TRPs (2254). In addition, according to the above-described [Specific Conditions] and additional conditions, when the base station indicates the inter-slot TDM-based downlink data channel repetitive transmission considering a single DCI-based single or multiple TRP to the UE, the UE can be expected to perform the above-described [Operation 1] to [Operation 6].

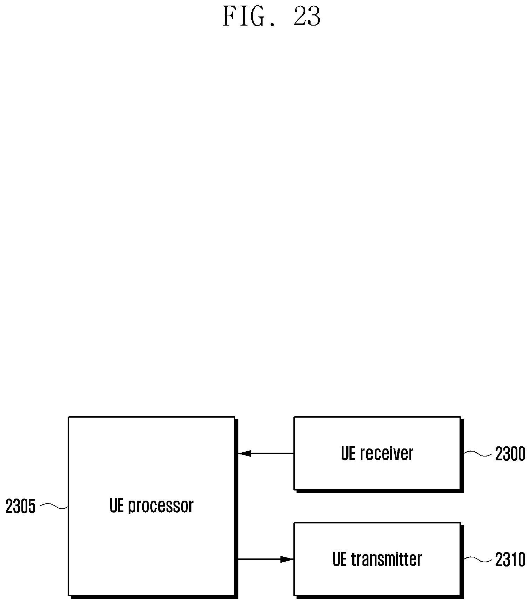

FIG. 23 illustrates the structure of a LTE in a wireless communication system according to an embodiment.

Referring to FIG. 23, the LTE may include a transceiver referring to a LTE receiver 2300 and a LTE transmitter 2310, a memory (not shown), and a UE processor 2305 (or a controller or processor). According to the communication method of the LTE as described above, the LTE transceiver 2300 and 2310, the memory, and the LTE processor 2305 may operate. However, the elements of the LTE are not limited to the above-described example. For example, the LTE may include more or fewer elements than the aforementioned elements. In addition, the transceiver, the memory, and the processor may be implemented in the form of a single chip.

The transceiver may transmit/receive a signal to/from a base station. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an embodiment of the transceiver, and elements of the transceiver are not limited to the RF transmitter and the RF receiver.

In addition, the transceiver may receive a signal through a wireless channel and output the received signal to the processor, and may transmit a signal output from the processor through the wireless channel.

The memory may store programs and data used for the operation of the LTE. In addition, the memory may store control information or data included in a signal transmitted and received by the LTE. The memory may include a storage medium such as a ROM, a RAM, a hard disk, a CD-ROM, and a DVD, or a combination of storage media. In addition, multiple memories may exist.

In addition, the processor may control a series of processes so that the LTE may operate according to the above-described embodiment. For example, the processor may control elements of the LTE so as to receive DCI configured by two layers and simultaneously receive multiple PDSCHs. Multiple processors may exist, and the processor may perform an operation of controlling the elements of the LTE by executing programs stored in the memory.

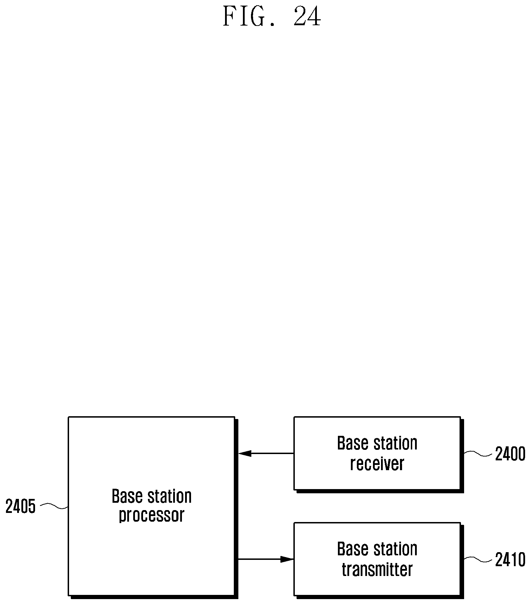

FIG. 24 illustrates the structure of a base station in a wireless communication system according to an embodiment.

Referring to FIG. 24, the base station may include a transceiver referring to a base station receiver 2400 and a base station transmitter 2410, a memory (not shown), and a base station processor 2405 (or a base station controller or processor). According to the communication method of the base station as described above, the base station transceiver 2400 and 2410, the memory, and the base station processor 2405 may operate. However, the elements of the base station are not limited to the above-described example. For example, the base station may include more or fewer elements than the aforementioned elements. In addition, the transceiver, the memory, and the processor may be implemented in the form of a single chip.

The transceiver may transmit/receive a signal to/from a LTE. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an embodiment of the transceiver, and elements of the transceiver are not limited to the RF transmitter and the RF receiver.

In addition, the transceiver may receive a signal through a wireless channel and output the signal to the processor, and may transmit the signal output from the processor through the wireless channel.

The memory may store programs and data used for the operation of the base station. In addition, the memory may store control information or data included in a signal transmitted and received by the base station. The memory may include a storage medium such as a ROM, a RAM, a hard disk, a CD-ROM, and a DVD, or a combination of storage media. In addition, multiple memories may exist.

The processor may control a series of processes so that the base station may operate according to the above-described embodiment. For example, the processor may control elements of the base station so as to configure DCI of two layers including allocation information regarding multiple PDSCHs and transmit the configured DCI. Multiple processors may exist, and the processor may perform an operation of controlling the elements of the base station by executing programs stored in the memory.

The methods according to embodiments described herein may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments, an element included in the present disclosure is expressed in the singular or the plural according to presented detailed embodiments. However, the singular form or plural form is selected appropriately to the presented situation for the convenience of description, and the present disclosure is not limited by elements expressed in the singular or the plural. Therefore, either an element expressed in the plural may also include a single element or an element expressed in the singular may also include multiple elements.

The embodiments described herein are merely specific examples that have been presented to easily explain the technical contents of the present disclosure and help understanding of the present disclosure, and are not intended to limit the scope of the present disclosure. That is, it will be apparent to those skilled in the art that other variants based on the technical idea of the present disclosure may be implemented. Further, the above respective embodiments may be employed in combination, as necessary. For example, one embodiment of the present disclosure may be partially combined with another embodiment to operate a base station and a terminal. As an example, embodiments 1 and 2 of the present disclosure may be partially combined to operate a base station and a terminal. Further, although the above embodiments have been described by way of the FDD LTE system, other variants based on the technical idea of the embodiments may be implemented in other systems such as TDD LTE and 5G or NR systems.

In the drawings in which methods of the present disclosure are described, the order of the description does not always correspond to the order in which steps of each method are performed, and the order relationship between the steps may be changed or the steps may be performed in parallel.

Alternatively, in the drawings in which methods of the present disclosure are described, some elements may be omitted and only some elements may be included therein without departing from the essential spirit and scope of the present disclosure.

Furthermore, in methods of the present disclosure, some or all of the contents of each embodiment may be implemented in combination without departing from the essential spirit and scope of the present disclosure.

Various embodiments of the present disclosure have been described. The above description of the present disclosure is merely for the purpose of illustration, and is not intended to limit embodiments of the present disclosure to the embodiments set forth herein. Those skilled in the art will appreciate that other specific modifications and changes may be easily made thereto without changing the technical idea or essential features of the present disclosure. The scope of the present disclosure should be determined not by the above description but by the appended claims, and all changes and modifications derived from the meaning and scope of the claims and equivalent concepts thereof shall be construed as falling within the scope of the present disclosure.

Although the present disclosure has been described with various embodiments, various changes and modifications may be suggested to one skilled in the art. It is intended that the present disclosure encompass such changes and modifications as fall within the scope of the appended claims.

**Claims**

1. A method performed by a user equipment, UE, the method comprising:

   receiving, from a base station via higher layer signaling, information for a physical downlink shared channel, PDSCH, time domain resource allocation, wherein at least one of a first repetition number or a second repetition number is conditionally present in the information, based on a first condition associated with a downlink control information, DCI, format 1_2 and a second condition associated with DCI formats 1_0 and 1_1;
   receiving, from the base station, a DCI format scheduling a PDSCH; and
   receiving, from the base station, the PDSCH based on the first repetition number or the second repetition number according to the DCI format,
   wherein the first condition associated with the DCI format 1_2 includes:

   the first repetition number is present in the information, based on the information being included in pdsch-TimeDomainAllocationListDCI-1-2,
   wherein the second condition associated with the DCI formats 1_0 and 1_1 includes:
   the second repetition number is present in the information, based on the information being included in at least one of pdsch-TimeDomainResourceAllocationList-r16 or pdsch-TimeDomainResourceAllocationList-r17.

2. The method of claim 1, wherein the first condition associated with the DCI format 1_2 further includes:
   the first repetition number is absent in the information, based on the information being included in other than the pdsch-TimeDomainAllocationListDCI-1-2.

3. The method of claim 1, wherein, the second condition associated with the DCI formats 1_0 and 1_1 further includes:
   the second repetition number is absent in the information, based on the information being included in pdsch-TimeDomainAllocationListDCI-1-2, pdsch-TimeDomainAllocationListForMultiPDSCH, or SIB20.

4. The method of claim 1, wherein the PDSCH is received based on the first repetition number, in case that the DCI format scheduling the PDSCH corresponds to the DCI format 1_2, and
   wherein the PDSCH is received based on the second repetition number, in case that the DCI format scheduling the PDSCH corresponds to the DCI format 1_0 or DCI format 1_1.

5. The method of claim 1, further comprising:
   transmitting, to the base station, capability information indicating support of the first repetition number in the information for DCI format 1_2.

6. A method performed by a base station, the method comprising:

   transmitting, to a user equipment, UE, via higher layer signaling, information for a physical downlink shared channel, PDSCH, time domain resource allocation, wherein at least one of a first repetition number or a second repetition number is conditionally present in the information, based on a first condition associated with a downlink control information, DCI, format 1_2 and a second condition associated with DCI formats 1_0 and 1_1;
   transmitting, to the UE, a DCI format scheduling a PDSCH; and
   transmitting, to the UE, the PDSCH based on the first repetition number or the second repetition number according to the DCI format,
   wherein the first condition associated with the DCI format 1_2 includes:

   the first repetition number is present in the information, based on the information being included in pdsch-TimeDomainAllocationListDCI-1-2,
   wherein the second condition associated with the DCI formats 1_0 and 1_1 includes:
   the second repetition number is present in the information, based on the information being included in at least one of pdsch-TimeDomainResourceAllocationList-r16 or pdsch-TimeDomainResourceAllocationList-r17.

7. The method of claim 6, wherein the first condition associated with the DCI format 1_2 further includes:
   the first repetition number is absent in the information, based on the information being included in other than the pdsch-TimeDomainAllocationListDCI-1-2.

8. The method of claim 6, wherein, the second condition associated with the DCI formats 1_0 and 1_1 further includes:
the second repetition number is absent in the information, based on the information being included in pdsch-Time-DomainAllocationListDCI-1-2, pdsch-TimeDomainAllocationListForMultiPDSCH, or SIB20.

9. The method of claim 6, wherein the PDSCH is transmitted based on the first repetition number, in case that the DCI format scheduling the PDSCH corresponds to the DCI format 1_2, and
wherein the PDSCH is transmitted based on the second repetition number, in case that the DCI format scheduling the PDSCH corresponds to the DCI format 1_0 or DCI format 1_1.

10. The method of claim 6, further comprising:
receiving, from the UE, capability information indicating support of the first repetition number in the information for DCI format 1_2.

11. A user equipment, UE, comprising:

a transceiver; and
at least one processor operably coupled to the transceiver, the at least one processor configured to:

receive, from a base station via higher layer signaling, information for a physical downlink shared channel, PDSCH, time domain resource allocation, wherein at least one of a first repetition number or a second repetition number is conditionally present in the information, based on a first condition associated with a downlink control information, DCI, format 1_2 and a second condition associated with DCI formats 1_0 and 1_1,
receive, from the base station, a DCI format scheduling a PDSCH, and
receive, from the base station, the PDSCH based on the first repetition number or the second repetition number according to the DCI format,

wherein the first condition associated with the DCI format 1_2 includes:

the first repetition number is present in the information, based on the information being included in pdsch-TimeDomainAllocationListDCI-1-2,
wherein the second condition associated with the DCI formats 1_0 and 1_1 includes:
the second repetition number is present in the information, based on the information being included in at least one of pdsch-TimeDomainResourceAllocationList-r16 or pdsch-TimeDomainResourceAllocationList-r17.

12. The UE of claim 11, wherein the first condition associated with the DCI format 1_2 further includes:

the first repetition number is absent in the information, based on the information being included in other than the pdsch-TimeDomainAllocationListDCI-1-2, and
wherein, the second condition associated with the DCI formats 1_0 and 1_1 further includes:
the second repetition number is absent in the information, based on the information being included in pdsch-TimeDomainAllocationListDCI-1-2, pdsch-TimeDomainAllocationListForMultiPDSCH, or SIB20.

13. The UE of claim 11, wherein the PDSCH is received based on the first repetition number, in case that the DCI format scheduling the PDSCH corresponds to the DCI format 1_2, and
wherein the PDSCH is received based on the second repetition number, in case that the DCI format scheduling the PDSCH corresponds to the DCI format 1_0 or DCI format 1_1.

14. The UE of claim 11, wherein the at least one processor is further comprising:
transmit, to the base station, capability information indicating support of the first repetition number in the information for DCI format 1_2.

15. A base station comprising:

a transceiver; and
at least one processor operably coupled to the transceiver, the at least one processor configured to:

transmit, to a user equipment, UE, via higher layer signaling, information for a physical downlink shared channel, PDSCH, time domain resource allocation, wherein at least one of a first repetition number or a second repetition number is conditionally present in the information, based on a first condition associated with a downlink control information, DCI, format 1_2 and a second condition associated with DCI formats 1_0 and 1_1,
transmit, to the UE, a DCI format scheduling a PDSCH, and
transmit, to the UE, the PDSCH based on the first repetition number or the second repetition number according to the DCI format,

wherein the first condition associated with the DCI format 1_2 includes:

the first repetition number is present in the information, based on the information being included in pdsch-TimeDomainAllocationListDCI-1-2,
wherein the second condition associated with the DCI formats 1_0 and 1_1 includes:
the second repetition number is present in the information, based on the information being included in at least one of pdsch-TimeDomainResourceAllocationList-r16 or pdsch-TimeDomainResourceAllocationList-r17.

# FIG. 1

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$K = 0$

$\bar{l} = 0$

$\bar{l} = 14 \cdot 2^{\mu} - 1$

Time

# FIG. 2

FIG. 3

BWP#1
(301)

BWP#2
(302)

Frequency

UE bandwidth (300)

# FIG. 4

duration (404)

Frequecy resources (403)

UE bandwidth part (410)

Slot (420)

Frequency

Time

Control resource set#1 (401)

Control resource set#2 (402)

FIG. 5A

1 SYMBOL (501)

1 PRB (502)

DMRS (505)

REG (503)

CCE (504)

# FIG. 5B

EP 4 366 221 A1

# FIG. 6

Receive PDCCH indicating new UL transmission or DL transmission (630)

Active time (605)

FIG. 7

TCI state #0
(700)

TCI state #1
(705)

TCI state #2
(710)

# FIG. 8

**RRC configured TCI states (800)**

| TCI #0 (805) | TCI #1 (810) | TCI #2 (815) | . . . | TCI #N (820) |

**A list of TCI states for a CORESET (825)**

| TCI #a (830) | TCI #b (835) | . . . | TCI #n (840) |

TCI indication via MAC CE (845)

# FIG. 9

| Serving Cell ID (915) | CORESET ID (920) | OCt 1 |
| CORE SET ID | TCI state ID (925) | OCt 2 |

EP 4 366 221 A1

# FIG. 10

# FIG. 11

Periodicity
(1105)

Rate matching
resource
(1102)

Frequency-domain
Allocation
(1104)

Time-domain
Allocation
(1103)

Frequency

Time

slot#0

slot#1

slot#2

PDSCH
(1101)

## FIG. 12

1200 BWP#1 (Active) on Cell#1

- CSS#1 ↔ CORESET#1 (Ref: CSI-RS#1/Cell#1/BWP#1 with QCL-TypeD) — 1215
- CSS#2
- USS#1

1205 BWP#1 (Active) on Cell#2

- CSS#1 ↔ CORESET#1 (Ref: CSI-RS#1/Cell#1/BWP#1 with QCL-TypeD) — 1220
- USS#2 ↔ CORESET#2 (Ref: CSI-RS#1/Cell#2/BWP#1 with QCL-TypeD) — 1225

PDCCH monitoring occasion — 1210

1230 Active BWP on Cell#1

- USS#1 ↔ CORESET#1 (Ref: CSI-RS#1/Cell#1/BWP#1 with QCL-TypeD) — 1245
- USS#2 ↔ CORESET#2 (Ref: CSI-RS#1/Cell#1/BWP#1 with QCL-TypeD) — 1250
- USS#3

1235 Active BWP on Cell#2

- USS#1 ↔ CORESET#1 (Ref: CSI-RS#1/Cell#2/BWP#1 with QCL-TypeD) — 1255
- USS#2
- USS#3 ↔ CORESET#2 (Ref: CSI-RS#2/Cell#2/BWP#1 with QCL-TypeD) — 1260

PDCCH monitoring occasion — 1240

EP 4 366 221 A1

# FIG. 13

RA type 0
[13-00]

13-15

| Bitmap |
|---|

RA type 1
[13-05]

13-20                              13-25

| Starting VRB | Length |
|---|---|

Both RA
type 0 & 1
[13-10]

13-30                              13-35

| 1 bit for RA type indication | Max{payload for RA type 0, payload for RA type 1} |
|---|---|

EP 4 366 221 A1

# FIG. 14

S
(14-00)

L (14-05)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \quad (14\text{-}10)$$

FIG. 15

EP 4 366 221 A1

# FIG. 16A

RRC configured TCI states

16-00 | TCI #0 | TCI #1 | TCI #2 | TCI #3 | ··· | TCI #M-1 |

Candidate of TCI states for PDSCH

16-20 | TCI #0' | TCI #1' | TCI #2' | ··· | TCI #K-1 |

MAC CE based beam indication

TCI state for PDSCH

TCI #I

DCI based beam selection

FIG. 16B

MAC-CE structure

| CORESET Pool ID | Serving Cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

. . .

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |

16-55

16-50

# FIG. 17

Actual repetition (1703)

Slot

| D | D | D | S | U | D | D | S | U | U | D | D | D | S | U | D | D | S | U | U |

Nominal repetition (1701): 1 2 3 4 5 6 7 8 9 10 11 12 13 14 15 16

Invalid symbol pattern (1702): 0 0 0 0 0 1 1 1 1 1 1 1 1 1 1 1 1 1 1

Frequency

Time

# FIG. 18

Single cell LTE/NR (S00)

**gNB**

SDAP (S25)

↓

PDCP (S30)

↓

RLC (S35)

↓

MAC (S40)

↓

PHY (S45)

**UE**

PHY (S50)

↓

MAC (S55)

↓

RLC (S60)

↓

PDCP (S65)

↓

SDAP (S70)

---

Carrier aggregation (S10)

**gNB**

SDAP

↓

PDCP

↓

RLC

↓

MAC

↓          ↓

PHY  ...  PHY

**UE**

PHY  ...  PHY

↓          ↓

MAC

↓

RLC

↓

PDCP

↓

SDAP

---

Dual connectivity (S20)

**MgNB**

SDAP

↓

PDCP ─────────────┐

↓                 │

RLC               │

↓                 │

MAC               │

↓                 │

PHY               │

**SgNB**

RLC

↓

MAC

↓

PHY

**UE**

PHY               PHY

↓                 ↓

MAC               MAC

↓                 ↓

RLC               RLC

↓                 │

PDCP ◄────────────┘

↓

SDAP

EP 4 366 221 A1

FIG. 19

EP 4 366 221 A1

FIG. 20

# FIG. 21

| | | |
|---|---|---|
| R | Serving Cell ID | BWP ID |

Oct 1

| | |
|---|---|
| $C_0$ | TCI state ID $_{0,1}$ |

Oct 2

| | |
|---|---|
| R | TCI state ID $_{0,2}$ |

Oct 3 (Optional)

. . .

| | |
|---|---|
| $C_N$ | TCI state ID $_{N,1}$ |

Oct M-1

| | |
|---|---|
| R | TCI state ID $_{N,2}$ |

Oct M (Optional)

# FIG. 22A

```
              ┌─────────────┐
              │    START    │
              └──────┬──────┘
                     │
                     ▼
       ┌──────────────────────────────┐
       │     Transmit UE capability    │ ～2201
       └──────────────┬───────────────┘
                      │
                      ▼
       ┌──────────────────────────────┐
       │  Receive higher layer signaling │ ～2202
       └──────────────┬───────────────┘
                      │
                      ▼
       ┌──────────────────────────────┐
       │ Receive scheduling information for downlink │ ～2203
       │  data channel repetitive transmission │
       └──────────────┬───────────────┘
                      │
                      ▼
       ┌──────────────────────────────┐
       │   Receive downlink data channel │ ～2204
       │      repetitive transmission   │
       └──────────────┬───────────────┘
                      │
                      ▼
              ┌─────────────┐
              │     END     │
              └─────────────┘
```

# FIG. 22B

```
                    ┌─────────────┐
                    │    START    │
                    └─────────────┘
                           │
                           ▼
        ┌──────────────────────────────────────┐
        │         Receive UE capability        │──── 2251
        └──────────────────────────────────────┘
                           │
                           ▼
        ┌──────────────────────────────────────┐
        │       Transmit higher layer signaling│──── 2252
        └──────────────────────────────────────┘
                           │
                           ▼
        ┌──────────────────────────────────────┐
        │  Transmit scheduling information for  │
        │      downlink data channel repetitive │──── 2253
        │              transmission             │
        └──────────────────────────────────────┘
                           │
                           ▼
        ┌──────────────────────────────────────┐
        │       Perform downlink data channel   │
        │          repetitive transmission      │──── 2254
        └──────────────────────────────────────┘
                           │
                           ▼
                    ┌─────────────┐
                    │     END     │
                    └─────────────┘
```

# FIG. 23

2305 — UE processor

UE receiver — 2300

UE transmitter — 2310

FIG. 24

2405 — Base station processor

Base station receiver ~ 2400

Base station transmitter ~ 2410

Europäisches
Patentamt

European
Patent Office

Office européen
des brevets

# EUROPEAN SEARCH REPORT

Application Number

EP 23 20 7735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI ET AL: "[38.331][H244] TP for PDSCH-TimeDomainResourceAllocationList", 3GPP DRAFT; R2-2005261, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic; 20200601 – 20200612 27 May 2020 (2020-05-27), XP051891785, Retrieved from the Internet: URL:https://ftp.3gpp.org/tsg_ran/WG2_RL2/TSGR2_110-e/Docs/R2-2005261.zip R2-2005261.docx [retrieved on 2020-05-27] * page 1, paragraph 2 * * page 7 * * page 11 * ----- | 1-15 | INV. H04L5/00 H04L1/08 H04L1/1829 |
| A | WO 2022/086262 A1 (LG ELECTRONICS INC [KR]) 28 April 2022 (2022-04-28) * paragraph [0171] – paragraph [0173] * * paragraph [0226] – paragraph [0227] * * paragraph [0261] – paragraph [0265] * ----- | 1-15 | TECHNICAL FIELDS SEARCHED (IPC) H04L |
| A | US 2021/136802 A1 (CIRIK ALI [US] ET AL) 6 May 2021 (2021-05-06) * paragraph [0218] – paragraph [0221] * * paragraph [0291] – paragraph [0294] * ----- | 1-15 | |

The present search report has been drawn up for all claims

| Place of search | Date of completion of the search | Examiner |
|---|---|---|
| The Hague | 15 March 2024 | Amadei, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 7735

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2024

| Patent document cited in search report | | Publication date | Patent family member(s) | | Publication date |
|---|---|---|---|---|---|
| WO 2022086262 | A1 | 28-04-2022 | NONE | | |
| US 2021136802 | A1 | 06-05-2021 | CA | 3098280 A1 | 05-05-2021 |
| | | | EP | 3820052 A1 | 12-05-2021 |
| | | | US | 2021136802 A1 | 06-05-2021 |

EPO FORM P0459

For more details about this annex : see Official Journal of the European Patent Office, No. 12/82